# EUROPEAN PATENT APPLICATION

(11) **EP 1 480 324 A2**
(43) Date of publication of application: **24.11.2004**
(21) Application number: 04012114.7
(22) Date of filing: 21.05.2004
(51) Int. Cl.: H02P 5/00

(54) **Apparatus for controlling motors**

(30) Priority: 23.05.2003 JP 2003146676; 26.05.2003 JP 2003147133; 30.05.2003 JP 2003155213
(71) Applicant: Calsonic Kansei Corporation, Tokyo 164-8602 (JP)
(72) Inventor: Sunaga, Hideki, Nakano-ku Tokyo 164-8602 (JP); Araki, Futoshi, Nakano-ku Tokyo 164-8602 (JP); Tanaka, Kaoru, Nakano-ku Tokyo 164-8602 (JP)
(74) Representative: Grünecker, Kinkeldey, Stockmair & Schwanhäusser Anwaltssozietät

(57) **Abstract**

An apparatus for controlling motor to drive an electric motor type actuator (30A) having an electric motor (30), including a serial data communication portion (53 and 55); a reception-processing portion (61) for receiving information which is addressed to its own address and supplied from a host device (100) via the serial data communication portion (53 and 55); and means for changing electric power supplied to motor (56, 67 and 73) for changing electric power supplied to the electric motor (30) based on information for designating motor-operating condition included in the received information.

## Description

### BACKGROUND OF THE INVENTION

### Field of the Invention

The present invention relates to an apparatus for controlling motor having a serial data communication function.
The entire disclosure of Japanese application Nos. 2003-146676, 2003-147133 and 2003-155213 are hereby incorporated by reference.

### Description of the Related Art

Conventionally, there has been known an air conditioning system for an automobile provided with a plurality of actuators which are of the same kind to each other including motors for driving doors with respect to the various kinds of doors arranged in an air conditioning unit for the automobile, a position detecting portion for outputting present positions of the doors as voltage, and a controlling portion for controlling the motors on the basis of given target-position data and the output from the position detecting portion. According to the air conditioning system for the automobile as described above, it is configured to integrally control the plurality of same-kind actuators with controlling means by utilizing serial communication, and the controlling means also carries out the serial communication with a driving circuit for driving a blower fan-motor provided in the air conditioning unit. In addition, the driving circuit has a controlling portion for controlling voltage applied to the blower fan-motor when a target value for controlling an amount of air is given by the controlling means, such that the voltage actually applied to the blower fan-motor coincides with the target value given by the controlling means (for example, see JP-A H11-48741, claims and FIG. 2 thereof).

Also, there has been known a multiplex communication device in which a first communication controlling means and a second communication controlling means provided with a motor are connected with each other by a communication line. In such a multiplex communication device, the first communication controlling means outputs control data including a target position of the motor to the communication line as a pulse signal based on a predetermined sending format. The second communication controlling means is provided with receiving means for receiving the pulse signal from the communication line, a decoder for obtaining the target position by decoding the received signal obtained by the receiving means, pulse extracting means for extracting a predetermined pulse within the received signal obtained by the receiving means, position detecting means for outputting a present position of the motor, and motor controlling means for controlling the motor such that the present position of the motor coincides with the target position, and the motor controlling means is adapted to control the motor by duty-control with the pulse extracted by the pulse extracting means. In addition, the first communication controlling means is configured to control a duty ratio by changing a width of the predetermined pulse in the sending format (see JP-A H8-186881, claims and FIG. 1 thereof).

Moreover, there has been known a bridge-type driving circuit for supplying a current to an inductance-load such as a motor by PWM driving, which structures a first upper arm of a H-type bridge circuit thereof with two active elements in parallel in which one has large performance to supply the current and the other has small performance to supply the current, structures a first lower arm with an active element having the large current-supplying performance, structures a second upper arm with two active elements in parallel in which one has the large current-supplying performance and the other has the small current-supplying performance, and structures a second lower arm with an active element having the large current-supplying performance. This bridge-type driving circuit is in such a configuration in which the active elements structuring the upper arm are turned to "OFF" state when a load-current has reached over a target value, and a mode is switched over to a circulating-current mode in which the current is flowed from the active element which structures one of the lower arm, the inductance-load and to the active element which structures the other lower arm (for example, see Japanese Patent No. 3199722).

Furthermore, there has been known a controlling device for an automatic door device in which a controlling signal which a controlling portion gives to a motor driving portion is a PWM signal, and the motor driving portion is structured to generate driving force and braking force alternately according to the PWM signal. In such a controlling device for the automatic door device, a H-type bridge circuit is used to drive a motor with PWM control, and a current of back-electromotive force generated in a motor coil is made to circulate from a FET structuring one of a lower arm, a diode connected to a FET structuring the other lower arm in anti-parallel, and to the motor, by controlling the FET structuring a first lower arm and the FET structuring a second lower arm to be both in a conducting state during a period of "L" level of the PWM signal. Thereby, the motor is braked by dynamic braking (see JP-A H9-291753, claims and FIG. 2 and FIG. 3 thereof).

In addition, there has been proposed a motor driving circuit, which is a circuit for driving a motor with PWM control by using a H-type bridge circuit, and a rotation control, in which deceleration effect for rotation of the motor is performed in tandem with rotational driving of the motor corresponding to the rotational driving of the motor, is carried out repeatedly within a PWM cycle. Accordingly, this motor driving circuit is configured to be capable of maintaining stabled rotational speed and to be in fine deceleration-tracking performance by a duty ratio of a PWM controlling signal. In such a motor driving circuit, respective switching means (MOS transistors) structuring a first upper arm and a second upper arm of the H-type bridge circuit are controlled to be both in a conducting state at the period when electric power is not supplied to the motor within one cycle of the PWM control, thereby a regeneration brake is operated in which both ends of a motor coil are shunted (for example, see JP-A H11-27979, claims and FIG. 1 and FIG. 2 thereof).

A motor driving circuit in a PWM control type for carrying out rotational control of a motor having first and second motor input-terminals has been also known. In a motor-operating period of such a motor driving circuit defined by a plurality of PWM cycles, a operating period for rotational driving for rotating and driving the motor and a period for regeneration brake to brake the motor are alternately provided within the respective PWM cycles, and a controlling circuit is included which flows a motor driving current to the motor in the operating period for rotational driving and generates a regeneration current in the period for regeneration brake by shunting each of the input-terminals of the motor. In addition, the controlling circuit adjusts duty ratios in the operating period for rotational driving and in the period for regeneration brake within the PWM cycles, thereby the motor driving circuit is adapted to adjust rotational speed of the motor (for example, see JP-A 2000-32792, claims and FIG. 1 and FIG. 2 thereof).

Meanwhile, in an air conditioning device for an automobile (car-air conditioner) or the like, actuators in an electric motor type are provided corresponding to various kinds of doors (for example, an intake door, an air-mix door, a mode door, etc), respectively. However, torque or the like required to drive the door to be opened or closed differs depending on kinds of doors. Accordingly, the motor (direct current motor) having an output capable of driving the door in which load is heavy is used.

In this connection, it can be thought to attain miniaturization and economization of the electric motor type actuator by using a small-sized motor which rated output is low, for the light-load door. However, there are many small sized motors which rated number of rotations is large, and a frequency of an operating sound of the motor (noise) is thus high. Furthermore, there are some motors in the small-sized motors in which not only the frequency of the operating sound thereof is high due to the large number of rotations, but also a level of the operating sound (noise level) is large.

Accordingly, there is a case in which the frequency of the noise at the time when the actuator operates differs depending on a difference in the motor used. If the frequency of the noise is changed or two types of noises having different frequencies are generated simultaneously depending on an operational state of the plurality of actuators, there is a fear that it gives unpleasant feeling to a user etc.

Given this factor, it can be considered that a voltage restricting circuit or the like for lowering voltage supplied to the motor (or an electric power supplied thereto) is provided in the electric motor type actuator which employs the small-sized motor to reduce the number of rotations of the motor by lowering the voltage supplied to the motor (or the electric power supplied thereto), thereby to reduce the frequency of the noise generated at the time when the motor operates. However, addition of the voltage restricting circuit or the like to the actuator leads to rise in cost as well as a space for mounting it in the actuator becomes necessary. Accordingly, the electric motor type actuator cannot be as miniaturized as expected.

As stated above, the motor having the output capable of driving the heavy load door is used in a conventional structure in which the single type-electric motor type actuators are respectively provided with respect to the various kinds of doors. Therefore, there is a case where more electric power is applied to the motor than is necessary when driving the door which is light in load to be opened or closed. When driving the light load door with the actuator having a motor which the output is relatively large, there is a case in which electric power consumption can be reduced by lowering the electric power to be supplied to the motor.

In addition, for example, in an apparatus for controlling motor which is in an electric motor type actuator for driving various kinds of doors disposed within an air conditioning unit for an automobile to be opened and closed, there has been an attempt to carry out deceleration of a motor by reducing a duty ratio of PWM driving to stop an object to be controlled such as a degree of opening of the door at a target position and to reduce a noise generated when the motor stops. However, it is difficult to satisfy various kinds of conditions and demands such as difference in largeness of a load (torque necessary for driving the door to be opened and closed etc.) depending on a kind of door (for example, intake door, air-mix door, mode door etc.), a fact that an amount of movement or a stopping position of the object to be controlled is not constant, or to obtain sufficient stopping accuracy with fulfilling a response (time taking for the object to be controlled to reach the target position), and to reduce the noise generated at stopping of the motor.

In this connection, it can be considered to satisfy the above-mentioned various kinds of conditions and demands by employing such a type in which a rotational driving-operating period for rotating and driving the motor and a regeneration brake period to brake the motor are alternately provided in a PWM cycle, and duty ratios in the rotational driving-operating period and in the regeneration brake period within the PWM cycle are adjusted to adjust rotational speed of the motor. However, to realize an apparatus for controlling motor employing such a type or an exclusive IC used exclusively for the apparatus for controlling motor economically, it is desirable to miniaturize size of hardware or software for deceleration-control as much as possible.

Moreover, as described in JP-A H11-48741, it is possible to continuously control the voltage applied to the blower fan-motor by utilizing a custom IC suitable for driving the electric motor type actuator. However, when such circuitry is employed in which MOSFET is connected in series with the blower fan-motor and the MOSFET is activated in its active regions to continuously control the voltage applied to the blower fan-motor, unnecessary power consumption is generated in the MOSFET.

Given this factor, it can be thought to control the rotational speed of the motor by controlling the electric power supplied to the motor by the PWM control. In this case, a duty ratio of the PWM control is designated by a host device such as controlling means with respect to the actuator driving circuit or the blower fan driving circuit. However, in a conventional type in which the duty ratio is controlled by changing a pulse width of the predetermined pulse signal in the sending format as described in JP-A H8-186881, there is a case where a range in which the duty ratio can be designated is narrow, or the duty ratio cannot be accurately designated.

### SUMMARY OF THE INVENTION

The present invention has been made to solve the above-mentioned problems. Therefore, it is an object of the present invention to provide an apparatus for controlling motor capable of selectively designating electric power supplied to a motor from outside.
It is another object of the present invention to provide an apparatus for controlling motor capable of improving stopping accuracy by using brake control in conjunction with deceleration carried out by PWM duty control and reducing a noise generated when a motor stops.
It is yet another object of the present invention to provide an apparatus for controlling motor configured to be capable of controlling electric power supplied to a motor by PWM control on the basis of duty-designating information supplied from a host device or the like by serial data communication.
It is still another object of the present invention to provide an apparatus for controlling motor configured to be capable of controlling rotational speed of the motor on the basis of motor rotational speed-designating information supplied from the host device or the like by the serial data communication.
It is still another object of the present invention to provide an apparatus for controlling motor which can be suitably used for a use in driving of an actuator in an electric motor type as well as for a use in driving of a fan-motor or the like.

To solve the above-mentioned problems, an apparatus for controlling motor according to the present invention is an apparatus for controlling motor to drive an electric motor type actuator having an electric motor, comprising a serial data communication portion; a reception-processing portion for receiving information which is addressed to its own address and supplied from a host device via the serial data communication portion; and means for changing electric power supplied to motor for changing electric power supplied to the electric motor based on information for designating motor-operating condition included in the received information.

It is desirable that the means for changing electric power supplied to motor changes the electric power supplied to the electric motor by PWM control. In this case, it may be configured that the means for changing electric power supplied to motor includes a correspondence table between information for designating motor-operating condition and a duty ratio, and limits the electric power supplied to the electric motor by setting the duty ratio corresponding to the information for designating motor-operating condition as an upper limit of the electric power supplied to the electric motor.

The apparatus for controlling motor according to the present invention is capable of changing the electric power supplied to the electric motor of the electric motor type actuator (hereinafter, referred to as motor). The change of the electric power supplied to the motor is carried out by supplying the information for designating motor-operating condition to the apparatus for controlling motor by serial data communication.

In a case where the apparatus for controlling motor according to the present invention is used for driving and controlling of an electric motor type actuator provided with a small-sized motor, a maximum value of the duty ratio in the PWM control is set to be, for example, 70 percent, and the upper limit of the electric power supplied to the motor is limited at 70 percent of rated electric power. Thereby, it is possible to reduce number of rotation of the small-sized motor and to lower a frequency of a noise generated with operation of the motor. Accordingly, it is possible to allow the frequency of the noise which the electric motor type actuator employing the small sized motor generates to substantially coincide with the frequency of the noise which other electric motor type actuator generates. As a result, it is possible to solve the problem of giving bad influence on auditory feeling or giving unpleasant feeling to a user by the difference in the frequency of the noise.

When a load driven by the electric motor type actuator is light, it is possible to attain power saving by reducing the electric power supplied to the motor. Also, by reducing the electric power supplied to the motor, it is possible to lower a level of the noise which the electric motor type actuator generates.

Also, an apparatus for controlling motor according to the present invention comprises a serial data communication portion; a reception-processing portion for receiving information which is addressed to its own address and supplied from a host device via the serial data communication portion; an A/D converting portion for converting voltage corresponding to a present position of an object to be controlled supplied from a position detecting portion into present position data having n-bit; an electric motor type actuator; and an actuator driving controlling portion for driving the electric motor type actuator based on a deviation between data on a target value having n-bit included in the received information and the present position data having the n-bit such that the position of the object to be controlled becomes a position of the target value, wherein the actuator driving controlling portion is provided with means for controlling deceleration which, when the deviation between the target value data having the n-bit and the present position data having the n-bit becomes less than a previously set judgment value of starting of deceleration control, drives the electric motor type actuator by PWM control with a duty ratio previously set corresponding to the deviation, and rotates and drives the electric motor type actuator in an ON-duty period within a PWM cycle, and applies a regeneration brake to the electric motor type actuator in an OFF-duty period within the PWM cycle.

Because the apparatus for controlling motor according to the present invention carries out driving and braking of the electric motor alternately within the PWM cycle at the time of the deceleration, it is possible to decelerate the motor sufficiently by the time the object to be controlled reaches the target value of stopping, thus it is possible to stop the object to be controlled at the target position in high accuracy. Also, since the deceleration is carried out sufficiently, it is possible to reduce the noise generated at the time of stopping of the motor. In addition, because it is configured that a point of starting of deceleration control is judged based on the deviation between the target value-data and the present value data, it is not necessary to add new hardware or software for the judgment of starting of deceleration control.

By previously setting the duty ratio to become smaller as the deviation becomes smaller, a period for braking becomes longer as the object to be controlled reaches the target value and thereby sufficient deceleration is carried out. Therefore, it is possible to improve the accuracy in stopping of the object to be controlled and reduce the noise generated when the motor stops.

Also, setting of the duty ratio becomes easy if the duty ratio which is previously set corresponding to the deviation is stored in a nonvolatile memory as a correspondence table of deviation - (to) duty ratio, previously.

Meanwhile, it is possible to carry out updating of data by employing an electrically rewritable memory to the nonvolatile memory and supplying correspondence data of deviation to duty ratio through a data communication portion to the nonvolatile memory. This makes it possible to set suitable correspondence of deviation to duty ratio with respect to each of the object to be controlled even in a case in which the objects to be controlled are different from each other such as the difference in kind of door or the like.

Furthermore, it is configured that the actuator driving controlling portion applies a regeneration brake to the electric motor type actuator in an OFF-duty period within a PWM cycle when information on request for brake-control is supplied via a reception-processing portion, thereby it is possible to perform setting of whether or not to carry out brake-control with data communication.

Also, an apparatus for controlling motor according to the present invention comprises a reception-processing portion for receiving information which is addressed to its own address and supplied from a host device via a serial data communication portion; and an H-bridge driving processing portion for generating a PWM signal having a duty ratio designated by duty-designating information included in the information received by the reception-processing portion to drive each switching element structuring an H-bridge circuit portion.

The apparatus for controlling motor according to the present invention generates the PWM signal having the duty ratio which is designated on the basis of the duty-designating information supplied from the host device to drive each of the switching elements structuring the H-bridge circuit portion. Therefore, it is possible to control the electric power supplied to the motor through the H-bridge circuit portion by PWM control. Accordingly, it is possible to control rotational speed of the motor on the basis of the duty-designating information.

Accordingly, in a case where the apparatus for controlling motor according to the present invention is used for driving and controlling of an electric motor type actuator provided with a small-sized motor, the duty ratio in the PWM control is, for example, set at 90 percent and electric power supplied to the motor is reduced at approximately 10 percent lower than rated electric power, thereby it is possible to lower number of rotation of the small-sized motor and thus to reduce the frequency of the noise generated with the rotation of the motor. Accordingly, it is possible to allow the frequency of the noise which the electric motor type actuator employing the small sized motor generates to substantially coincide with the frequency of the noise which other electric motor type actuator generates. As a result, it is possible to solve the problem of giving bad influence on auditory feeling or giving unpleasant feeling to a user by the difference in the frequency of the noise.

Also, when a load driven by the electric motor type actuator is light, it is possible to attain power saving by reducing the electric power supplied to the motor. Furthermore, by reducing the electric power supplied to the motor, it is possible to lower the level of the noise which the electric motor type actuator generates.

In addition, an apparatus for controlling motor according to the present invention comprises a reception-processing portion for receiving information which is addressed to its own address and supplied from a host device via a serial data communication portion, and an H-bridge driving processing portion for setting a duty ratio based on motor rotational speed-designating information which is at least one bit included in the information received by the reception-processing portion, and generating a PWM signal having the set duty ratio to drive each switching element structuring an H-bridge circuit portion.

Since the apparatus for controlling motor according to the present invention sets the duty ratio based on the motor rotational speed-designating information which is at least one bit supplied from the host device, it is possible to switch over the electric power supplied to the motor in at least 2 steps and thereby to change rotational speed of the motor in at least 2 steps. Based on the 1 bit motor rotational speed-designating information, it is possible to switch over 2 kinds of duty ratios which are, for example, 100% and approximately 82%. Also, based on the 2-bit motor rotational speed-designating information, it is possible to switch over 4 kinds of duty ratios (for example, 100%, approximately 94%, approximately 88% and approximately 82%), selectively. Furthermore, it is possible to selectively switch over 8 kinds of duty ratios based on the 3-bit motor rotational speed-designating information. Therefore, it is possible to switch over the rotational speed of the motor in multiple steps.

Also, an apparatus for controlling motor according to the present invention comprises a reception-processing portion for receiving information which is addressed to its own address and supplied from a host device via a serial data communication portion, and an H-bridge driving processing portion for increasing or decreasing a duty ratio by only a value previously set based on a request for increasing electric power to be supplied to motor or a request for decreasing electric power to be supplied to motor included in the information received by the reception-processing portion to set a new duty ratio, and for generating a PWM signal having the set duty ratio to drive each switching element structuring an H-bridge circuit portion.

The apparatus for controlling motor according to the present invention is capable of increasing or decreasing the duty ratio by only the value previously set based on the request for increasing electric power to be supplied to motor or the request for decreasing electric power to be supplied to motor supplied from the host device to set the new duty ratio, and of controlling the electric power supplied to the motor by the PWM control with the set duty ratio. For example, when variation-width of the duty ratio is, for example, set at 2.5%, it is possible to increase or decrease the duty ratio by a unit of 2.5%. Therefore, the host device sends the request for increasing electric power to be supplied to motor for a plurality of times at suitable time intervals, thereby it is possible to increase the duty ratio stepwise, for example, at 75% to 77.5% to 80%. Also, it is possible to reduce the duty ratio stepwise by sending the request for decreasing electric power to be supplied to motor for a plurality of times. Thereby, it is possible to change the rotational speed of the motor stepwise.

Also, an apparatus for controlling motor according to the present invention comprises a reception-processing portion for receiving information which is addressed to its own address and supplied from a host device via a serial data communication portion, and an H-bridge driving processing portion for comparing motor rotational speed-designating information included in the information received by the reception-processing portion with a motor rotational speed signal supplied from a motor rotational speed-detecting portion to set a duty ratio of a PWM signal, and for generating a PWM signal having the set duty ratio to drive each switching element structuring an H-bridge circuit portion.

The apparatus for controlling motor according to the present invention is capable of controlling the actual rotational speed of motor with feedback control such that the actual rotational speed of motor becomes the rotational speed of motor designated by the host device.

Also, an apparatus for controlling motor according to the present invention comprises a reception-processing portion for receiving information which is addressed to its own address and supplied from a host device via a serial data communication portion, and an H-bridge driving processing portion for comparing information for designating target position of object to be controlled included in the information received by the reception-processing portion with information on present position of object to be controlled supplied from a position detecting portion of object to be controlled, to drive each switching element structuring an H-bridge circuit portion based on a result of the comparison, when an actuator position-control mode is designated on the basis of information on designating control mode included in the information received by the reception-processing portion, and for driving each of the switching elements structuring the H-bridge circuit portion based on information on designation relating to rotational speed of motor included in the information received by the reception-processing portion, when a motor-rotational speed control mode is designated on the basis of the information on designating control mode included in the information received by the reception-processing portion.

The apparatus for controlling motor according to the present invention is capable of controlling a rotational direction of the motor and activation and stopping of the motor such that a position of the object to be controlled driven by the electric motor type actuator is located at a target position, when the actuator position-control mode is designated by the host device. In addition, the apparatus for controlling motor according to the present invention is capable of controlling the rotational speed of the motor when the motor-rotational speed control mode is designated by the host device. Therefore, the apparatus for controlling motor according to the present invention can be used for the use in, for example, driving of various door actuators provided in an air conditioning device for an automobile as well as for the use in driving of a fan-motor. Because one apparatus for controlling motor can be used for controlling both the actuator position control mode and the motor-rotational speed control mode, mutually, it is possible to standardize processing of communication control in, for example, the air conditioning device for the automobile. In addition, in a case where the apparatus for controlling motor is structured by an exclusively-used IC (custom IC), it is possible to obtain economic advantage (cost reduction) associated with increase in quantity of the exclusively-used IC.

### BRIEF DESCRIPTION OF THE DRAWINGS

FIG. 1 is an explanatory diagram showing a structure of a body of an air conditioning device for an automobile applied with an apparatus for controlling motor according to a first embodiment of the present invention.
FIG. 2 is a diagram showing one concrete example of an electric motor type actuator driven by the apparatus for controlling motor according to the first embodiment of the present invention.
FIG. 3 is a diagram showing a structure of a system of the air conditioning device for the automobile applied with the apparatus for controlling motor according to the first embodiment of the present invention.
FIG. 4 is a block diagram showing a structure of circuitry of the system of the air conditioning device for the automobile applied with the apparatus for controlling motor according to the first embodiment of the present invention.
FIG. 5 is a diagram showing a data structure within 1 frame of a LIN communication standard according to the first embodiment of the present invention.
FIGS. 6A to 6F are diagrams showing data structures in respective fields within the 1 frame of the LIN communication standard.
FIG. 7 is a block diagram showing the apparatus for controlling motor according to the first embodiment of the present invention.
FIG. 8 is a diagram showing one create example of a logic-circuit portion of the apparatus for controlling motor according to the first embodiment of the present invention.
FIG. 9 is a diagram showing an example of switching electric power supplied to a motor in 16 steps by PWM control according to the first embodiment of the present invention.
FIG. 10 is a diagram showing one example of a PWM-data map for a soft start at the time of activation of the motor according to the first embodiment of the present invention.
FIG. 11 is a diagram showing one example of a PWM-data map for a soft stop according to the first embodiment of the present invention.
FIGS. 12A and 12B are graphs showing change-characteristic of a duty ratio from activation of the motor to stopping of the motor when a soft start/soft stop control is carried out according to the first embodiment of the present invention.
FIG. 13 is a graph showing a measurement result of a noise level when the electric motor type actuator is driven by the apparatus for controlling motor according to the first embodiment of the present invention.
FIG. 14 is a diagram showing one create example of a logic-circuit portion of an apparatus for controlling motor according to the second embodiment of the present invention.
FIG. 15 is a diagram showing an example of switching electric power supplied to a motor in 16 steps by PWM control according to the second embodiment of the present invention.
FIG. 16 is a diagram showing one example of a PWM-data map for a soft start at the time of activation of the motor according to the second embodiment of the present invention.
FIG. 17 is a diagram showing one example of a PWM-data map for a soft stop according to the second embodiment of the present invention.
FIGS. 18A and 18B are graphs showing change-characteristic of a duty ratio from activation of the motor to stopping of the motor when a soft start/soft stop control is carried out according to the second embodiment of the present invention.
FIG. 19 is a diagram showing a structure of an H-bridge circuit portion according to the second embodiment of the present invention.
FIGS. 20A-20E are diagrams showing an operation of the apparatus for controlling motor according to the second embodiment of the present invention during deceleration (soft stop).
FIG. 21 is a graph showing a measurement result of a noise level when the electric motor type actuator is driven by the apparatus for controlling motor according to the second embodiment of the present invention.
FIG. 22 is a diagram schematically showing an entire structure of an air conditioning device for an automobile (car-air conditioner) applied with an apparatus for controlling motor according to a third embodiment of the present invention.
FIG. 23 is a diagram showing a structure of a communication system in the air conditioning device for the automobile (car-air conditioner) applied with the apparatus for controlling motor according to the third embodiment of the present invention.
FIG. 24 is a diagram showing a data structure within 1 frame of a LIN communication standard according to the third embodiment of the present invention.
FIGS. 25A to 25F are diagrams showing data structures in respective fields within the 1 frame of the LIN communication standard according to the third embodiment of the present invention.
FIGS. 26A and 26B are diagrams showing one example of content of a data 1 field in a receiving-operation mode according to the third embodiment of the present invention.
FIG. 27 is a diagram showing one example of content of a data 2 field in the receiving-operation mode according to the third embodiment of the present invention.
FIGS. 28A-28C are diagrams showing one example of content of the data 1 field in a sending-operation mode according to the third embodiment of the present invention.
FIG. 29 is a diagram showing one example of content of the data 2 field in the sending-operation mode according to the third embodiment of the present invention.
FIG. 30 is a block diagram showing a structure of a door actuator unit having the apparatus for controlling motor according to the present invention according to the third embodiment of the present invention.
FIG. 31 is a diagram showing one create example of a logic-circuit portion included in a motor controlling IC which structures a motor controlling circuit according to the third embodiment of the present invention.
FIG. 32 is a diagram showing an example of switching electric power supplied to an electric motor in 16 steps by PWM control according to the third embodiment of the present invention.
FIG. 33 is a diagram showing one example of a PWM-data map for a soft start at the time of activation of the motor according to the third embodiment of the present invention.
FIG. 34 is a diagram showing one example of a PWM-data map for a soft stop according to the third embodiment of the present invention.
FIGS. 35A and 35B are graphs showing change-characteristic of a duty ratio from activation of the motor to stopping of the motor when a soft start/soft stop control is carried out according to the third embodiment of the present invention.
FIG. 36 is a graph showing a measurement result of a noise level when the electric motor type actuator is driven by the apparatus for controlling motor according to the third embodiment of the present invention.
FIG. 37 is a diagram showing a structure of an H-bridge circuit portion according to the third embodiment of the present invention.
FIGS. 38A-38E are diagrams showing an operation of the apparatus for controlling motor according to the third embodiment of the present invention during deceleration (soft stop).
FIG. 39 is a diagram showing one concrete example of circuitry of a fan-driving unit provided with the apparatus for controlling motor according to the third embodiment of the present invention.
FIG. 40 is a diagram showing another circuitry of the fan-driving unit provided with the apparatus for controlling motor according to the third embodiment of the present invention.
FIG. 41 is a diagram showing yet another circuitry of the fan-driving unit provided with the apparatus for controlling motor according to the third embodiment of the present invention.
FIG. 42 is a diagram showing still another circuitry of the fan-driving unit provided with the apparatus for controlling motor according to the third embodiment of the present invention.
FIG. 43 is a diagram showing still another circuitry of the fan-driving unit provided with the apparatus for controlling motor according to the third embodiment of the present invention.

### DESCRIPTION OF THE PREFERRED EMBODIMENTS

### [First embodiment]

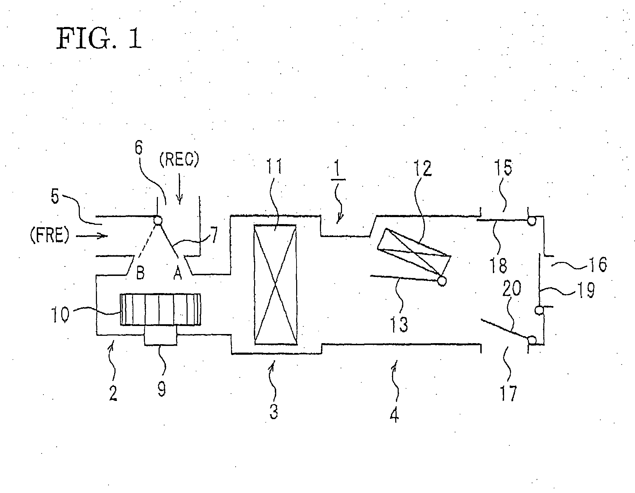

Hereinafter, a first embodiment of an air conditioning device for an automobile applied with an apparatus for controlling motor according to the present invention will be described with reference to FIG. 1 to FIG. 13.

FIG. 1 is an explanatory diagram showing a structure of a body of an air conditioning device for an automobile applied with an apparatus for controlling motor according to a first embodiment of the present invention. Referring to FIG. 1, a reference sign 1 denotes a body of the air conditioning device for the automobile. The air conditioning device body 1 is, as similar to a common air conditioning device for the automobile, structured by an intake unit 2 for selectively taking in fresh air or re-circulating air, a cooling unit 3 for cooling the taken-in air, and a heater unit 4 for performing blending and heating of the taken-in air and blowing the blended air to a vehicle-interior thereafter.

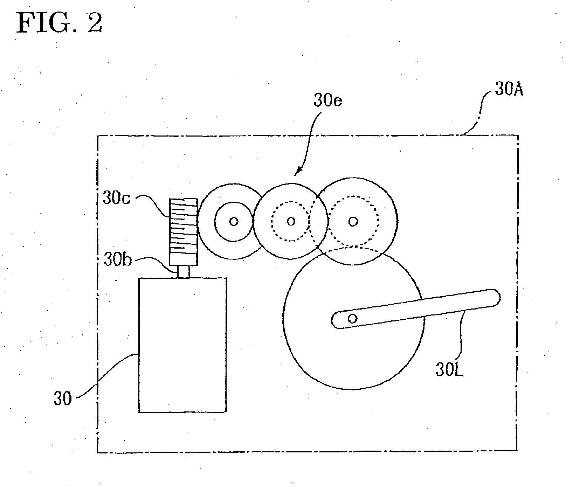

The intake unit 2 is provided with a fresh air-inlet 5 for taking in the fresh air and a re-circulating air-inlet 6 for taking in the re-circulating air, and an intake door (driven mechanism) 7 for adjusting proportion of the fresh air and the re-circulating air to be taken into the unit is rotatably provided at a portion where the inlets 5 and 6 are connected. The intake door 7 is rotated by an electric motor type actuator 30A shown in FIG. 2.

FIG. 2 is a diagram showing one concrete example of the electric motor type actuator driven by the apparatus for controlling motor according to the first embodiment of the present invention. The electric motor type actuator 30A is provided with an electric motor 30, a worm gear 30c attached to an output shaft 30b of the electric motor 30, a reduction gear-array mechanism 30e which engages with the worm gear 30c, and the actuator lever 30L rotated via the worm gear 30c and the reduction gear-array mechanism 30e. By transmitting the rotation of the actuator lever 30L to the intake door 7 shown in FIG. 1 via a link mechanism which is not shown, the intake door 7 is rotated. In addition, a rotational position of the intake door 7 is configured to be detected by a potentiometer (position detecting portion) 31.

As shown in FIG. 1, the intake unit 2 includes a fan 10 which is rotated by a fan-motor 9 at a predetermined speed. The fresh air or the re-circulating air is selectively sucked in by rotation of the fan 10 from the fresh air-inlet 5 or the re-circulating air-inlet 6 according to a position of the intake door 7, and also, voltage applied to the fan-motor 9 is varied to change the rotational speed of the fan 10, thereby an amount of wind blown to the vehicle-interior is adjusted. The fresh air is introduced (FRE) when the intake door 7 is at an "A" position in FIG. 1, and the re-circulating air is circulated (REC) when the intake door 7 is at a "B" position in the same.

An evaporator 11 which constitutes a refrigeration cycle is provided in the cooling unit 3. A refrigerant is supplied to the evaporator 11 when a compressor which is not shown is operated, thereby the taken-in air is cooled by a heat exchange with the refrigerant.

A heater core 12 in which engine-cooling water is circulated is provided in the heater unit 4, and a mix door 13 for adjusting proportion of an amount of air passing through the heater core 12 and an amount of air detours the heater core 12 is rotatably provided above the heater core 12. The mix door 13 is also rotated via the link mechanism (not shown) by the electric motor type actuator 30A, as the similar way as mentioned above. A rate of blending of the heated wind which has passed through the heater core 12 and which is heated by a heat exchange with the engine-cooling water, and the cooled wind which has detoured around the heater core 12 and which is thus not heated by the heater core, is varied by changing a degree of opening of the mix door 13, thereby a temperature of air blown to the vehicle interior is adjusted. A rotational position of the mix door is, as similar to the above-mentioned way, detected by the potentiometer 31.

The air which the temperature thereof is adjusted is supplied to the vehicle interior from one of a defrosting-blowout hole 15, a vent blowout hole 16 and a foot blowout hole 17. A defrosting door 18, a vent door 19 and a foot door 20 are rotatably provided to those blowout holes 16-17, respectively, and are rotated via the not-shown link mechanisms by the electric motor type actuators (not shown). A blowout mode is arbitrary set by combining opened-closed states of each of the blowout holes 15-17.

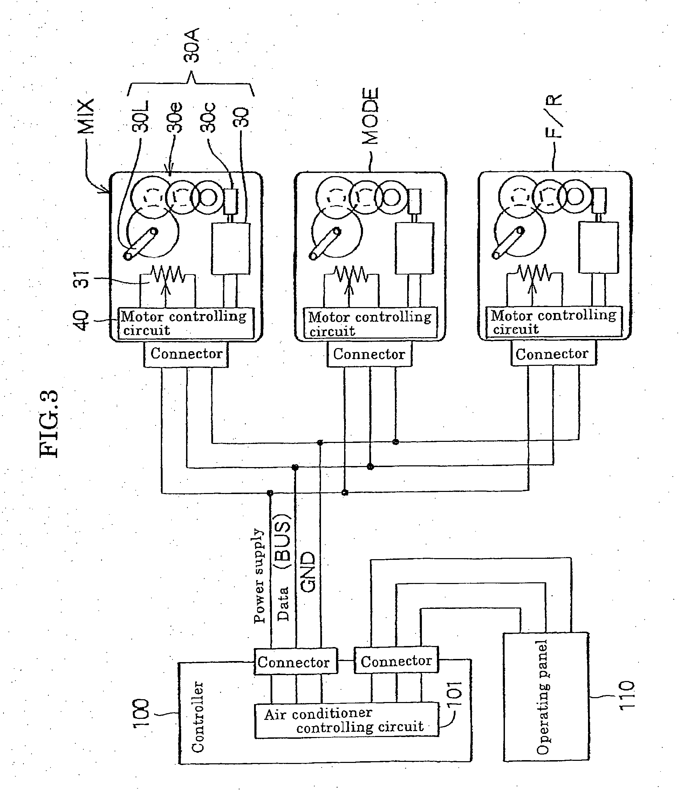

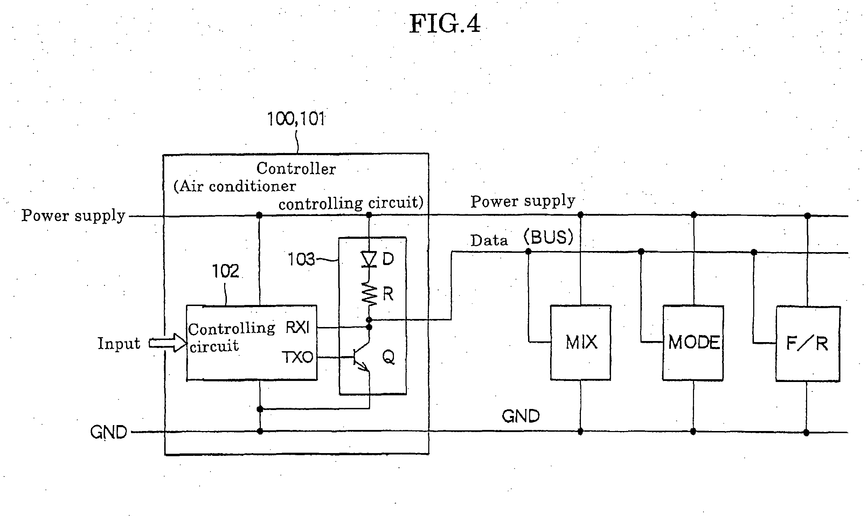

FIG. 3 and FIG. 4 are diagrams showing a structure of a system of the air conditioning device for the automobile applied with the apparatus for controlling motor according to the first embodiment of the present invention. FIG. 3 and FIG. 4 exemplify the system in which three electric motor type actuator units, more specifically, a mix door-actuator unit MIX for driving the mix door 13 to be opened and closed, a mode door-actuator unit MODE for driving the mode door, which selects the blowout hole, to be opened and closed, and an intake door-actuator unit F/R for driving the intake door 7 to be opened and closed, are used.

As shown in FIG. 3 and FIG. 4, each of the actuator units MIX, MODE and F/R is structured by combining inside of a case (chassis) thereof the electric motor type actuator 30A, the potentiometer 31 which a value of resistance is changed in conjunction with the rotation of the actuator lever 30L, and a motor controlling circuit 40. Each of the actuator units MIX, MODE and F/R has three-terminal connector. A three-core cable having a power supply line, a ground (GND) line and a data line (BUS) connects each of the actuator units MIX, MODE, and F/R with the controller (host device) 100.

As shown in FIG. 4, electric power is supplied to each of the actuator units MIX, MODE and F/R from the controller 100. Bidirectional serial data communication in an asynchronous type is carried out via the data line (BUS) between the controller 100 and each of the actuator units MIX, MODE, F/R. A communication protocol complies with LIN (Local Interconnect Network). The data line (BUS) is pulled up through a pull-up resistor (for example, one kilo ohm) R and a backflow prevention diode D which are provided inside of a data input-output circuit 103 of the controller 100 to a positive pole power supply. Switching of a NPN grounded-emitter transistor Q is carried out based on a send-data signal which is outputted from a send-data output terminal TXO of a controlling circuit 102, thereby sending of data is performed. Reception of data is performed by making a binary decision on voltage in the data line (BUS) supplied to a reception-data input terminal RXI on the basis of a predetermined voltage threshold value. The serial data communication is carried out by setting the controller 100 as a "master", and setting each of the actuator units MIX, MODE, and F/R as "slaves". The slaves detect a start bit for taking character synchronization, and generate a bit clock to read-in bit information.

As shown in FIG. 3, an air conditioner controlling circuit 101 which structures the controller 100 controls operation of the air conditioning device (air conditioner) on the basis of an input of operation from an operating panel 110 and the input from the various temperature sensors or the like which are not shown and at the same time, displays an operational state or the like on various indicators provided on the operating panel 110. The air conditioner controlling circuit 101 controls operations of each of the actuator units MIX, MODE, and F/R by sending command data such as target value-data for a degree of opening of door to each of the actuator units MIX, MODE, and F/R. In addition, the air conditioner controlling circuit 101 allows each of the actuator units MIX, MODE, and F/R to send information regarding the operational state or the like thereof, and carries out monitoring and conducts a diagnosis and so on of the operational states of each of the actuator units MIX, MODE, and F/R, by receiving the sent information. Meanwhile, identification (ID) codes (addresses) are respectively allocated to each of the actuator units MIX, MODE, and F/R.

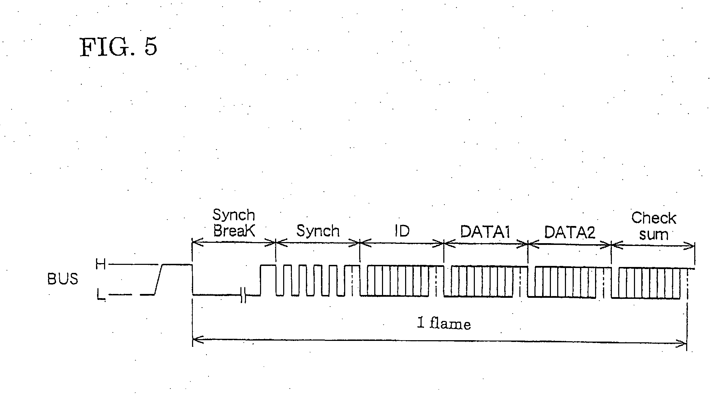

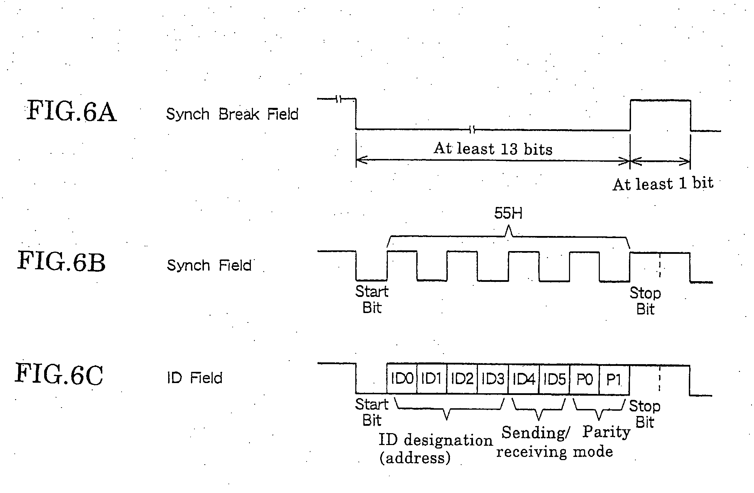

FIG. 5 is a diagram showing a data structure within one frame of a LIN communication standard, and FIGS. 6A-6F are diagrams showing data structures in each field within the 1 frame of the LIN communication standard. As shown in FIG. 5, the 1 frame of the LIN communication standard is structured by a synch-break field (Synch Break), a synch field (Synch), an ID field (ID), a data one field (DATA 1), a data 2 field (DATA 2), and a checksum field (Checksum).

As shown in FIG. 6A, the synch-break field is configured to be an "H" level during at least one bit period after an "L" level has continued during at least 13-bit period.

As shown in FIG. 6B, the synch field is structured by a start bit, "55" H-data if it is represented in a hexadecimal form as a bit-synchronization signal, and a stop bit having at least one bit period.

As shown in FIG. 6C, the ID field is structured by a start bit, 4 bits of identification code areas (ID0-ID3) for selecting and designating a recipient of the communication, 2 bits of areas for designating receiving/sending requests (ID4, ID5), 2 bits of parity check data (P0, P1), and at least 1 bit period of a stop bit. In the present embodiment, one of the respective door actuator units MIX, MODE and F/R is designated by the ID field, and at the same time, a mode of operation after the DATA 1 field is designated (whether the door actuator unit becomes a receiving-operation mode for receiving the various commands from the controller 100, or a sending-operation mode for sending the operational state or the like of the door actuator unit to the controller 100).

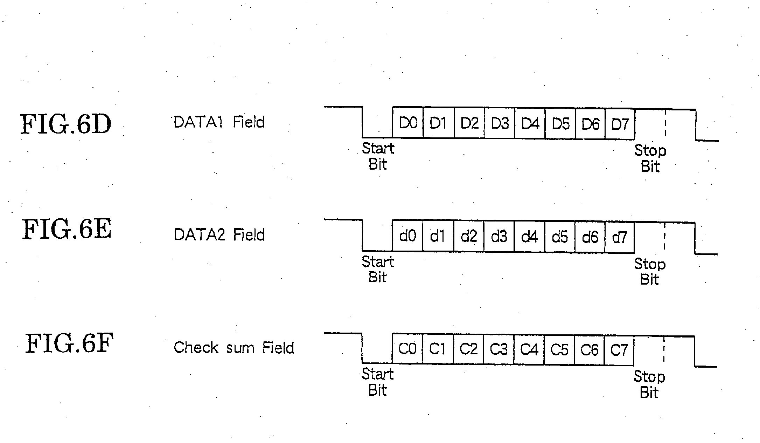

As shown in FIG. 6D, the data 1 field is structured by a start bit, 8 bits of data (D0-D7), and at least 1 bit period of a stop bit. In the present embodiment, the controller 100 (master), when it has designated the receiving-request in the ID field, supplies data designating the opening degree of door (target value-data) to the motor controlling circuit 40 (slave) by using the data 1 field. When the sending-request is designated in the ID field, data of present opening degree of door (present position data) is supplied from the motor controlling circuit 40 (slave) to the controller 100 (master) by using the data 1 field.

As shown in FIG. 6E, the data 2 field is structured by a start bit, 8 bits of data (d0-d7), and at least 1 bit period of a stop bit. In the present embodiment, the controller 100 (master), when it has designated the receiving-request in the ID field, supplies to the motor controlling circuit 40 (slave) various commands such as a request for clearing flag of communication error, a request for clearing diagnosis flag, a request for output-PWM control, a request for setting time for PWM-torque control, information for designating motor-operating condition, a request for emergency stop of motor, and a request for forced operation of motor, by using the data 2 field. When the sending-request is designated in the ID field, information regarding the operational state and error detection such as an over-current-detected flag, a motor-currently stopped-flag, a motor-rotating flag, a motor-reversely rotating flag, a received ID parity error-flag, an over-temperature-detected flag, a received sum check error-flag, and an over-voltage-detected flag, are supplied from the motor controlling circuit 40 (slave) to the controller 100 (master) by the data 2 field.

As shown in FIG. 6F, the checksum field is structured by a start bit, 8 bits of data (C0-C7), and at least 1 bit of period of a stop bit. In the present embodiment, 8 bits of inverted data which is a result of having added data in the data 1 field and the data in the data 2 field, and further added thereto carry-data of the added result, are sent as checksum data.

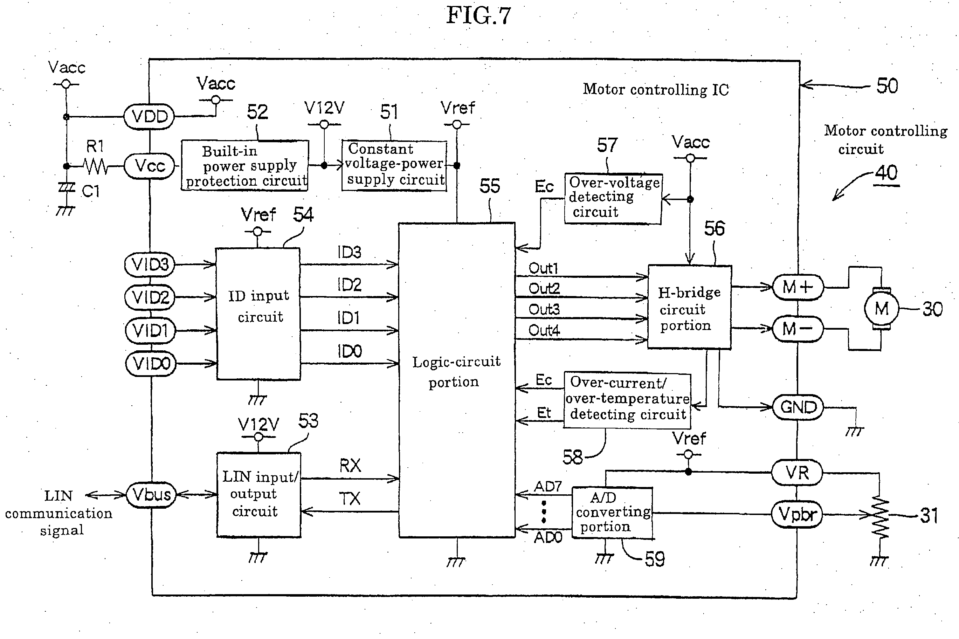

FIG. 7 is a block diagram showing the apparatus for controlling motor according to the first embodiment of the present invention. The motor controlling circuit 40 is structured by using a motor controlling IC 50. The motor controlling IC 50 is the exclusively-used IC (custom IC) which is developed for controlling of a direct current motor, and which is produced by, for example, using a BiCDMOS process which can form a bipolar element, a C-MOS element and a D-MOS element on the same semiconductor chip.

The motor controlling IC 50 includes a constant voltage-power supply circuit 51 which receives supplying of the electric power from a battery power supply Vacc supplied via an ignition switch or an accessory switch or the like to generate stabilized power Vref which is, for example, 5-volt, a built-in power supply protection circuit 52 for protecting the constant voltage-power supply circuit 51, a LIN input/output circuit 53 for carrying out input and output of a LIN communication signal (serial communication signal), and an ID input circuit 54 for setting an identification code (ID code). The motor controlling IC 50 further includes a logic-circuit portion 55 for carrying out various processing and controlling such as communication processing or operational processing of the motor, an H-bridge circuit portion 56 for supplying the electric power to the motor 30, an over-voltage detecting circuit 57 for detecting over-voltage of the battery power supply Vacc, an over-current/over-temperature detecting circuit 58 for detecting an over-current of the current supplied to the motor and a rise in temperature that exceeds an allowable range (over-temperature) in respective power-switching elements (MOS-FETs) which are structuring the H-bridge circuit portion 56, and an A/D converting portion 59 for converting the outputted voltage (voltage which corresponds to opening degree of door) of the potentiometer 31 into digital data.

VDD is a power supply terminal of the battery power supply Vacc for the H-bridge circuit portion 56, Vcc is a power supply terminal of the battery power supply Vacc in which the current thereof is limited by a current limiting resistor R1, a C1 is a condenser for stabilizing the power supply, and GND is a ground-power supply terminal. VID0-VID3 are input terminals for setting the identification code (ID code). In the present embodiment, the identification code (ID code) is structured by 4 bits, and 16 different identification codes (in other words, addresses) can be set at maximum. By connecting the ID input terminals VID0-VID3 to the ground, an "L" level (logical 0) can be set, and an "H" level (logical 1) can be set with an open state. Vbus is an input/output terminal of the serial communication signal (in concrete terms, the LIN communication signal), and more specifically, it is a connecting terminal of the data line (BUS). M+ and M- are output terminals of the H-bridge circuit portion 56, and are connecting terminals to be connected with the motor 30. VR is an output terminal of the stabilized power supply Vref, and one end of the potentiometer 31 is connected thereto. Vpbr is an input terminal of the outputted voltage (voltage corresponding to opening degree of door) of the potentiometer 31. V12V is a battery power supply in which the current thereof is limited, and this power supply V12V is supplied to the LIN input/output circuit 53.

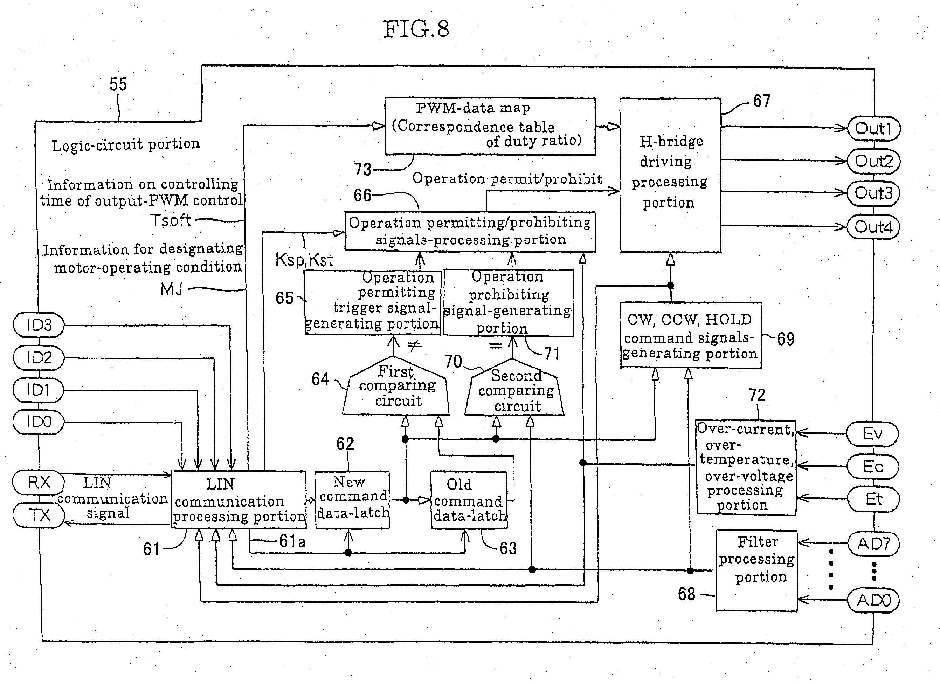

FIG. 8 is a diagram showing one create example of the logic-circuit portion 55 of the apparatus for controlling motor according to the first embodiment of the present invention. A LIN communication processing portion 61 decodes a reception-signal RX supplied from the LIN input/output circuit 53, and temporarily stores the 8-bit data in each of the data 1 field, the data 2 field and the checksum field into a temporary resister or the like, respectively, when a result of a parity check of the ID field is normal, when the received ID code coincides with the own ID code, and when the receiving-request is designated by the 2 bits in the ID field, which are the ID4 and the ID5. In addition, the LIN communication processing portion 61 carries out a sum check on each of the data stored temporarily in the above-mentioned temporary resister or the like to check to see that there is no error therein, and thereafter, supplies the opening degree of door-designating data (target value-data) which are in 8-bit in the data 1 field to a new command data-latch circuit 62, and at the same time, outputs a communication-established trigger signal 61a and allows the new command data-latch circuit 62 to latch the opening degree of door-designating data (target value-data). At this time, the prior opening degree of door-designating data (target value-data) which has been stored in the new command data-latch circuit 62 is shifted to an old command data-latch circuit 63.

Meanwhile, in a case where an error has occurred in the result of the parity check of the ID field, the LIN communication processing portion 61 sets the received ID parity error-flag. Also, in a case where an error has occurred in a result of the sum check, the LIN communication processing portion 61 sets the received sum check error-flag.

A first comparing circuit 64 compares the new opening degree of door-designating data (target value-data) with the old opening degree of door-designating data, and supplies a result of the comparison (discordance output) to an operation permitting trigger signal-generating portion 65 when both the opening degree of door-designating data are different from each other. The operation permitting trigger signal-generating portion 65 generates an operation permitting trigger signal and supplies it to an operation permitting/prohibiting signals-processing portion 66 when the new and the old opening degree of door-designating data are different from each other. The operation permitting/prohibiting signals-processing portion 66 supplies an operation permitting signal to an H-bridge driving processing portion 67 when the operation permitting trigger signal is supplied thereto.

The output of the potentiometer 31 for detecting the opening degree of door is converted into actual opening degree of door-data (present value data) AD0-AD7 in 8 bits in every A/D conversion cycle previously set by the A/D converting circuit 59 shown in FIG. 7.

A filter processing portion 68 shown in FIG. 8 outputs a result of having carried out a process such as obtaining an average value of the actual opening degree of door-data (present value data) AD0-AD7 which are in a predetermined number of pieces continuing on a time series, as actual opening degree of door-data (present value data) after filter processing.

A CW, CCW, HOLD command signals-generating portion 69 compares the opening degree of door-designating data (target value-data) with the actual opening degree of door-data (present value data) after the filter processing, and decides a rotational direction of the motor 30 based on a deviation between both. Then, the CW, CCW, HOLD command signals-generating portion 69 generates and outputs a rotational direction-command signal (CW, CCW) for commanding whether to drive the motor 30 in a normal direction (CW: clockwise) to drive the door in an "open" direction, or to drive the motor 30 in a reverse direction (CCW: counterclockwise) to drive the door in a "close" direction. In addition, in a case where the opening degree of door-designating data (target value-data) and the actual opening degree of door-data (present value data) after the filter processing substantially coincide with each other, the CW, CCW, HOLD command signals-generating portion 69 generates and outputs a HOLD signal for commanding holding of the present position of the door to stop the driving of the motor 30, thereby to avoid generation of a hunting phenomenon.

The H-bridge driving processing portion 67 generates and outputs driving signals Out1-Out4 of each of the power-switching elements (for example, MOS-PETs) structuring respective arms of the H-bridge circuit portion 56, based on the rotational direction-command signal (CW, CCW). Accordingly, the electric power is supplied to the motor 30 from the H-bridge circuit portion 56 shown in FIG. 7, thereby the driving of the motor 30 is carried out. Meanwhile, the H-bridge driving processing portion 67 may be configured to carry out soft start control which the electric power supplied to the electric motor 30 is gradually increased by PWM control, at the time of activation of the electric motor 30, to reduce a noise generated when the motor activates. Also, the H-bridge driving processing portion may be configured to carry out soft stop control which the electric power supplied to the motor 30 is gradually decreased by the PWM control at the time of stopping of the electric motor 30, to reduce the noise generated when the motor stops.

A second comparing circuit 70 compares the opening degree of door-designating data (target value-data) with the actual opening degree of door-data (present value data) after the filter processing, and supplies a result of the comparison (accordance output) to an operation prohibiting signal-generating portion 71. The operation prohibiting signal-generating portion 71 generates and outputs an operation prohibiting signal when the present opening degree of door coincides with the target value. This operation prohibiting signal is supplied to the operation permitting/prohibiting signals-processing portion 66. The operation permitting/prohibiting signals-processing portion 66 supplies a command for prohibiting operation to the H-bridge driving processing portion 67 to prohibit the driving of the electric motor 30.

An over-current, over-temperature, over-voltage processing portion 72, when one of an over-voltage-detected signal Ec from the over-voltage detecting circuit 57, an over-current-detected signal Ec and an over-temperature-detected signal Et from the over-current/over-temperature detecting circuit 58 is supplied, sets a flag which corresponds to the abnormality among them and supplies information representing generation of the abnormality to the operation permitting/prohibiting signals-processing portion 66. The operation permitting/prohibiting signals-processing portion 66 supplies the command for prohibiting operation to the H-bridge driving processing portion 67 to prohibit the driving of the motor 30, when the information representing the generation of the abnormality is supplied.

In the case where the result of the parity check of the ID field is normal, the received ID code coincides with the own ID code, and the sending-request is designated by the 2 bits of the ID4 and the ID5 in the ID field, the LIN communication processing portion 61 sets the actual opening degree of door-data (present value data) after the filter processing which are in 8 bits as the data to be sent in the data 1 field, and sets following ones as the data to be sent in the data 2 field. For example, the LIN communication processing portion sets the over-current-detected flag in lowest-order bit d0 of the data 2 field, the motor-currently stopped-flag in second bit d1, a CW flag which represents that the direction of the motor rotates is the normal direction (CW) in third bit d2, a CCW flag which represents that the direction of the motor rotates is the reverse direction (CCW) in fourth bit d3, the received ID parity error-flag in fifth bit d4, the over-temperature-detected flag in sixth bit d5, the received sum check error-flag in seventh bit d6, and the over-voltage-detected flag in highest-order bit d8, respectively. Then, inverted data is obtained which is a result of having added the data to be sent in the data 1 field and the data to be sent in the data 2 field and further added to a result of the addition carry-data occurred by that addition, and the obtained data is set to be as checksum data to be sent in the checksum field.

Further, the LIN communication processing portion 61 sequentially sends the data in the data 1 field, the data 2 field and the checksum field promptly after the point of completion of the ID field (for example, during the 2-bit period). Accordingly, the actual opening degree of door-data (present position data), the information on the operational states of the motor such as the rotational direction of the motor or whether the motor is stopped, the information of having detected the abnormality of the over-current, the over-voltage or the over-temperature, and the information to represent that the error has occurred at the time of the data-receiving, are supplied to the controller 100 as the host device (master).

Therefore, the controller 100 becomes capable of making the diagnosis of the operation of the motor controlling circuit 40 in detail. Also, the controller 100 becomes possible to avoid damages in the motor controlling circuit 40 and the electric motor type actuator 30A by estimating overload in the motor controlling circuit 40 and giving a command to stop the operation of the apparatus for controlling motor, for example.

As stated above, the LIN communication processing portion 61 decodes the reception-signal RX supplied from the LIN input/output circuit 53, and temporarily stores the 8-bit data in each of the data 1 field, the data 2 field and the checksum field into the temporary register or the like, respectively, when the result of the parity check of the ID field is normal, when the received ID code coincides with the own ID code, and when the receiving-request is designated by the 2 bits in the ID field, which are the ID4 and the ID5. In addition, the LIN communication processing portion carries out the sum check on each of the temporarily stored-data to check to see if there is no error therein, and thereafter, supplies the opening degree of door-designating data (target value-data) which are in 8-bit in the data 1 field to the new command data-latch circuit 62, and at the same time, outputs the communication-established trigger signal 61a and allows the new command data-latch circuit 62 to latch the opening degree of door-designating data (target value-data). At this time, the prior opening degree of door-designating data (target value-data) which has already been stored in the new command data-latch circuit 62 is shifted to the old command data-latch circuit 63.

Next, the LIN communication processing portion 61 decodes and processes the content of the data 2 field. As already stated, various requests with respect to the motor controlling circuit 40 (slave) are supplied from the controller 100 (master) by using the data 2 field, when the receiving-request has been set in the ID field.

In the present embodiment, the request for clearing flag of communication error is supplied by lowest-order bit d0 in the data 2 field. The LIN communication processing portion 61 clears the received ID parity error-flag and the received sum check error-flag, respectively, when logic in the lowest-order bit d0 is "1", and does not change the state in the respective flags when the logic in the lowest-order bit d0 is "0".

The request for clearing diagnosis flag is supplied by second bit d1 in the data 2 field. The LIN communication processing portion 61 clears all the over-current-detected flag, the over-temperature-detected flag and the over-voltage-detected flag when logic in the second bit d1 is "1", and does not change the state in each of the flags when the logic in the second bit d1 is "0".

The request for output-PWM control is supplied by third bit d2 in the data 2 field. Here, the output-PWM control stands for starting the operation of the motor softly (soft start) by gradually increasing a duty ratio of the PWM control at the time of the activation of the motor, and stopping the motor softly (soft stop) by gradually decreasing the duty ratio of the PWM control, when a deviation between the opening degree of door-designating data (target value-data) and the actual opening degree of door-data (present value data) after the filter processing becomes lower than a pre-set value. It is requested to carry out control of the soft start and the soft stop when logic in third bit d2 is "1", and the control of the soft start and the soft stop are not necessary when the logic in the third bit d2 is "0". The LIN communication processing portion 61 supplies information on whether or not to carry out the control of the soft start and the soft stop to a PWM-data map (correspondence table of duty ratio) 73.

The request for setting time for PWM-torque control is supplied by fourth bit d3 in the data 2 field. Here, time for PWM-torque control is a time for carrying out the soft start by the output-PWM control. In concrete terms, it is a time of changing the duty ratio from zero percent or a minimum duty value to 100 percent, at the time when carrying out the soft start. Meanwhile, in the soft stop, the duty ratio is set based on the deviation between the opening degree of door-designating data (target value-data) and the actual opening degree of door-data (present value data) after the filter processing.

In the present embodiment, the time for PWM-torque control is set to be 500ms (millisecond) when logic in the fourth bit d3 is "1", and is set to be 250ms (millisecond) when the logic in the fourth bit d3 is "0". The LIN communication processing portion 61 supplies information regarding controlling time of carrying out the-output-PWM control (soft start control) "Tsoft" to the PWM-data map (correspondence table of duty ratio) 73. The information regarding controlling time of carrying out the output-PWM control (information on controlling time of output-PWM control) Tsoft is supplied to the H-bridge driving processing portion 67 via the PWM-data map (correspondence table of duty ratio) 73. It may be configured that the LIN communication processing portion 61 supplies the information on controlling time of output-PWM control Tsoft directly to the H-bridge driving processing portion 67.

The information for designating motor-operating condition is supplied by fifth bit d4 and sixth bit d5 in the data 2 field. Here, motor-operating condition is for setting whether or not to limit an upper limit of the electric power supplied to the motor by the PWM control, or to limit the upper limit of the electric power supplied to the motor only when the output-PWM control (soft start/soft stop control) is carried out, or to limit the upper limit of the electric power supplied to the motor even when the output-PWM control is not carried out. The limitation of the electric power supplied to the motor is carried out by setting an upper limit on the duty ratio in the PWM control.

In the present embodiment, a value of the upper limit of the duty ratio is set to be approximately 70 percent when logic in the fifth bit d4 is "1", and the upper limit value of the duty ratio is set to be 100 percent when the logic in the fifth bit d4 is "0". In addition, when logic in the sixth bit d5 is "1", it is set to perform the limitation of the upper limit of the electric power supplied to the motor only when the output-PWM control (soft start/soft stop control) is carried out, and it is set to perform the limitation of the upper limit of the electric power supplied to the motor at any time (even when the output-PWM control (soft start/soft stop control) is not to be carried out) when the logic in the sixth bit d5 is "0".

Meanwhile, it may be configured that the upper limit of the electric power supplied to the motor is limited only when the output-PWM control (soft start/soft stop control) is carried out and the upper limit value of the duty ratio may be switched over in 4 steps, which are for example, 100 percent, approximately 94 percent, approximately 88 percent and approximately 75 percent, by using 2 bits of the bit d4 and the bit d5. Also, it may be configured that the upper limit of the electric power supplied to the motor is limited at any time (even when the output-PWM control (soft start/soft stop control) is not to be carried out) and the upper limit value of the duty ratio may be switched over in 4 steps, which are for example, 100 percent, approximately 94 percent, approximately 88 percent and approximately 75 percent, by using 2 bits of the bit d4 and the bit d5.

The LIN communication processing portion 61 supplies the information for designating motor-operating condition MJ to the PWM-data map (correspondence table of duty ratio) 73. The PWM-data map (correspondence table of duty ratio) 73 supplies a PWM data map having an operating condition designated by the information for designating motor-operating condition MJ to the H-bridge driving processing portion 67. Meanwhile, it may be configured that the LIN communication processing portion 61 supplies the information for designating motor-operating condition MJ directly to the H-bridge driving processing portion 67. In this case, the H-bridge driving processing portion 67 gains access to the PWM-data map 73 to load the PWM-data map corresponding to the operating condition designated by the information for designating motor-operating condition MJ.

The request for emergency stop of motor is supplied by seventh bit d6 in the data 2 field. When logic in the seventh bit d6 is "1", power application to the motor is shut off forcibly. When the logic in the seventh bit d6 is "0", a state that the power application to the motor has been forcibly shut off is cancelled, and it becomes a state that the power application to the motor is possible (normal operating state). The LIN communication processing portion 61 supplies the request for emergency stop of motor Ksp to the operation permitting/prohibiting signals-processing portion 66. In a case of rotating the motor again after having stopped the motor urgently, the subsequent request for forced operation of motor is used. Meanwhile, the opening degree of door-designating data different from the one before may be given in the case of rotating the motor again after the motor is stopped urgently.

The request for forced operation of motor is supplied by highest-order bit d7 in the data 2 field. When logic in the highest-order bit is "1", the power application to the motor is started forcibly. A state becomes as a normal operating state when the logic in the highest-order bit is "0". The LIN communication processing portion 61 supplies the request for forced operation of motor Kst to the operation permitting/prohibiting signals-processing portion 66.

Meanwhile, in the present embodiment, the LIN input/output circuit 53 and the logic-circuit portion 55 structure a serial data communication portion, and the LIN communication processing portion 61 in the logic-circuit portion 55 structures a reception-processing portion. In addition, the H-bridge circuit portion 56, the H-bridge driving processing portion 67, and the PWM-data map 73 included in the logic-circuit portion 55 structure means for changing electric power supplied to motor.

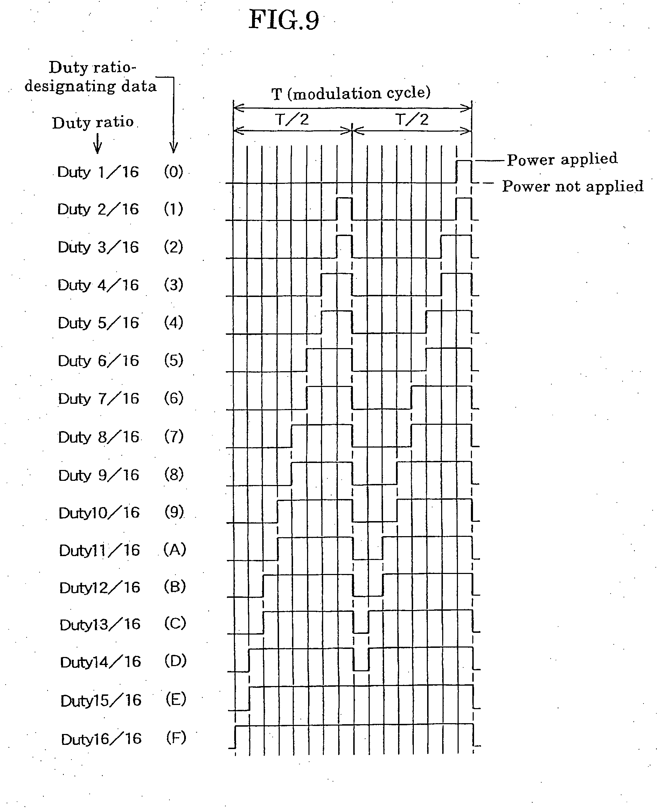

FIG. 9 is a diagram showing an example of switching the electric power supplied to the motor in 16 steps by the PWM control according to the first embodiment of the present invention. In the present embodiment, the duty ratio (Duty) is set to be in 16 steps from 1/16 to 16/16, and each of the duty ratios is designated by duty ratio-designating data represented in a hexadecimal form shown in a bracket. Also, one modulation cycle T of the PWM control is divided into two sections (T/2) of a former half and a latter half, and sections for applying the power to the electric motor are increased alternately in the former half and the latter half. Accordingly, a cycle of energization to the electric motor becomes T/2 from the duty ratio (Duty) 2/16 and above. Therefore, it is possible to reduce torque fluctuations (pulsation) in the output of the motor.

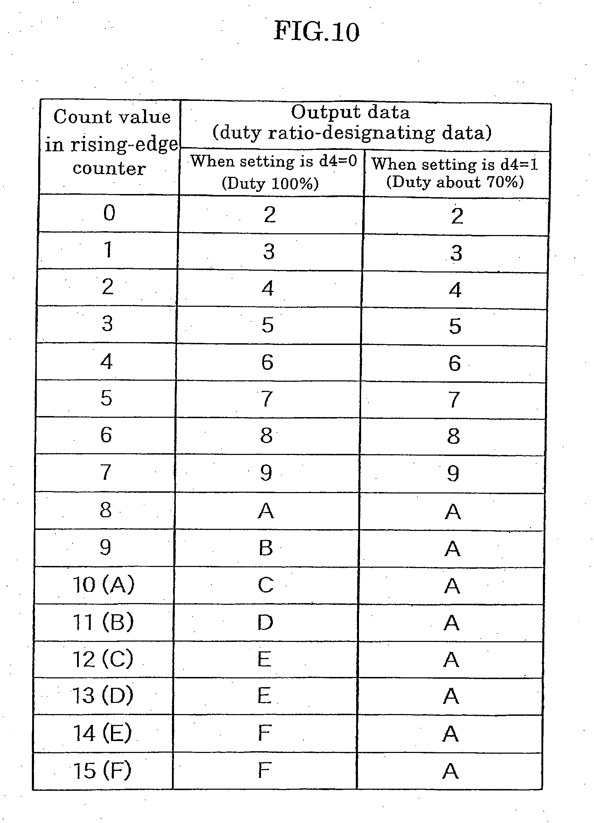

FIG. 10 is a diagram showing one example of the PWM-data map for the soft start at the time of activation of the motor according to the first embodiment of the present invention. As shown in FIG. 10, a map or a table for showing correspondence between a count value in a rising-edge counter and the duty ratio-designating data is previously registered in the PWM-data map 73. In the PWM-data map 73, the duty ratio-designating data for setting the upper limit of the duty ratio to be at 100 percent, and the duty ratio-designating data for setting the upper limit of the duty ratio to be at approximately 70 percent are stored, respectively. Meanwhile, in FIG. 10, references within the brackets in "count value in rising-edge counter" are references shown by the hexadecimal form. Also, output data (duty ratio-designating data) are shown by the hexadecimal form.

When activating the motor, the H-bridge driving processing portion 67 pluses (performs increment) the counter value of the rising-edge counter (not shown) by 1 (one) in every cycle which is decided based on the time for PWM-torque control. Thereafter, the H-bridge driving processing portion reads out a duty value of the duty ratio-designating data corresponding to the plused (incremented) count value from the PWM-data map 73, generates the driving signals Out1-Out4 which have been modulated with PWM modulation based on the read out duty value and supplies them to the H-bridge circuit portion 56, thereby supplies the electric power to the electric motor 30 through the power-switching elements (for example, MOS-FETs) which are structuring each of the arms within the H-bridge circuit portion 56.

In a case where a difference between the opening degree of door-designating value (target value) (8-bit data) and the actual opening degree of door (present value) (8-bit) is over 16 (target value - present. value ≧ 16) at the time when the soft start control is finished, the H-bridge driving processing portion 67 carries out the supplying of the electric power to the electric motor 30 with the condition designated in the bit d4 and bit d5 in the data 2 field (information for designating motor-operating condition). In other words, the H-bridge driving processing portion carries out the supplying of the electric power to the electric motor 30 continuously when the "duty 100%" has been set, and performs PWM drive of the motor with the duty ratio of approximately 70% when the "duty approximately 70%" has been set. Accordingly, the electric power supplied to the electric motor 30 is limited to approximately 70% of rated electric power (electric power at the time of the continuous power application). Therefore, number of rotations of the electric motor becomes lower than rated number of rotation, and thus a frequency of the noise and a noise level become reduced.

The H-bridge driving processing portion 67 carries out the process of the soft stop when the difference between the opening degree of door-designating value (target value) (8-bit data) and the actual opening degree of door (present value) (8-bit) becomes less than 15 (target value - present value ≦ 15). Meanwhile, the process of the soft stop is executed only when the request for output-PWM control is set to be carried out. When the request for output-PWM control has not been set, the H-bridge driving processing portion 67 carries out normal servocontrol such that the difference between the opening degree of door-designating value (target value) (8-bit data) and the actual opening degree of door (present value) (8-bit) becomes zero.

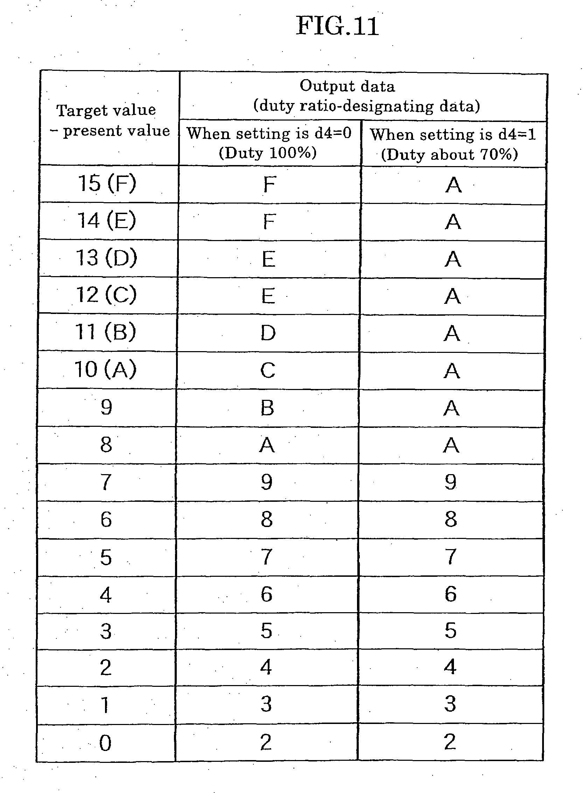

FIG. 11 is a diagram showing one example of the PWM-data map for the soft stop according to the first embodiment of the present invention. In the PWM-data map (correspondence table of duty ratio) 73, duty ratio-setting data is previously registered corresponding to a difference between the target value and the present value (target value - present value). In the PWM-data map 73, the duty ratio-designating data for setting the upper limit of the duty ratio to be at 100 percent, and the duty ratio-designating data for setting the upper limit of the duty ratio to be at approximately 70 percent are stored, respectively. Meanwhile, in FIG. 11, references within brackets in a column of the difference between the target value and the present value (target value - present value) are references shown by the hexadecimal form. Also, output data (duty ratio-designating data) are shown by the hexadecimal form.

The H-bridge driving processing portion 67 reads out the duty ratio-setting data corresponding to the difference between the target value and the present value (target value - present value) from the PWM-data map (correspondence table of duty ratio) 73, generates the driving signals Out1-Out4 which have been modulated with the PWM modulation based on read out duty value and supplies them to the H-bridge circuit portion 56, thereby supplies the electric power to the electric motor 30 through the power-switching elements (for example, MOS-FETs) which are structuring each of the arms within the H-bridge circuit portion 56. Since the electric power to be supplied to the electric motor 30 is configured to be made less as the difference between the target value and the present value becomes less, it is possible to stop the door at the position corresponding to the target value or at the position near thereto with high precision. Also, it is possible to reduce the noise generated at the time when the motor stops.

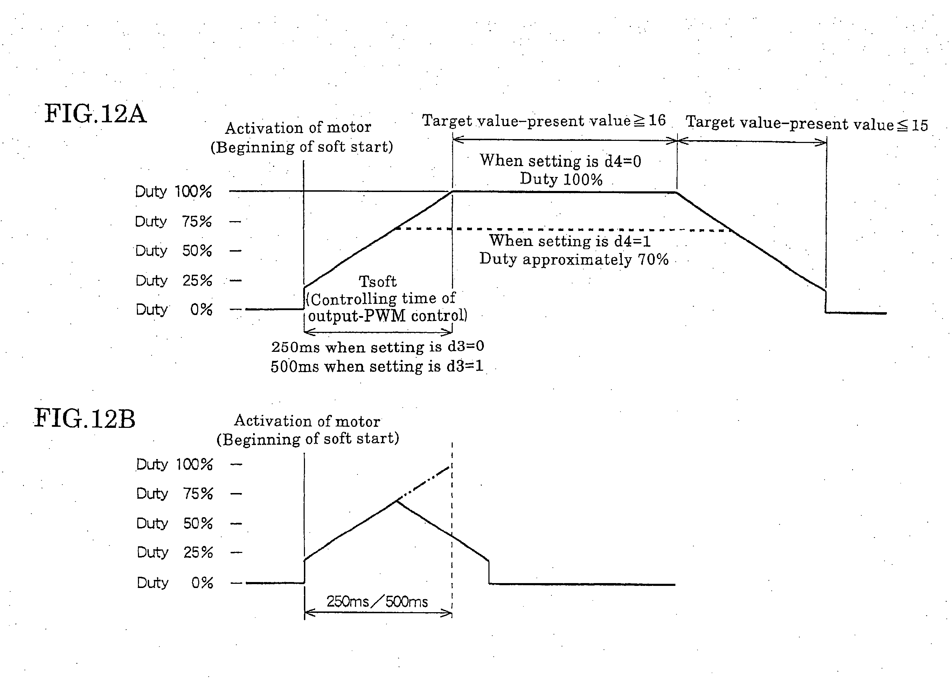

FIGS. 12A and 12B are graphs showing change-characteristic of the duty ratio from the activation of the motor to stopping of the motor when the soft start/soft stop control is carried out according to the first embodiment of the present invention. Meanwhile, since the duty ratio and the electric power supplied to the electric motor are in a proportionality relation, this makes that the graphs shown in FIGS. 12A and 12B represent change-characteristic of the electric power supplied to the electric motor. Meanwhile, FIG. 12A shows the change-characteristic of the duty ratio from the activation of the motor to the stopping of the motor, while FIG. 12B shows the change-characteristic of the duty ratio in a case where the control of the motor is shifted to carry out the soft stop control from the middle of the performance of the soft start control, due to the difference between the opening degree of door-designating value (target value) and the actual opening degree of the door (present value) being lower than a predetermined value at the time while the soft start control in the activation of the motor is carried out.

As shown in FIG. 12A, when the opening degree of door-designating value (target value) is set, the activation of the motor (soft start control) is carried out on the basis of the PWM-data map for soft start shown in FIG. 10. The supplying of the electric power to the electric motor 30 is continuously carried out with the condition designated in the bit d4 and bit d5 in the data 2 field (information for designating motor-operating condition) during when the difference between the opening degree of door-designating value (target value) (8-bit data) and the actual opening degree of door (present value) (8-bit) is over 16 (target value - present value ≧ 16). In particular, as shown in FIG. 12A, the electric power is supplied to the motor with the duty of 100% when d4=0 is set (in other words, the power supplying to the motor is not limited), and when d4=1 is set, the power supplying to the motor is limited by setting the duty of approximately 70% as the upper limit.

In addition, the soft stop control of the motor is carried out based on the PWM-data map for the soft stop as shown in FIG. 11 from the point when the difference between the opening degree of door-designating value (target value) (8-bit data) and the actual opening degree of door (present value) (8-bit) becomes less than 16 (target value - present value ≦ 15), and thereby the motor is stopped.

Meanwhile, as shown in FIG. 12B, when the difference between the opening degree of door-designating value (target value) (8-bit data) and the actual opening degree of door (present value) (8-bit) becomes less than 15 (target value - present value ≦ 15), the control of the motor is shifted to the soft stop control at that point, and the motor is stopped by the soft stop control.

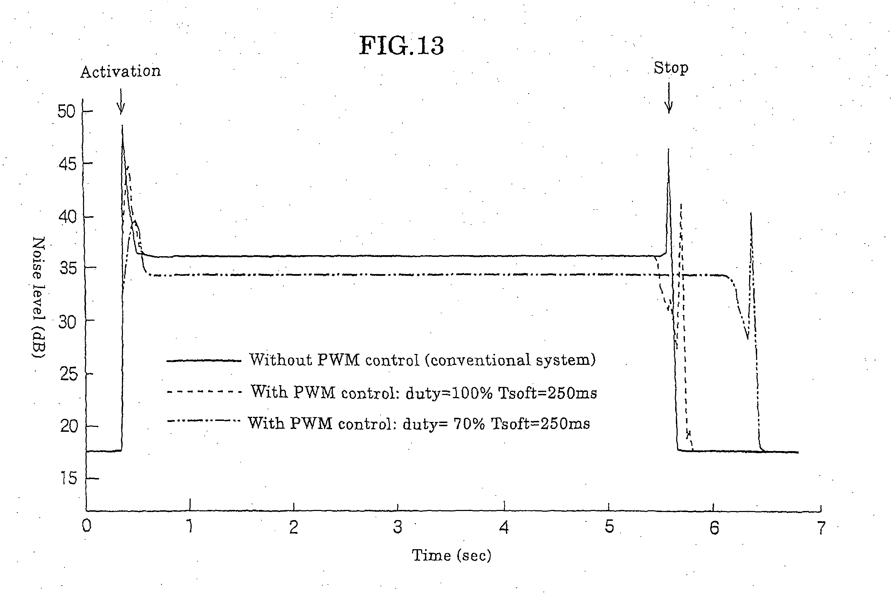

FIG. 13 is a graph showing a measurement result of the noise level when the electric motor type actuator is driven by the apparatus for controlling motor according to the first embodiment of the present invention. In FIG. 13, a solid line represents a noise characteristic of a conventional driving system without the PWM control (without soft start/soft atop control). Since the soft start/soft stop control is not carried out in the conventional driving system, the noise level is large when the motor activates and stops.

A dotted line represents a noise characteristic when the actuator is driven with a condition of the duty-100% (electric power supplied to the motor is not limited) with the PWM control (with soft start/soft stop control, controlling time of output-PWM control = 250ms). The noise level is reduced at the time of the activation and the stopping of the motor by carrying out the soft start/soft stop control (reduced by approximately 4dB as compared with the conventional driving system).

A chain line represents a noise characteristic when the actuator is driven with a condition of the duty-approximately 70% (electric power supplied to the motor is limited) with the PWM control (with soft start/soft stop control, controlling time of output-PWM control Tsoft = 250ms). The noise level is reduced at the time of the activation and the stopping of the motor by carrying out the soft start/soft stop control (reduced by approximately 4dB-7dB as compared with the conventional driving system). Also, since the electric power supplied to the motor is limited, the noise level (stationary noise) is reduced at approximately 2dB less than the conventional system. Meanwhile, since the electric power supplied to the motor is limited, number of rotation of the motor is reduced and thus a point of time when the motor stops is delayed for approximately one second as compared with the case where the electric power supplied to the motor is not limited (time for operating the motor is increased at approximately 15%).

As described above, although the example in which the opening degree of various doors provided in the air conditioning device for the automobile by using the apparatus for controlling motor has been explained in the present embodiment, it is possible to apply the apparatus for controlling motor according to the present invention to various uses including actuators for linearly moving an object to be controlled and so on, not only for the use in the door actuators.

Also, the example in which the logic-circuit portion 55 is in the circuitry mainly based on hardware has been explained in the present embodiment. However, one chip microcomputer or the like may be used for the logic-circuit portion 55 to realize the function of the logic-circuit portion by program control.

As described in the foregoing, the apparatus for controlling motor according to the first embodiment of the present invention is capable of changing the electric power supplied to the motor based on the information for designating motor-operating condition supplied from the host device.

Therefore, with respect to the electric motor type actuator having a small-sized motor, the electric power supplied to the small-sized motor is set to be small to keep the number of rotation of the motor to be low, thereby it is possible to lower the frequency of the noise. Accordingly, it is possible to solve the problem of giving unpleasant feeling to a user etc. due to the difference in the frequencies of the noises by the difference of the motors. Also, by suppressing the number of rotation of the motor to be low, it is possible to lower the level of the noise.

In addition, when a load of the electric motor type actuator is light, it is possible to attain power saving by setting the electric power supplied to the motor to be low as well as to lower the level of the noise.

### [Second embodiment]

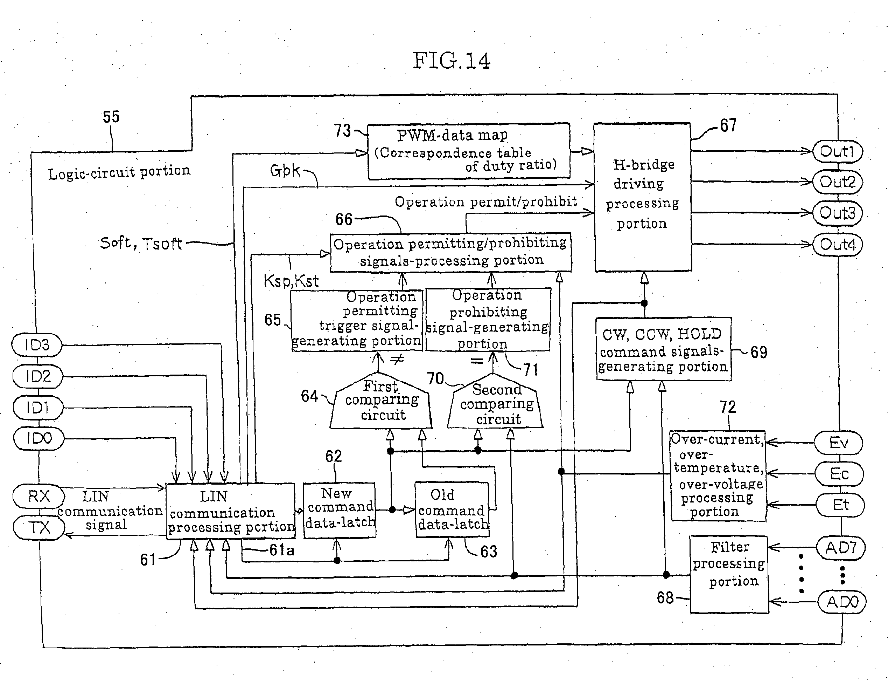

Hereinafter, a second embodiment of the air conditioning device for the automobile applied with the apparatus for controlling motor according to the present invention will be described with reference to FIG. 14 to FIG. 21.

Meanwhile, parts in the present embodiment, which are same or equivalent to the first embodiment, will be explained by attaching same reference numerals used therein and their explanations are omitted.

The data 2 field in the second embodiment of the present invention is structured by the start bit, 8 bits of data (d0-d7), and at least 1 bit period of the stop bit. In the present embodiment, the controller 100 (master), when it has designated the receiving-request in the ID field, supplies to the motor controlling circuit 40 (slave) various commands such as the request for clearing flag of communication error, the request for clearing diagnosis flag, the request for output-PWM control, the request for setting time for PWM-torque control, a request for limiting electric power supplied to motor, a request for brake-control at deceleration, the request for emergency stop of motor, and the request for forced operation of motor, by using the data 2 field. When the sending-request is designated in the ID field, the information regarding the operational state and the error detection such as the over-current-detected flag, the motor-currently stopped-flag, the motor-rotating flag, the motor-reversely rotating flag, the received ID parity error-flag, the over-temperature-detected flag, the received sum check error-flag, and the over-voltage-detected flag, are supplied from the motor controlling circuit 40 (slave) to the controller 100 (master) by the data 2 field.

Also, the H-bridge driving processing portion (means for controlling deceleration) 67 according to the second embodiment of the present invention is capable of carrying out the soft start control in which the electric power supplied to the electric motor 30 is gradually increased by the PWM control, at the time of the activation of the electric motor 30. Thereby, it is possible to reduce the noise generated when the motor activates. In addition, the H-bridge driving processing portion 67 is capable of carrying out the soft stop control in which the electric power supplied to the motor 30 is gradually decreased by the PWM control at the time of stopping of the electric motor 30. Thus, it is possible to reduce the noise generated when the motor stops.

In the second embodiment of the present invention, the request for clearing flag of communication error is supplied by the lowest-order bit d0 in the data 2 field. The LIN communication processing portion 61 clears the received ID parity error-flag and the received sum check error-flag, respectively, when the logic in the lowest-order bit d0 is "1", and does not change the state in the respective flags when the logic in the lowest-order bit d0 is "0".

The request for clearing diagnosis flag is supplied by the second bit d1 in the data 2 field. The LIN communication processing portion 61 clears all the over-current-detected flag, the over-temperature-detected flag and the over-voltage-detected flag when the logic in the second bit d1 is "1", and does not change the state in each of the flags when the logic in the second bit d1 is "0".

The request for output-PWM control is supplied by the third bit d2 in the data 2 field. Here, the output-PWM control stands for starting the operation of the motor softly (soft start) by gradually increasing the duty ratio of the PWM control at the time of the activation of the motor, and stopping the motor softly (soft stop) by gradually decreasing the duty ratio of the PWM control, when the deviation between the opening degree of door-designating data (target value-data) and the actual opening degree of door-data (present value data) after the filter processing becomes lower than the pre-set value. It is requested to carry out the control of the soft start and the soft stop when the logic in the third bit d2 is "1", and the control of the soft start and the soft stop are not necessary when the logic in the third bit d2 is "0".

As shown in FIG. 14, the LIN communication processing portion 61 supplies information on whether or not to carry out the control of the soft start and the soft stop (information on requesting of output-PWM control) "Soft" to the PWM-data map (correspondence table of duty ratio) 73. The information on requesting of output-PWM control "Soft" is supplied to the H-bridge driving processing portion 67 via the PWM-data map (correspondence table of duty ratio) 73. Meanwhile, it may be configured that the LIN communication processing portion 61 supplies the information on requesting of output-PWM control "Soft" directly to the H-bridge driving processing portion 67.

The request for setting time for PWM-torque control is supplied by the fourth bit d3 in the data 2 field. Here, the time for PWM-torque control is the time for carrying out the soft start by the output-PWM control. In concrete terms, it is the time of changing the duty ratio from the zero percent or the minimum duty value to the 100 percent, at the time when carrying out the soft start. Meanwhile, in the soft stop, the duty ratio is set based on the deviation between the opening degree of door-designating data (target value-data) and the actual opening degree of door-data (present value data) after the filter processing.

In the present embodiment, the time for PWM-torque control is set to be 500ms (millisecond) when the logic in the fourth bit d3 is "1", and is set to be 250ms (millisecond) when the logic in the fourth bit d3 is "0". The LIN communication processing portion 61 supplies the information regarding controlling time of carrying out the output-PWM control (soft start control) "Tsoft" to the PWM-data map (correspondence table of duty ratio) 73. The information regarding controlling time of carrying out the output-PWM control (information on controlling time of output-PWM control) Tsoft is supplied to the H-bridge driving processing portion 67 via the PWM-data map (correspondence table of duty ratio) 73. It may be configured that the LIN communication processing portion 61 supplies the information on controlling time of output-PWM control Tsoft directly to the H-bridge driving processing portion 67.

The request for limiting electric power supplied to motor is supplied by fifth bit d4 in the data 2 field. Here, the request for limiting electric power supplied to motor is for setting whether or not to limit an upper limit of the electric power supplied to the motor by the PWM control. Meanwhile, the limitation of the electric power supplied to the motor is carried out by setting an upper limit on the duty ratio in the PWM control. In the present embodiment, a value of the upper limit of the duty ratio is set to be approximately 70 percent when logic in the fifth bit d4 is "1", and the upper limit value of the duty ratio is set to be 100 percent when the logic in the fifth bit d4 is "0". The LIN communication processing portion 61 supplies information on upper limit of duty ratio Dmax to the PWM-data map (correspondence table of duty ratio) 73. The information on upper limit of duty ratio Dmax is supplied to the H-bridge driving processing portion 67 via the PWM-data map (correspondence table of duty ratio) 73. Meanwhile, it may be configured that the LIN communication processing portion 61 supplies the information on upper limit of duty ratio Dmax directly to the H-bridge driving processing portion 67.

The request for brake-control at deceleration is supplied by sixth bit d5 in the data 2 field. Here, the request for brake-control at deceleration is for setting whether to carry out deceleration control only by the PWM control or to carry out the deceleration control by the PWM control and a regeneration brake (PWM + regeneration brake). In the present embodiment, when logic in the fifth bit d4 is "1", the PWM + regeneration brake is set, and only the PWM control is set to be carried out when the logic in the fifth bit d4 is "0". When the PWM + regeneration brake is set to be carried out for the deceleration control, deceleration control in which, in a case where a deviation between the target value-data and the present position data (present value data) becomes less than a previously set judgment value of starting of deceleration control, the electric motor type actuator is driven by the PWM control with the duty ratio which is previously set corresponding to the deviation and at the same time, the electric motor 30 is rotated and driven via the H-bridge circuit portion 56 at an "ON-duty period" within a PWM cycle and a coil of the electric motor 30 is shunted via the semiconductor-switching elements structuring the H-bridge circuit portion 56 to apply the regeneration brake at an "OFF-duty period" within the PWM cycle. The control for the regeneration brake will not be carried out when only the PWM control is set to be carried out for the deceleration control. As shown in FIG. 14, the LIN communication processing portion 61 supplies information on request for brake-control at deceleration Gbk to the H-bridge driving processing portion 67.

The request for emergency stop of motor is supplied by the seventh bit d6 in the data 2 field. When the logic in the seventh bit d6 is "1", the power application to the motor is shut off forcibly. When the logic in the seventh bit d6 is "0", the state that the power application to the motor has been forcibly shut off is cancelled, and it becomes the state that the power application to the motor is possible (normal operating state). The LIN communication processing portion 61 supplies information on the request for emergency stop of motor Ksp to the operation permitting/prohibiting signals-processing portion 66. In a case of rotating the motor again after having stopped the motor urgently, the subsequent request for forced operation of motor is used. Meanwhile, the opening degree of door-designating data different from the one before may be given in the case of rotating the motor again after the motor is stopped urgently.

The request for forced operation of motor is supplied by the highest-order bit d7 in the data 2 field. When the logic in the highest-order bit is "1", the power application to the motor is started forcibly. A state becomes as the normal operating state when the logic in the highest-order bit is "0". The LIN communication processing portion 61 supplies information on the request for forced operation of motor Kst to the operation permitting/prohibiting signals-processing portion 66.

Meanwhile, in the present embodiment, the LIN input/output circuit 53 and the logic-circuit portion 55 structure a serial data communication portion, and the LIN communication processing portion 61 in the logic-circuit portion 55 structures a reception-processing portion. In addition, the H-bridge circuit portion 56 and the logic-circuit portion 55 structure an actuator driving controlling portion.

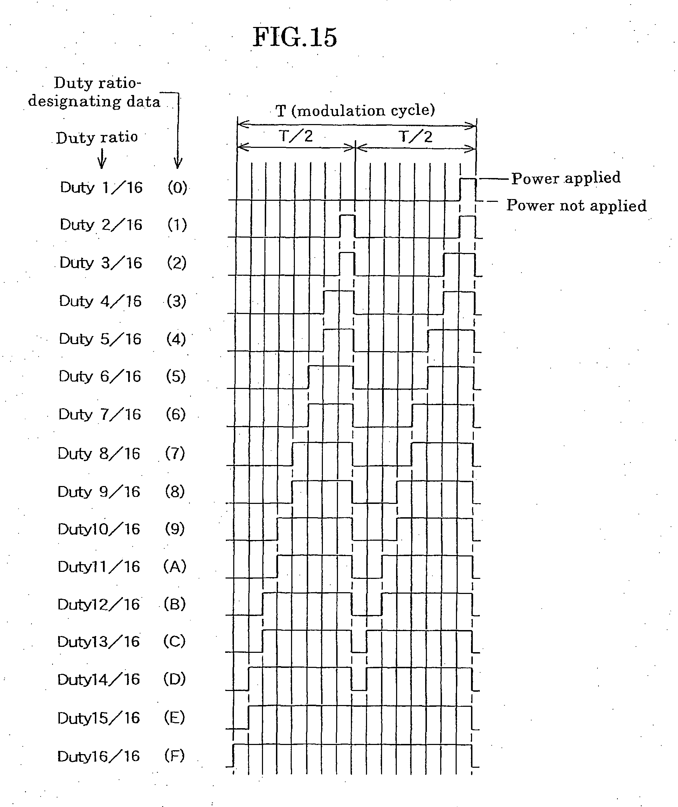

FIG. 15 is a diagram showing an example of switching the electric power supplied to the motor in 16 steps by the PWM control according to the second embodiment of the present invention. In the present embodiment, the duty ratio (Duty) is set to be in 16 steps from 1/16 to 16/16, and each of the duty ratios is designated by duty ratio-designating data represented in a hexadecimal form shown in a bracket. Also, one modulation cycle T of the PWM control is divided into 2 sections (T/2) of a former half and a latter half, and sections for applying the power to the electric motor are increased alternately in the former half and the latter half. Accordingly, a cycle of energization to the electric motor becomes T/2 from the duty ratio (Duty) 2/16 and above. Therefore, it is possible to reduce torque fluctuations (pulsation) in the output of the motor.

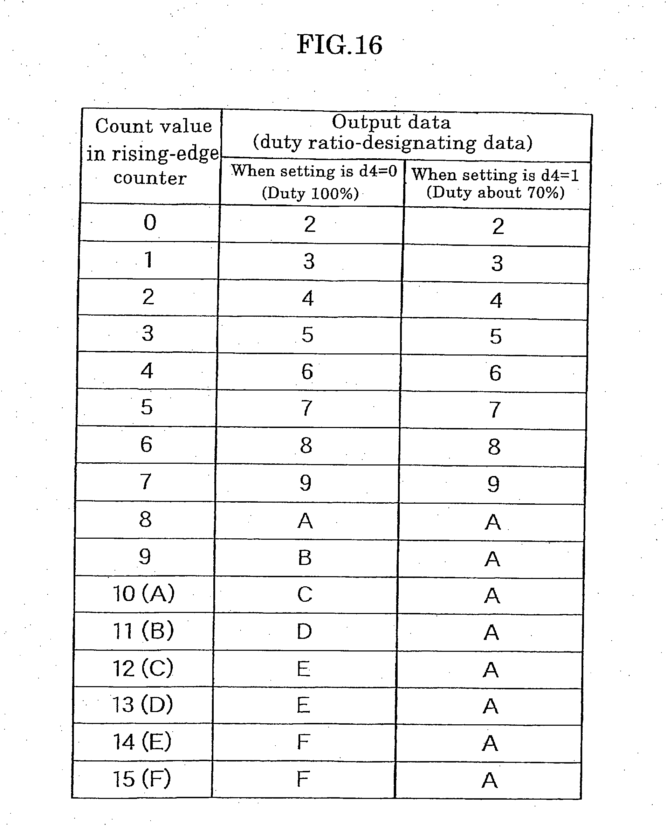

FIG. 16 is a diagram showing one example of the PWM-data map for the soft start at the time of activation of the motor according to the second embodiment of the present invention. As shown in FIG. 16, a map or a table for showing correspondence between a count value in a rising-edge counter and the duty ratio-designating data is previously registered in the PWM-data map 73. In the PWM-data map 73, the duty ratio-designating data for setting the upper limit of the duty ratio to be at 100 percent, and the duty ratio-designating data for setting the upper limit of the duty ratio to be at approximately 70 percent are stored, respectively. Meanwhile, in FIG. 16, references within the brackets in "count value in rising-edge counter" are references shown by the hexadecimal form. Also, output data (duty ratio-designating data) are shown by the hexadecimal form.

When activating the motor, the H-bridge driving processing portion 67 pluses (performs increment) the counter value of the rising-edge counter (not shown) by 1 (one) in every cycle which is decided based on the time for PWM-torque control. Thereafter, the H-bridge driving processing portion reads out a duty value of the duty ratio-designating data corresponding to the plused (incremented) count value from the PWM-data map 73, generates the driving signals Out1-Out4 which have been modulated with PWM modulation based on the read out duty value and supplies them to the H-bridge circuit portion (H-type bridge circuit) 56, thereby supplies the electric power to the electric motor 30 through the power-switching elements (for example, MOS-FETs) which are structuring each of the arms within the H-bridge circuit portion 56.

In a case where a difference between the opening degree of door-designating value (target value) (8-bit data) and the actual opening degree of door (present value) (8-bit) is over 16 (target value - present value ≧ 16) at the time when the soft start control is finished, the H-bridge driving processing portion 67 carries out the supplying of the electric power to the electric motor 30 with the condition designated in the bit d4 in the data 2 field (request for limiting electric power supplied to motor, more specifically, setting of the upper limit of the duty ratio). In other words, the H-bridge driving processing portion carries out the supplying of the electric power to the electric motor 30 continuously when the "duty 100%" has been set, and performs PWM drive of the motor with the duty ratio of approximately 70% when the "duty approximately 70%" has been set. Accordingly, the electric power supplied to the electric motor 30 is limited to approximately 70% of rated electric power (electric power at the time of the continuous power application). Therefore, number of rotations of the electric motor becomes lower than rated number of rotation, and thus the frequency of the noise and the noise level become reduced.

The H-bridge driving processing portion 67 carries out the process of the soft stop when an absolute value of a difference between the opening degree of door-designating value (target value) (8-bit data) and the actual opening degree of door (present value) (8-bit) becomes less than 15 ( | target value - present value | ≦ 15). Meanwhile, the process of the soft stop is executed only when the request for output-PWM control is set to be carried out. When the request for output-PWM control has not been set, the H-bridge driving processing portion 67 carries out normal servocontrol such that the difference between the opening degree of door-designating value (target value) (8-bit data) and the actual opening degree of door (present value) (8-bit) becomes zero.

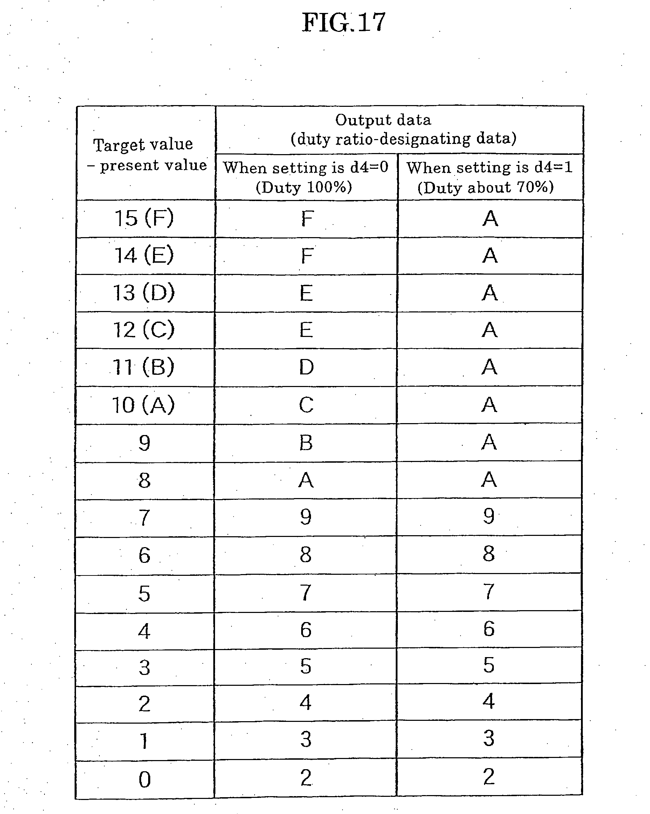

FIG. 17 is a diagram showing one example of a PWM-data map for a soft stop according to the second embodiment of the present invention. In the PWM-data map (correspondence table of duty ratio) 73, duty ratio-setting data is previously registered corresponding to the absolute value of a difference between the target value and the present value ( | target value - present value |). In the PWM-data map 73, the duty ratio-designating data for setting the upper limit of the duty ratio to be at 100 percent, and the duty ratio-designating data for setting the upper limit of the duty ratio to be at approximately 70 percent are stored, respectively. Meanwhile, in FIG. 17, references within brackets in a column of the absolute value of the difference between the target value and the present value (| target value - present value |) are references shown by the hexadecimal form. Also, output data (duty ratio-designating data) are shown by the hexadecimal form.

The H-bridge driving processing portion 67 reads out the duty ratio-setting data corresponding to the absolute value of the difference between the target value and the present value (| target value - present value | ) from the PWM-data map (correspondence table of duty ratio) 73, generates the driving signals Outl-Out4 which have been modulated with the PWM modulation based on read out duty value and supplies them to the H-bridge circuit portion 56, thereby supplies the electric power to the electric motor 30 through the power-switching elements (for example, MOS-FETs) which are structuring each of the arms within the H-bridge circuit portion 56. As shown in FIG. 17, since the electric power to be supplied to the electric motor 30 is configured to be made less as the difference between the target value and the present value becomes less, it is possible to stop the door at the position corresponding to the target value or at the position near thereto with high precision. Also, it is possible to reduce the noise generated at the time when the motor stops.

Meanwhile, the PWM-data map (correspondence table of duty ratio) 73 is structured by using a nonvolatile memory which is capable of electrically rewriting data (for example, EEPROM, etc.). It may be configured that the LIN communication processing portion 61 receives correspondence data such as deviation supplied from the host device or the like to duty ratio, and updates the data in the PWM-data map (correspondence table of duty ratio) 73. This makes it possible to set suitable correspondence of deviation to duty ratio with respect to each of the object to be controlled even in a case in which the objects to be controlled are different from each other such as the difference in kind of door or the like.

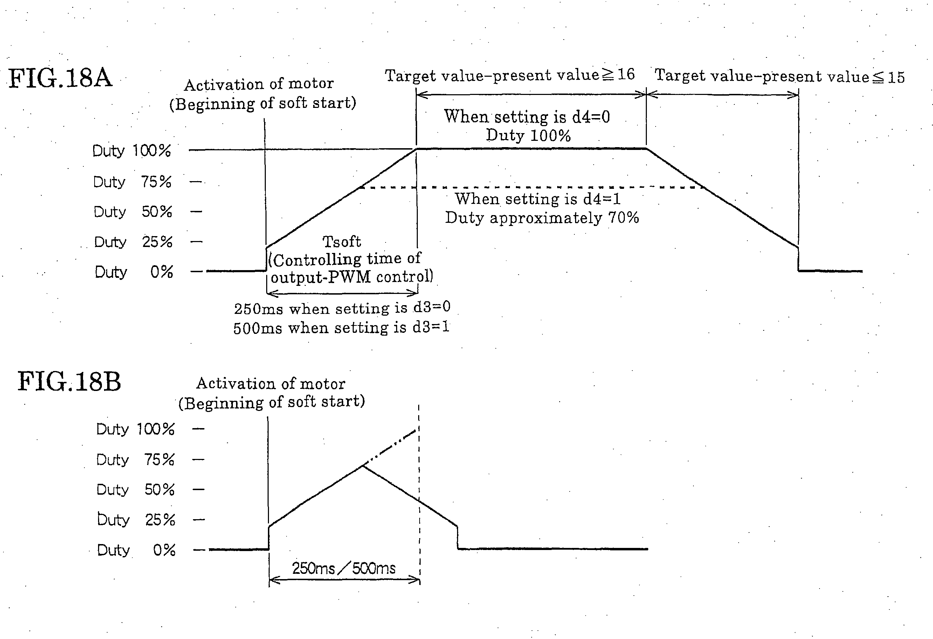

FIGS. 18A and 18B are graphs showing change-characteristic of the duty ratio from the activation of the motor to stopping of the motor when the soft start/soft stop control is carried out according to the second embodiment of the present invention. Meanwhile, since the duty ratio and the electric power supplied to the electric motor are in a proportionality relation, this makes that the graphs shown in FIGS. 18A and 18B represent change-characteristic of the electric power supplied to the electric motor. Meanwhile, FIG. 18A shows the change-characteristic of the duty ratio from the activation of the motor to the stopping of the motor, while FIG. 18B shows the change-characteristic of the duty ratio in a case where the control of the motor is shifted to carry out the soft stop control from the middle of the performance of the soft start control, due to the difference between the opening degree of door-designating value (target value) and the actual opening degree of the door (present value) being lower than a predetermined value at the time while the soft start control in the activation of the motor is carried out.

As shown in FIG. 14A, when the opening degree of door-designating value (target value) is set, the activation of the motor (soft start control) is carried out on the basis of the PWM-data map for soft start shown in FIG. 16. The supplying of the electric power to the electric motor 30 is continuously carried out with the duty ratio of the upper limit designated by the bit d4 in the data 2 field, during when the absolute value of the difference between the opening degree of door-designating value (target value) (8-bit data) and the actual opening degree of door (present value) (8-bit) is over 16 ( | target value - present value | ≧ 16). In particular, as shown in FIG. 18A, the electric power is supplied to the motor with the duty of 100% when setting is d4=0 (in other words, the power supplying to the motor is not limited), and when the setting is d4=1, the power supplying to the motor is limited by setting the duty of approximately 70% as the upper limit.

In addition, the soft stop control of the motor is carried out based on the PWM-data map for the soft stop shown in FIG. 17 from the point when the absolute value of the difference between the opening degree of door-designating value (target value) (8-bit data) and the actual opening degree of door (present value) (8-bit) becomes less than 15 as the judgment value of starting of deceleration control (| target value - present value | ≦ 15), and thereby the motor is stopped.

Meanwhile, as shown in FIG. 18B, when the absolute value of the difference between the opening degree of door-designating value (target value) (8-bit data) and the actual opening degree of door (present value) (8-bit) becomes less than 15 ( | target value - present value | ≦ 15), the control of the motor is shifted to the soft stop control at that point, and the motor is stopped by the soft stop control.

The H-bridge driving processing portion 67 judges whether or not to apply the regeneration brake at the time of the deceleration on the basis of the information on request for brake-control at deceleration Gbk, when carrying out the soft stop control of the motor based on the PWM-data map for the soft stop shown in FIG. 17.

Here, the regeneration brake is to apply a brake (damping) to rotation of the electric motor 30 by shunting the coil of the electric motor 30 via the semiconductor switching elements structuring the H-bridge circuit portion 56 at the period within the PWM cycle when the electric power is not supplied to the electric motor 30 (here, the period when the electric power is not supplied to the motor is represented as the "OFF-duty period", and the period when the electric power is supplied to the motor is represented as the "ON-duty period").

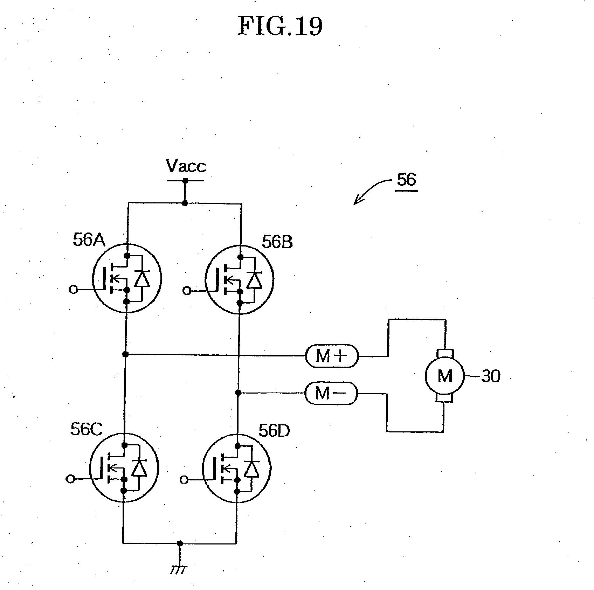

FIG. 19 is a diagram showing a structure of the H-bridge circuit portion according to the second embodiment of the present invention. In the present embodiment, the H-bridge circuit portion 56 is structured by four N channel-MOS type transistors (hereinafter, referred to as transistors) 56A-56D. Gates of each of the transistors 56A-56D shown in FIG. 19 are respectively driven on the basis of the four PWM signal outputs (driving signals) Out1-Out4 generated by the H-bridge driving processing portion 67 shown in FIG. 14. When both the transistor 56A and the transistor 56D are controlled to be in a conducting state, the battery power supply Vacc is supplied to the terminal M+ which is one of the terminals of the coil of the electric motor 30, while the ground-power supply is supplied to the terminal M- which is the other one of the terminals of the coil of the electric motor 30. Thereby, the electric motor 30 is driven normally. When both the transistor 56B and the transistor 56C are controlled to be in the conducting state, the electric motor 30 is driven reversely.

In the present embodiment, the PWM control for the motor to be rotated normally is carried out by controlling the transistor 56D, which is a lower arm, so as to be in the conducting state and controlling a conducting period of the transistor 56A, which is an upper arm. Also, the PWM control for the motor to be rotated reversely is carried out by controlling the lower arm transistor 56C to be in the conducting state, and controlling the conducting period of the upper arm transistor 56B. Furthermore in the present embodiment, each of the lower arm transistors 56C and 56D are controlled to be in the conducting state and both ends of the coil of the electric motor 30 are shunted through the respective transistors 56C and 56D, thereby the regeneration brake is applied. The regeneration brake may be applied by controlling each of the upper arm transistors 56A and 56B to be both in the conducting state.

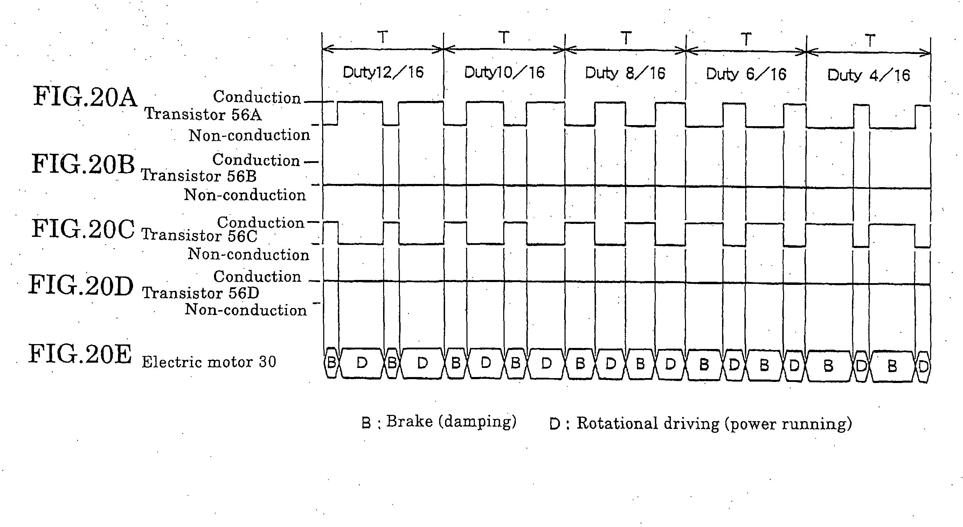

FIGS. 20A-20E are diagrams showing an operation of the apparatus for controlling motor according to the second embodiment of the present invention during deceleration (soft stop). FIGS. 20A-20E show deceleration control (soft stop) in the state where the motor rotates normally. For convenience of explanation, an example of a case is shown here in which the duty ratio is reduced from 12/16 to 4/16 as the present value of the object to be controlled becomes close to the target value. Meanwhile, a reference sign T in the drawing represents a PWM cycle (modulation cycle). In the present embodiment, the PWM cycle T is set about 500 *µ*S (500 microseconds). A reference sign B in the drawing represents a period for braking, and a reference sign D represents a period when the motor is rotated and driven.

As shown in FIG. 20B, the upper arm transistor 56B is caused to be in an OFF state (non-electric conduction), the lower arm transistor 56D is caused to be in the conducting state as shown in FIG. 20D, and the upper arm transistor 56A is caused to be driven with switching so as to be in ON (electric conduction) state / OFF (non-electric conduction) state corresponding to the duty ratio as shown in FIG. 20A. As shown in FIG. 20C, the lower arm transistor 56C is caused to be in the ON (electric conduction) state at the timing when the upper arm transistor 56A becomes in the OFF (non-electric conduction) state. As shown in FIG. 20E, the time, during when the lower arm transistor 56C is in the ON (electric conduction) state becomes the brake period B, and the time, during when the upper arm transistor 56A is in the ON (electric conduction) state becomes the rotation-driving period D.

The timing when the transistor 56A goes OFF and the timing when the transistor 56C goes ON are represented in FIGS. 20A-20E as if they coincide with each other, however, short-circuiting between power supplies causes when the upper arm transistor 56A and the lower arm transistor 56C become in the ON state simultaneously and thus an excessive current flows. Accordingly, there is provided dead time so that the transistor 56C is turned ON after the transistor 56A is turned OFF, and there is also provided the dead time such that the transistor 56A becomes in the ON state after the transistor 56C has been turned into the OFF state, because of the similar reason mentioned above.

As shown in FIG. 20E, since the rotational driving and the brake of the electric motor 30 are repeated alternately, and at the same time, proportion of the brake period B within the PWM cycle (modulation cycle) T is increased, the deceleration is carried out sufficiently by the time the object to be controlled reaches a target position, thus accuracy in a stopping position of the object to be controlled is improved. In addition, it is possible to reduce the noise generated when the object to be controlled stops.

In a case where the high accuracy in the stopping position is not required, or in a case in which the generation of the noise does not raise any issue, it is set by the request for brake-control at deceleration that the brake control is not to be carried.

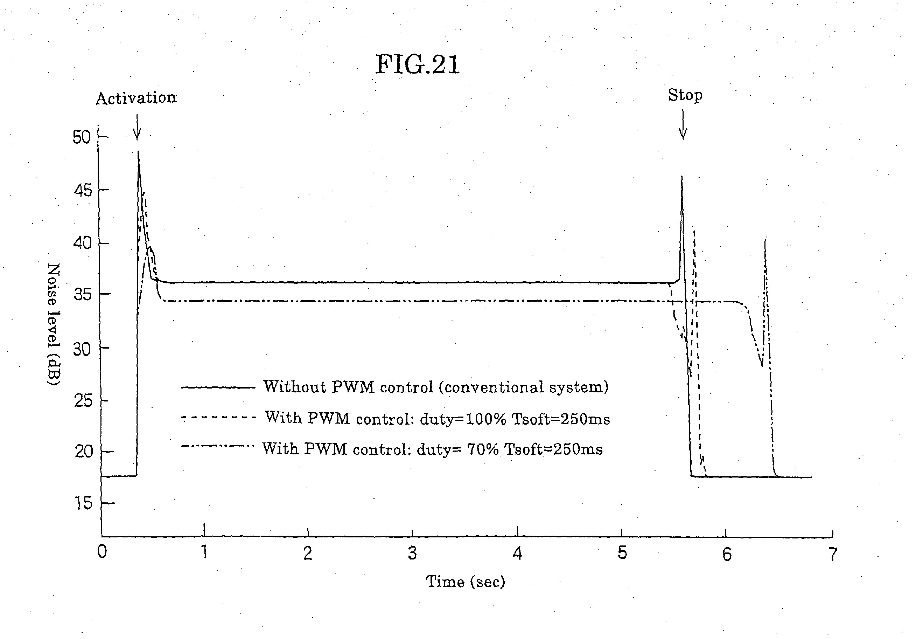

FIG. 21 is a graph showing a measurement result of the noise level when the electric motor type actuator is driven by the apparatus for controlling motor according to the second embodiment of the present invention. In FIG. 21, a solid line represents a noise characteristic of a conventional driving system without the PWM control (without soft start/soft stop control). Since the soft start/soft stop control is not carried out in the conventional driving system, the noise level is large when the motor activates and stops.

A dotted line represents a noise characteristic when the actuator is driven with a condition of the duty-100% (electric power supplied to the motor is not limited) with the PWM control (with soft start/soft stop control, controlling time of output-PWM control = 250ms). The noise level is reduced at the time of the activation and the stopping of the motor by carrying out the soft start/soft stop control (reduced by approximately 4dB as compared with the conventional driving system).

A chain line represents a noise characteristic when the actuator is driven with a condition of the duty-approximately 70% (electric power supplied to the motor is limited) with the PWM control (with soft start/soft stop control, controlling time of output-PWM control Tsoft = 250ms), The noise level is reduced at the time of the activation and the stopping of the motor by carrying out the soft start/soft stop control (reduced by approximately 4dB-7dB as compared with the conventional driving system). Also, since the electric power supplied to the motor is limited, the noise level (stationary noise) is reduced by approximately 2dB less than the conventional system. Meanwhile, since the electric power supplied to the motor is limited, number of rotation of the motor is reduced and thus a point of time when the motor stops is delayed for approximately one second as compared with the case where the electric power supplied to the motor is not limited (time for operating the motor is increased at approximately 15%).

The measurement result of the noise level shown in FIG. 21 is not the result in which brake control is used together with the deceleration carried out by the PWM duty control. However, it has been confirmed that it is possible to further reduce the noise generated when the motor stops by using the brake control in conjunction with the deceleration carried out by the PWM duty control.

As described above, although the example in which the opening degree of various doors provided in the air conditioning device for the automobile by using the apparatus for controlling motor has been explained in the present embodiment, it is possible to apply the apparatus for controlling motor according to the present invention to various uses including actuators for linearly moving the object to be controlled and so on, not only for the use in the door actuators.

Also, the example in which the logic-circuit portion 55 is in the circuitry which is mainly based on hardware has been explained in the present embodiment, but one chip microcomputer or the like may be used for the logic-circuit portion 55 to realize the function of the logic-circuit portion by program control.

Meanwhile, since other parts in the second embodiment are substantially the same as the first embodiment, their explanations are omitted.

As described in the foregoing, since the apparatus for controlling motor according to the second embodiment carries out the driving and the braking of the electric motor alternately within the PWM cycle at the time of the deceleration, it is possible to decelerate the motor sufficiently by the time the object to be controlled reaches the target value of stopping, thus it is possible to stop the object to be controlled at the target position in high accuracy. Also, since the deceleration is carried out sufficiently, it is possible to reduce the noise at the time of the stopping of the motor. In addition, because it is configured that a point of starting of deceleration control is judged based on the deviation between the target value-data and the present value data, it is not necessary to add new hardware or software for the judgment of starting of deceleration control.

### [Third embodiment]

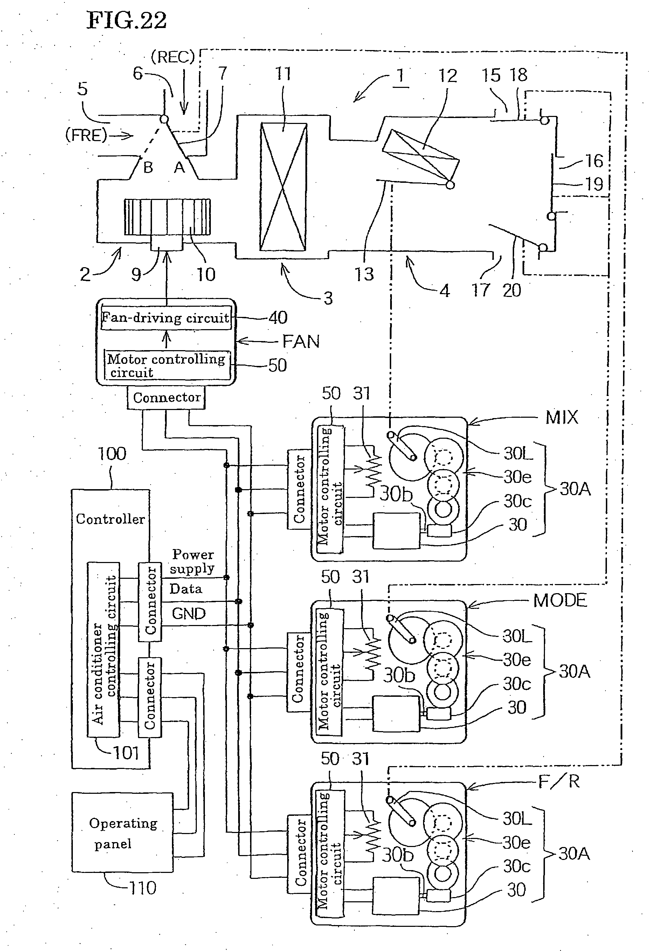

Hereinafter, a third embodiment of the air conditioning device for the automobile applied with the apparatus for controlling motor according to the present invention will be described with reference to FIG. 22 to FIG. 43.

Meanwhile, parts in the present embodiment, which are same or equivalent to the above-mentioned embodiments, will be explained by attaching same reference numerals used therein.

FIG. 22 is a diagram schematically showing an entire structure of an air conditioning device for the automobile (car-air conditioner) applied with the apparatus for controlling motor according to the third embodiment of the present invention. The air conditioning device for the automobile is structured by an air conditioning device body 1, a fan-driving unit FAN, respective door-actuator units MIX, MODE and F/R, a controller 100, and an operating panel 110.

The air conditioning device body 1 is structured by an intake unit 2 for selectively taking in fresh air or re-circulating air, a cooling unit 3 for cooling the taken-in air, and a heater unit 4 for performing blending and heating of the taken-in air and blowing the blended air to a vehicle-interior thereafter.

The intake unit 2 is provided with a fresh air-inlet 5 and a re-circulating air-inlet 6, and an intake door 7 for adjusting proportion of the fresh air and the re-circulating air to be taken into the unit is rotatably provided at a portion where the inlets 5 and 6 are connected.
The intake door 7 is rotated by the intake door-actuator unit F/R.

The intake unit 2 includes a fan (blower-fan) 10 which is rotated by a fan-motor 9 at a predetermined speed. The fresh air or the re-circulating air is selectively sucked in by rotation of the fan 10 from the fresh air-inlet 5 or the re-circulating air-inlet 6 according to a position of the intake door 7, and also, voltage applied to the fan-motor 9 is varied to change the rotational speed of the fan 10, thereby an amount of wind blown to the vehicle-interior is adjusted. In addition, rotation of the fan-motor 9 is controlled by the fan-driving unit FAN. The fresh air is introduced (FRE) when the intake door 7 is at an "A" position in FIG. 22, and the re-circulating air is circulated (REC) when the intake door 7 is at a "B" position in the same.

An evaporator 11 which constitutes a refrigeration cycle is provided in the cooling unit 3. A refrigerant is supplied to the evaporator 11 when a compressor which is not shown is operated, thereby the taken-in air is cooled by a heat exchange with the refrigerant.

A heater core 12 in which engine-cooling water is circulated is provided in the heater unit 4, and a mix door 13 for adjusting proportion of an amount of air passing through the heater core 12 and an amount of air detours the heater core 12 is rotatably provided above the heater core 12. The mix door 13 is rotated by the mix door-actuator unit MIX. A rate of blending of the heated wind which has passed through the heater core 12 and which is heated by a heat exchange with the engine-cooling water, and the cooled wind which has detoured around the heater core 12 and which is thus not heated by the heater core, is varied by changing a degree of opening of the mix door 13, thereby a temperature of air blown to the vehicle interior is adjusted.

The air which the temperature thereof is adjusted is supplied to the vehicle interior from one of a defrosting-blowout hole 15, a vent blowout hole 16 and a foot blowout hole 17. A defrosting door 18, a vent door 19 and a foot door 20 are rotatably provided to those blowout holes 15-17, respectively. The defrosting door 18, the vent door 19 and foot door 20 (hereinafter these are collectively called as mode doors) are rotated by the mode door-actuator units MODE. A blowout mode is arbitrary set by combining opened-clpsed states of each of the blowout holes 15-17. Meanwhile, only one mode door-actuator unit is shown in FIG. 22 for convenience of illustration, which illustrations of other two are omitted.

Each of the actuator units MIX, MODE and F/R are structured by combining inside of a case (chassis) thereof an electric motor type actuator 30A, a potentiometer 31 (position detecting portion of object to be controlled) which a value of resistance is changed in conjunction with rotation of an actuator lever 30L, and a motor controlling circuit 50 which is constituted by an exclusively-used IC (custom IC).

The electric motor type actuator 30A is provided with an electric motor 30, a worm gear 30c attached to an output shaft 30b of the electric motor 30, a reduction gear-array mechanism 30e which engages with the worm gear 30c, and the actuator lever 30L rotated via the worm gear 30c and the reduction gear-array mechanism 30e.

By transmitting the rotation of the actuator lever 30L to, for example, the intake door 7 via a link mechanism which is not shown, the intake door 7 is rotated. Voltage which corresponds to a rotational position of the door (actual degree of opening of door) is outputted from the potentiometer 31.

The fan-driving unit FAN is structured by storing inside of a case thereof the motor controlling circuit 50 constituted by the exclusively-used IC (custom IC) and a fan-driving circuit 40. The motor controlling circuit 50 is similar to the one which is provided in each of the actuator units MIX, MODE and F/R.

Each of the actuator units MIX, MODE, F/R, and the fan-driving unit FAN has a three-terminal connector. A three-core cable having a power supply line, a ground (GND) line and a data line (BUS) connects each of the actuator units MIX, MODE, and F/R, and the fan-driving unit FAN, with the controller (host device) 100.

The operating panel 110 includes various kinds of operating switches and various indicators. The operating panel 110 and the controller 100 are connected to each other with the three-core cable, thereby it is structured that electric power is supplied from the controller 100 to the operating panel 110 and at the same time, serial data communication is carried out between the controller 100 and the operating panel 110. When the operating switches or the like are operated, the operating panel 110 supplies information inputted by the operation to the controller 100.

An air conditioner controlling circuit 101 which structures the controller 100 controls operation of an air conditioning device (air conditioner) on the basis of an input of the operation from the operating panel 110 and input from various temperature sensors or the like which are not shown and at the same time, displays an operational state or the like on the various indicators provided on the operating panel 110.

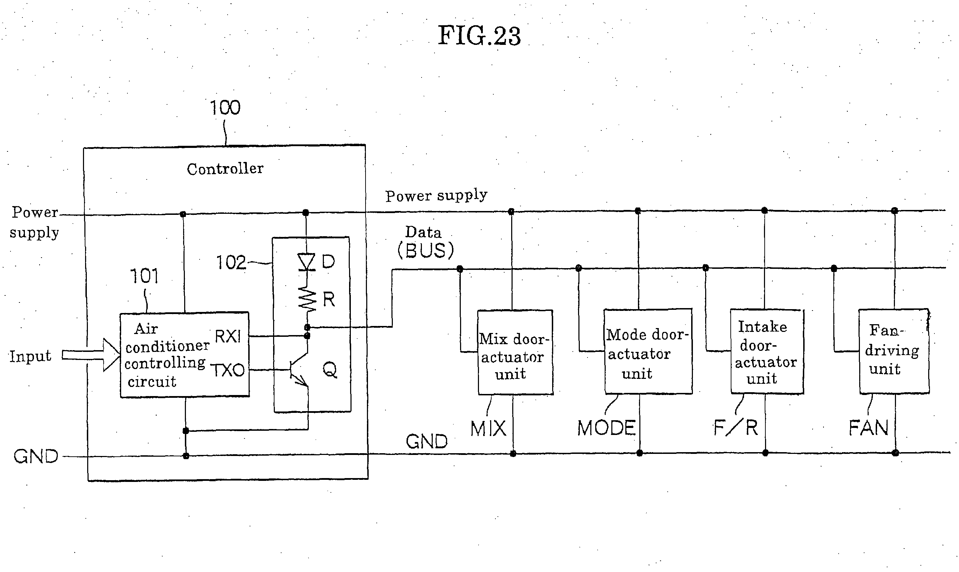

FIG. 23 is a diagram showing a structure of a communication system in the air conditioning device for the automobile (car-air conditioner) applied with the apparatus for controlling motor according to the third embodiment of the present invention. As shown in FIG. 23, the electric power is supplied to each of the actuator units MIX, MODE and F/R, and the fan-driving unit FAN from the controller 100.

The bidirectional serial data communication in an asynchronous type is carried out via the data line (BUS) between the controller 100 and each of the actuator units MIX, MODE, F/R, and the fan-driving unit FAN. A communication protocol complies with LIN (Local Interconnect Network).

The data line (BUS) is pulled up through a pull-up resistor (for example, one kilo ohm) R and a backflow prevention diode D which are provided inside of a data input-output circuit 102 of the controller 100 to a positive pole power supply. Switching of a NPN grounded-emitter transistor Q is carried out based on a send-data signal which is outputted from a send-data output terminal TXO of the air conditioner controlling circuit 101, thereby sending of data is performed. Reception of data is performed by making a binary decision on voltage in the data line (BUS) supplied to a reception-data input terminal RXI on the basis of a predetermined voltage threshold value.

The serial data communication is carried out by setting the controller 100 as a "master", and setting each of the actuator units MIX, MODE, and F/R and the fan driving unit FAN as "slaves". The slaves detect a start bit for taking character synchronization, and generate a bit clock to read-in bit information.

The air conditioner controlling circuit 101 which structures the controller 100 controls the entire operation of the air conditioning device (air conditioner) on the basis of the input of the operation from the operating panel 110 shown in FIG. 22 and the input from the various temperature sensors or the like which are not shown and at the same time, displays the operational state or the like on the various indicators provided on the operating panel 110.

The air conditioner controlling circuit 101 controls operations of each of the actuator units MIX, MODE, and F/R by sending command data such as data on target value of the opening degree of door to each of the actuator units MIX, MODE, and F/R. In addition, the air conditioner controlling circuit 101 requests each of the actuator units MIX, MODE, and F/R to send information regarding the operational state or the like thereof, and carries out monitoring and conducts a diagnosis and so on of the operational states of each of the actuator units MIX, MODE, and F/R, by receiving the sent information.

The air conditioner controlling circuit 101 controls rotational speed of the fan-motor 9 by sending command data regarding an operation of the fan motor to the fan-driving unit FAN. Also, the air conditioner controlling circuit 101 carries out monitoring and conduct a diagnosis and so on of an operational state of the fan-driving unit FAN, by requesting sending of information regarding the operational state thereof or the like to the fan-driving unit FAN and receiving the information.

Meanwhile, identification (ID) codes (addresses) which are different from each other are respectively allocated to each of the actuator units MIX, MODE, and F/R and the fan-driving unit FAN.

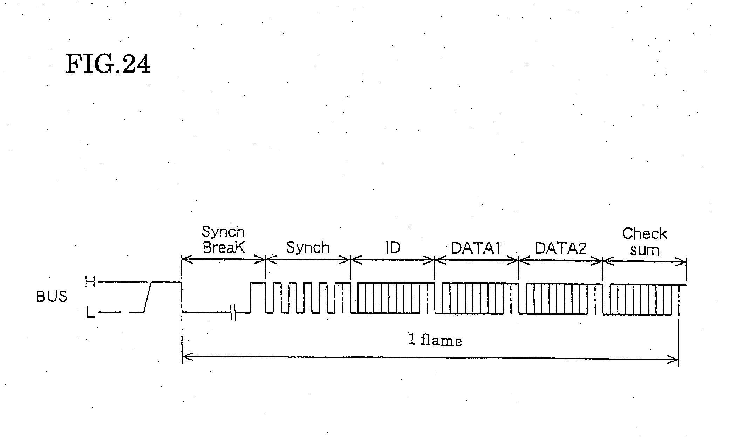

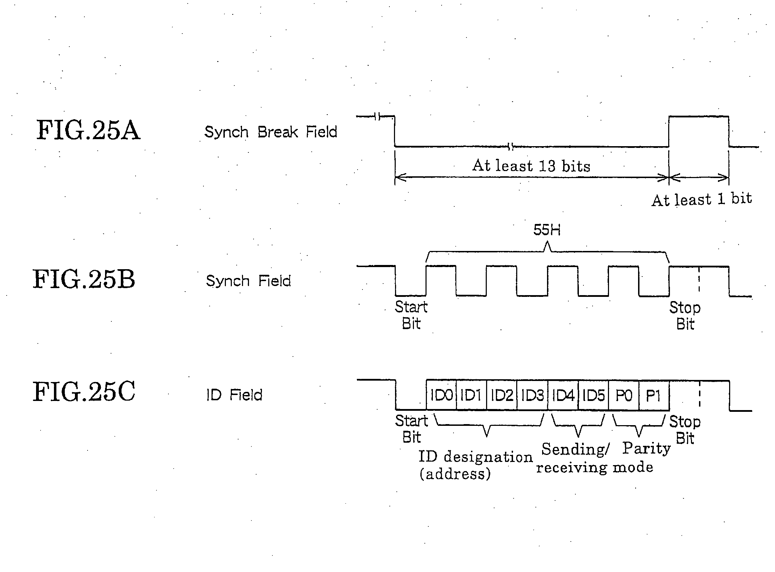

FIG. 24 is a diagram showing a data structure within one frame of a LIN communication standard according to the third embodiment of the present invention, and FIGS. 25A-25F are diagrams showing data structures in each field within 1 frame of the LIN communication standard according to the third embodiment of the present invention. As shown in FIG. 24, 1 frame of the LIN communication standard is structured by a synch-break field (Synch Break), a synch field (Synch), an ID field (ID), a data one field (DATA 1), a data 2 field (DATA 2), and a checksum field (Checksum).

As shown in FIG. 25A, the synch-break field is configured to be an "H" level during at least one bit period after an "L" level has continued during at least 13-bit period. The synch-break field is for taking frame synchronization.

As shown in FIG. 25B, the synch field is structured by a start bit, "55" H-data if it is represented in a hexadecimal form as a bit-synchronization signal, and a stop bit having at least one bit period.
The synch field is used for taking bit synchronization.

As shown in FIG. 25C, the ID field is structured by a start bit, 4 bits of identification (ID) codes (ID0-ID3) for selecting and designating a recipient of the communication, 2 bits of receiving/sending requests (ID4, ID5) for setting sending/receiving modes of the slaves, 2 bits of parity check data (P0, P1), and at least 1 bit period of a stop bit.

In the present embodiment, one of the respective door actuator units MIX, MODE and F/R, and the fan-driving unit FAN is designated by the ID field, and at the same time, a mode of operation after the DATA 1 field is designated. In particular, it is designated by the data 1 field and the data 2 field whether the actuator unit MIX, MODE or F/R, or the fan-driving unit FAN as the slave becomes a receiving-operation mode for receiving the various commands from the controller 100 as the master, or a sending-operation mode for sending the operational state or the like of the actuator unit MIX, MODE or F/R, or the fan-driving unit FAN to the controller 100.

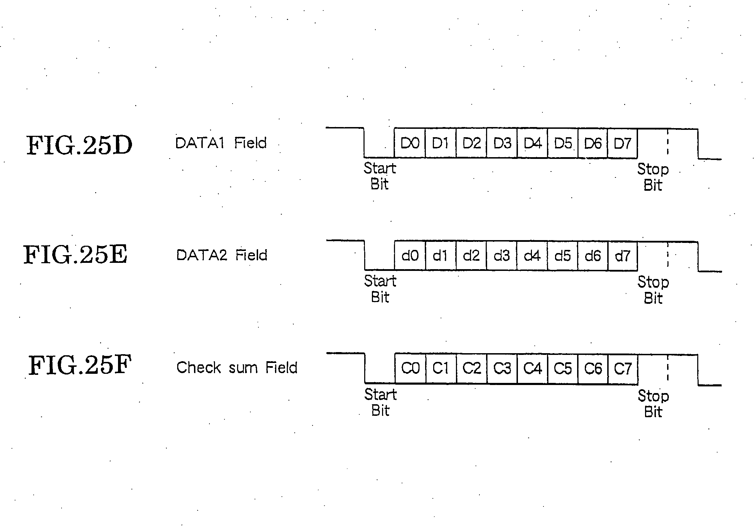

As shown in FIG. 25D, the data 1 field is structured by a start bit, 8 bits of data (D0-D7), and at least 1 bit period of a stop bit. In the present embodiment, the controller 100, when it has designated the receiving-request in the ID field, supplies opening degree of door-designating data (target value-data) (information for designating target position of object to be controlled) to the actuator unit MIX, MODE or F/R by using the data 1 field, and at the same time, supplies duty ratio-designating data (duty-designating information) of the PWM control where appropriate. Whether the data in the data 1 field is the opening degree of door-designating data or the data relating to the designation of the duty ratio or the like is designated in the data 2 field. In addition, the controller 100 supplies to the fan-driving unit FAN data relating to designation of duty ratio of the PWM control or data relating to designation of motor rotational speed (information on designation relating to rotational speed of motor).

When the sending-request is designated in the ID field, the actuator unit MIX, MODE or F/R sends data of present opening degree of door (present position data) (information on present position of object to be controlled) in the data 1 field. The fan-driving unit FAN sends data corresponding to a current value of the fan-motor 9, when the sending-request is designated in the ID field.

As shown in FIG. 25E, the data 2 field is structured by a start bit, 8 bits of data (d0-d7), and at least 1 bit period of a stop bit. In the present embodiment, the controller 100, when it has designated the receiving-request in the ID field, supplies to the actuator units MIX, MODE and F/R, and the fan-driving unit FAN various commands such as a request for clearing flag of communication error, a request for clearing diagnosis flag, a request for setting operational condition when motor starts/stops (a request for soft start/soft stop control and a request for setting time of soft start), a request for designating control mode (information on designating control mode), a request for designating data-classification of data 1 field, a request for emergency stop of motor, and a request for forced operation of motor, by using the data 2 field.

When the sending-request is designated in the ID field, the actuator units MIX, MODE and F/R, and the fan-driving unit FAN (slaves) supply information regarding the operational state and error detection such as an over-current-detected flag, a motor-currently stopped-flag, a motor-rotating flag, a motor-reversely rotating flag, a received ID parity error-flag, an over-temperature-detected flag, a received sum check error-flag, and an over-voltage-detected flag, by the data 2 field.

As shown in FIG. 25F, the checksum field is structured by a start bit, 8 bits of data (C0-C7), and at least 1 bit of period of a stop bit. In the present embodiment, 8 bits of inverted data which is a result of having added data in the data 1 field and the data in the data 2 field, and further added thereto carry-data of the added result, are sent as checksum data.

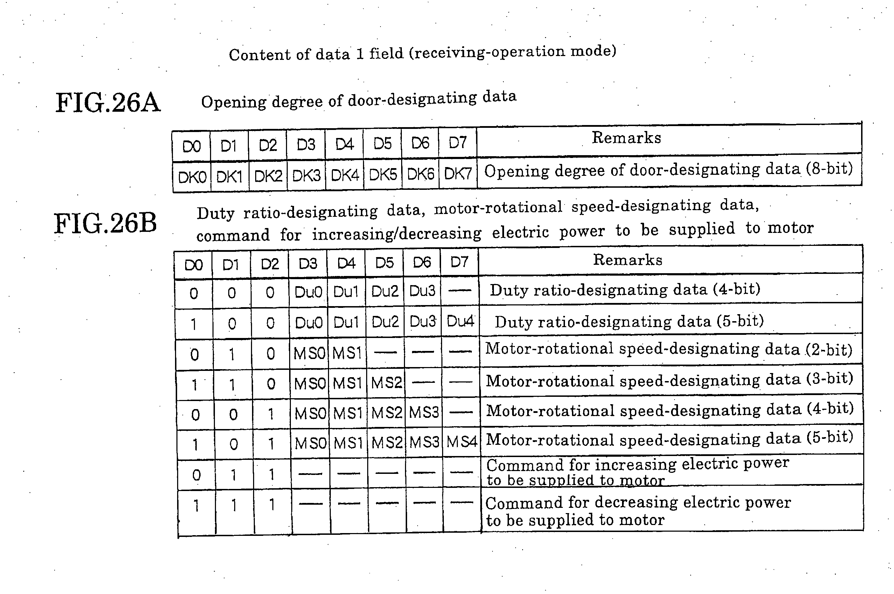

FIGS. 26A and 26B are diagrams showing one example of content of the data 1 field in the receiving-operation mode according to the third embodiment of the present invention. As shown in FIG. 26A, the opening degree of door-designating data (DK0-DK7) are supplied in data having 8 bits. Also, as shown in FIG. 26B, when low-order 3 bits D0, D1 and D2 in the data 1 field of the receiving-operation mode are "0, 0, 0", the duty ratio-designating data (Du0-Du6) which are in 4-bit structure are supplied, and when the low-order 3 bits D0, D1 and D2 are "1, 0, 0", the duty ratio-designating data in 5-bit structure are supplied.

When the low-order 3 bits D0, D1 and D2 in the data 1 field of the receiving-operation mode are "0, 1, 0", the motor-rotational speed-designating data MS0, MS1 (data for setting the rotational speed of the motor in 4 steps, which are maximum speed, high speed, medium speed and low speed) (rotational speed-designating information) which are in 2-bit structure are supplied, and when the low-order 3 bits D0, D1 and D2 are "1, 1, 0", the motor-rotational speed-designating data MS0, MS1 and MS2 (data for setting the rotational speed of the motor in 8 steps) which are in 3-bit structure are supplied. In addition, when the low-order 3 bits D0, D1 and D2 are "0, 0, 1", the motor-rotational speed-designating data MS0, MS1, MS2 and MS3 (data for setting the rotational speed of the motor in 16 steps) which are in 4-bit structure are supplied, and when the low-order 3 bits D0, D1 and D2 are "1, 0, 1", the motor-rotational speed-designating data MS0, MS1, MS2, MS3 and MS4 (data for setting the rotational speed of the motor in 32 steps) which are in 5-bit structure are supplied.

Moreover, when the low-order 3 bits D0, D1 and D2 in the data 1 field of the receiving-operation mode are "0, 1, 1", a command for increasing electric power to be supplied to motor (a request for increasing electric power to be supplied to motor) is supplied, and when the low-order 3 bits D0, D1 and D2 are "1, 1, 1", a command for decreasing electric power to be supplied to motor (a request for decreasing electric power to be supplied to motor) is supplied.

Meanwhile, a sign "-" in FIG. 26B represents that there is no significant information included therein, and its logic may either be "0" or "1". In the present embodiment, logic levels in the portions indicated by "-" have been suitably set so that "0" or "1" does not continue.

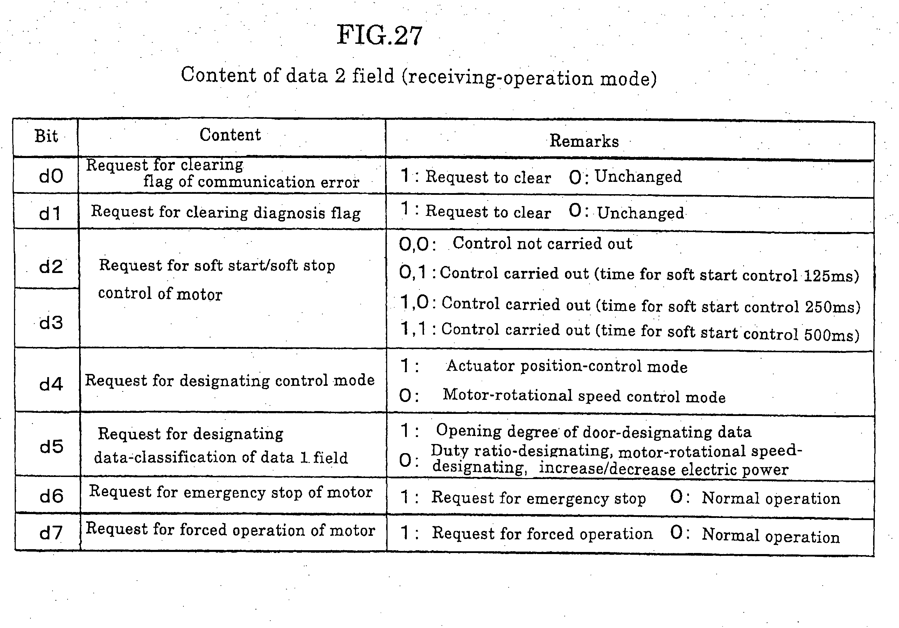

FIG. 27 is a diagram showing one example of content of the data 2 field in the receiving-operation mode. The request for clearing flag of communication error is supplied by a lowest-order bit d0 in the data 2 field. When logic in the lowest-order bit d0 is "1", it is requested to clear the flag of communication error. When the logic in the lowest-order bit d0 is "0", a state of the communication error flag will not be changed.

The request for clearing diagnosis flag is supplied by a second bit d1 in the data 2 field. When logic in the second bit d1 is "1", it is requested to clear the diagnosis flag. A state of the diagnosis flag will not be changed when the logic in the second bit d1 is "0".

The request for soft start/soft stop control of the motor is supplied by third and fourth bits d2 and d3 in the data 2 field. Soft start/soft stop control will not be carried out when logic in the bits d2 and d3 are "0, 0". When the logic in the bits d2 and d3 are "0, 1", the soft start/soft stop control is requested and time for soft start control is set as 125ms. In addition, when the logic in the bits d2 and d3 are "1, 0", the soft start/soft stop control is requested and the time for soft start control is set as 250ms. When the logic in the bits d2 and d3 are "1, 1", the soft start/soft stop control is requested and the time for soft start control is set as 500ms.

The request for designating control mode is supplied by a fifth bit d4 in the data 2 field. When logic in the bit d4 is "1", an actuator position-control mode is designated. A motor-rotational speed control mode is set when the logic in the bit d4 is "0".

The request for designating data-classification of data 1 field is supplied by a sixth bit d5 in the data 2 field. When logic in the bit d5 is "1", it is designated that the data supplied by the data 1 field is the opening degree of door-designating data. When the logic in the bit d5 is "0", it is designated that the data supplied by the data 1 field is one of the duty ratio designating, the motor rotational speed designating, or the command for increasing or reducing electric power to be supplied to motor, shown in FIG. 26B. Whether the data supplied by the data 1 field is the duty ratio designating, the motor rotational speed designating, or the command for increasing/reducing electric power to be supplied to motor, is designated by the low-order 3 bits of the data supplied therefrom.

The request for emergency stop of motor is supplied by a seventh bit d6 in the data 2 field. It is requested to stop the motor urgently when logic in the bit d6 is "1". When the logic in the bit d6 is "0", a normal operation is carried out.

The request for forced operation of motor is supplied by a highest-order bit d7 in the data 2 field. It is requested to operate the motor forcibly when logic in the bit d7 is "1". When the logic in the bit d7 is "0", a normal operation is carried out.

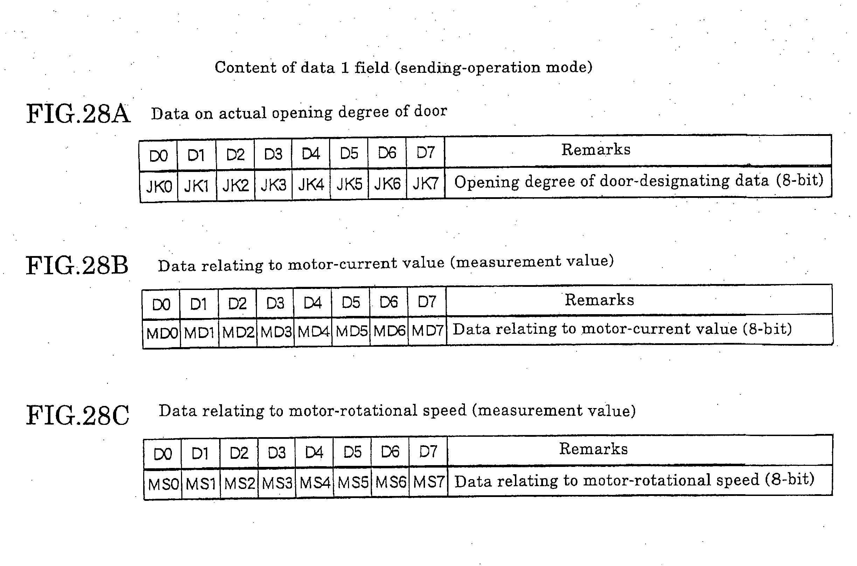

FIGS. 28A-28C are diagrams showing one example of content of the data 1 field in the sending-operation mode according to the third embodiment of the present invention. When the actuator position-control mode has been set, as shown in FIG. 28A, 8 bits of data JK0-JK7 relating to the actual opening degree of door are supplied to the controller 100 as the host device. When the motor-rotational speed control mode has been set, as shown in FIG. 28B, 8 bits of data MD0-MD7 relating to a motor-current value are supplied to the controller 100 as the host device. Meanwhile, in a case where the motor-rotational speed control mode has been set and the fan-driving unit FAN is configured to be capable of detecting the rotational speed of the motor, 8 bits of data MS0-MS7 relating to the motor-rotational speed is supplied to the controller 100 as the host device, as shown in FIG. 28C.

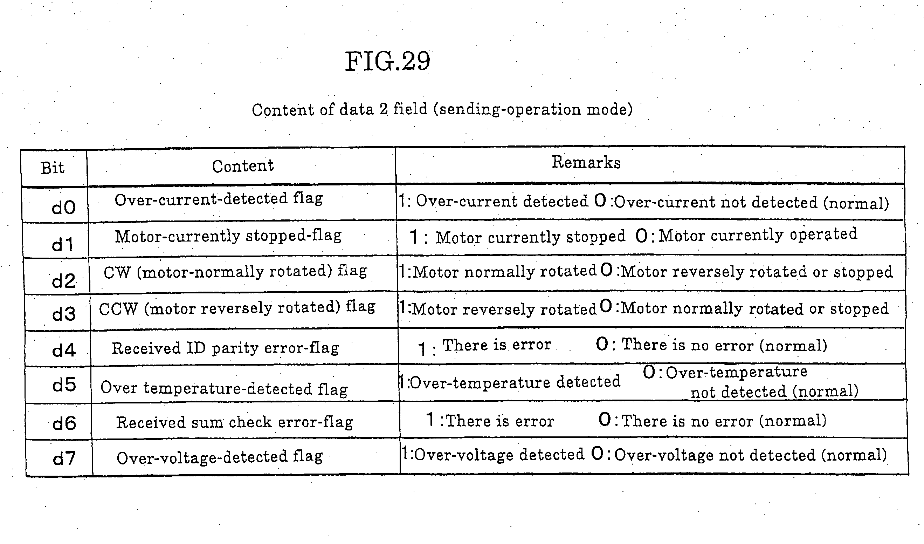

FIG. 29 is a diagram showing one example of content of the data 2 field in the sending-operation mode according to the third embodiment of the present invention. The over-current-detected flag is supplied to the controller 100 as the host device by a lowest-order bit d0 in the data 2 field. The motor-currently stopped-flag is supplied by a second bit d1 in the data 2 field, the CW (motor-rotated) flag is supplied by a third bit d2, and the CCW (motor-reversely rotated) flag is supplied by a fourth bit d3, to the controller 100 as the host device, respectively. Furthermore, the received ID parity error-flag is supplied by a fifth bit d4, the over-temperature-detected flag is supplied by a sixth bit d5, the received sum check error-flag is supplied by a seventh bit d6, and the over-voltage-detected flag is supplied by a highest-order bit d7, to the controller 100 as the host device, respectively.

FIG. 80 is a block diagram showing the structure of the door actuator unit having the apparatus for controlling motor according to the third embodiment of the present invention. Each of the door actuator units MIX, MODE and F/R is structured by the motor controlling circuit 50 which is constituted by a motor controlling IC 500 and its peripheral circuitry parts R1, C1, the electric motor 30 driven by the motor controlling circuit 50, and the potentiometer 31 which is rotated in conjunction with the rotation of the actuator lever 30L of the electric motor type actuator 30A having the electric motor 30 for generating the voltage which corresponds to the present position of the door (actual opening degree) rotated by the actuator lever 30L.

The motor controlling IC 500 which structures the motor controlling circuit 50 is the exclusively-used IC (custom IC) which is developed for controlling of a direct current motor, and which is produced by, for example, using a BiCDMOS process which can form a bipolar element, a C-MOS element and a D-MOS element on the same semiconductor chip.

The motor controlling IC 500 includes a constant voltage-power supply circuit 51 which receives supplying of the electric power from a battery power supply Vacc to generate stabilized power Vref which is, for example, 5-volt, a built-in power supply protection circuit 52 for protecting the constant voltage-power supply circuit 51, a LIN input/output circuit 53 for carrying out input and output of a LIN communication signal (serial communication signal), and an ID input circuit 54 for setting an identification code (ID code). The motor controlling IC 500 further includes a logic-circuit portion 55 for carrying out various processing and controlling such as communication processing or operational processing of the motor, an H-bridge circuit portion 56 for supplying the electric power to the motor 30, an over-voltage detecting circuit 57 for detecting over-voltage of the battery power supply Vacc, an over-current/over-temperature detecting circuit 58 for detecting an over-current of the current supplied to the motor and a rise in temperature that exceeds an allowable range (over-temperature) in respective power-switching elements (MOS-FETs) which are structuring the H-bridge circuit portion 56, and an A/D converting portion 59 for converting the outputted voltage (voltage which corresponds to opening degree of door) of the potentiometer 31 into digital data.

Meanwhile, the battery power supply Vacc is a power supply supplied through the power supply line from the controller 100, and the battery power supply Vacc is the power supply supplied via an ignition switch or an accessory switch or the like from the vehicle-mounted battery.

VDD is a power supply terminal of the battery power supply Vacc for the H-bridge circuit portion 56, Vcc is a power supply terminal of the battery power supply Vacc in which the current thereof is limited by a current limiting resistor R1, a C1 is a condenser for stabilizing the power supply, and GND is a ground-power supply terminal. V12V is a battery power supply in which the current thereof is limited, and this power supply V12V is supplied to the LIN input/output circuit 53.

VID0-VID3 are input terminals for setting the identification code (ID code). In the present embodiment, the identification code (ID code) is structured by 4 bits, and 16 different identification codes (in other words, addresses) can be set at maximum. By connecting the ID input terminals VID0-VID3 to the ground, an "L" level (logical 0) can be set, and an "H" level (logical 1) can be set with an open state. Vbus is an input/output terminal of the serial communication signal (in concrete terms, the LIN communication signal), and more specifically, it is a connecting terminal of the data line (BUS).

M+ and M- are output terminals of the H-bridge circuit portion 56, and are connecting terminals to be connected with the motor 30. VR is an output terminal of the stabilized power supply Vref, and one end of the potentiometer 31 is connected thereto. Vpbr is an input terminal of the outputted voltage (voltage corresponding to opening degree of door) of the potentiometer 31.

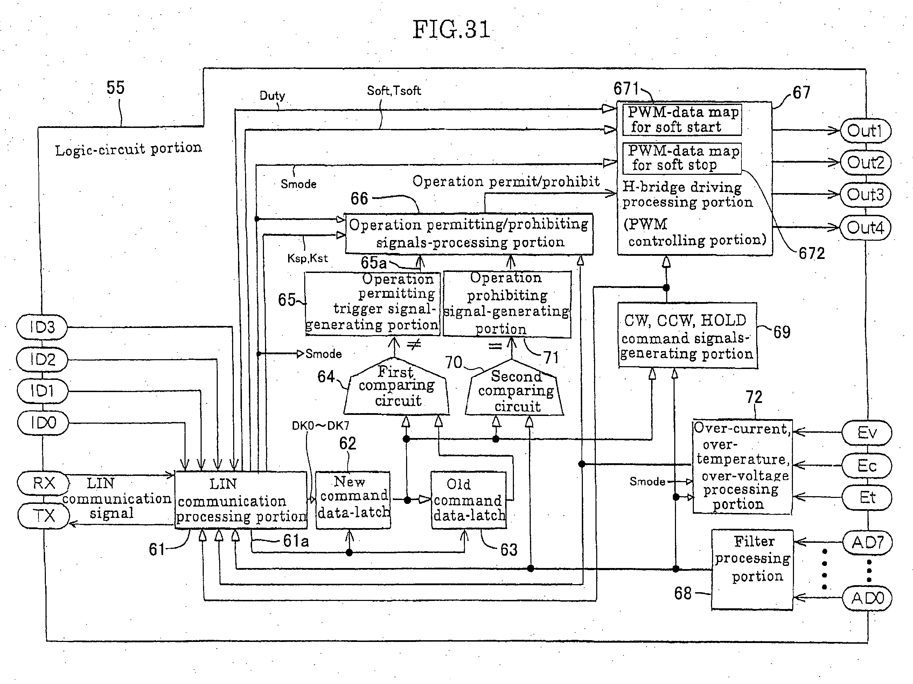

FIG. 31 is a diagram showing one create example of the logic-circuit portion included in the motor controlling IC which structures the motor controlling circuit according to the third embodiment. A LIN communication processing portion 61 decodes a reception-signal RX supplied from the LIN input/output circuit 53, and temporarily stores the 8-bit data in each of the data 1 field, the data 2 field and the checksum field into a temporary resister or the like included in the LIN communication processing portion 61, respectively, when a result of a parity check of the ID field is normal, when the received ID code coincides with the own ID code, and when the receiving-request is designated by the 2 bits in the ID field, which are the ID4 and the ID5.

Subsequently, the LIN communication processing portion 61 carries out a sum check on each of the data stored temporarily in the above-mentioned temporary resister or the like to check to see that there is no error therein, and thereafter, recognizes that the actuator position-control mode is set in the bit d4 within the data 2 field, and that data in the data 1 field is the opening degree of door-designating data (target value-data for opening degree of door) by the bit d5 within the data 2 field.

In addition, the LIN communication processing portion 61 supplies the opening degree of door-designating data (target value-data) DK0-DK7 which are in 8-bit in the data 1 field to a new command data-latch circuit 62, and at the same time, outputs a communication-established trigger signal 61a and allows the new command data-latch circuit 62 to latch the opening degree of door-designating data (target value-data). At this time, the prior opening degree of door-designating data (target value-data) which has been stored in the new command data-latch circuit 62 is shifted to an old command data-latch circuit 63.

Also, the LIN communication processing portion 61 supplies the request for soft start/soft stop control "Soft" of the motor designated by the bit d2 and the bit d3 in the data 2 field, and the request for designating control mode "Smode" designated by the bit d4 in the data 2 field to an H-bridge driving processing portion (PWM controlling portion) 67, and at the same time, supplies the request for designating control mode Smode to an operation permitting/prohibiting signals-processing portion 66.

Furthermore, in a case where the data in the data 1 field has been designated that it is the data relating to the duty ratio by the bit d5 in the data 2 field, and where the LIN communication processing portion 61 has recognized that the duty ratio-designating data (4-bit) has been supplied by the low-order 3 bits in the data 1 field, the LIN communication processing portion supplies the duty ratio-designating data "Duty" (Du0-Du3) in the bits D3-D6 in the data 1 field to the H-bridge driving processing portion 67.

Meanwhile, in a case where an error has occurred in the result of the parity check of the ID field, the LIN communication processing portion 61 sets the received ID parity error-flag in a position at which the received ID parity error-flag is stored in a buffer space for the send-data within the LIN communication processing portion 61. Also, in a case where an error has occurred in a result of the sum check, the LIN communication processing portion 61 sets the received sum check error-flag at which the received sum check error-flag is stored in the buffer space for the send-data within the LIN communication processing portion 61.

A first comparing circuit 64 compares the new opening degree of door-designating data (target value-data) with the old opening degree of door-designating data, and supplies a result of the comparison (discordance output) to an operation permitting trigger signal-generating portion 65. The operation permitting trigger signal-generating portion 65 generates an operation permitting trigger signal 65a and supplies it to the operation permitting/prohibiting signals-processing portion 66 when the new and the old opening degree of door-designating data are different from each other. The operation permitting/prohibiting signals-processing portion 66 supplies an operation permitting signal to the H-bridge driving processing portion 67 when the operation permitting trigger signal 65a is supplied thereto.

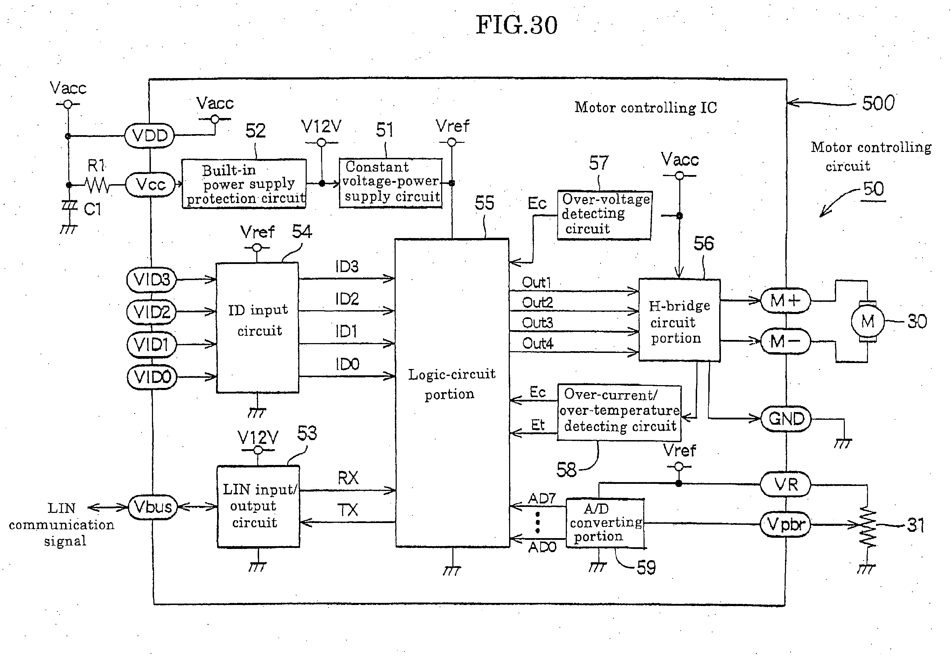

The output of the potentiometer 31 for detecting the opening degree of door is converted into actual opening degree of door-data (present value data, information on present position of object to be controlled) AD0-AD7 in 8 bits in every A/D conversion cycle previously set by the A/D converting circuit 59 shown in FIG. 30.

A filter processing portion 68 shown in FIG. 31 outputs a result of having carried out a process such as obtaining an average value of the actual opening degree of door-data (present value data) AD0-AD7 which are in a predetermined number of pieces continuing on a time series, as actual opening degree of door-data (present value data) after filter processing.

A CW, CCW, HOLD command signals-generating portion 69 compares the opening degree of door-designating data (target value-data) with the actual opening degree of door-data (present value data) after the filter processing, and decides a rotational direction of the motor 30 based on a deviation between both. Then, the CW, CCW, HOLD command signals-generating portion 69 generates and outputs a rotational direction-command signal (CW, CCW) for commanding whether to drive the motor 30 in a normal direction (CW: clockwise) to drive the door in an "open" direction, or to drive the motor 30 in a reverse direction (CCW: counterclockwise) to drive the door in a "close" direction. In addition, in a case where the opening degree of door-designating data (target value-data) and the actual opening degree of door-data (present value data) after the filter processing substantially coincide with each other, the CW, CCW, HOLD command signals-generating portion 69 generates and outputs a HOLD signal for commanding holding of the present position of the door to stop the driving of the motor 30, thereby to avoid generation of a hunting phenomenon.

The H-bridge driving processing portion 67 generates and outputs driving signals Out1-Out4 of each of the power-switching elements (for example, MOS-FETs) structuring respective arms of the H-bridge circuit portion 56, based on the rotational direction-command signal (CW, CCW). Accordingly, the electric power is supplied to the motor 30 from the H-bridge circuit portion 56 shown in FIG. 30, thereby the driving of the motor 30 is carried out.

Here, when a soft start/soft stop process has been set based on the request for soft start/soft stop control "Soft" and the time for soft start control "Tsoft", the H-bridge driving processing portion 67 carries out the soft start control in which the electric power supplied to the electric motor 30 is gradually increased by the PWM control, at the time of activation of the electric motor 30, to reduce a noise generated when the motor activates. Also, the H-bridge driving processing portion carries out the soft stop control in which the electric power supplied to the motor 30 is gradually decreased by the PWM control at the time of stopping of the electric motor 30, to reduce the noise generated when the motor stops.

A second comparing circuit 70 compares the opening degree of door-designating data (target value-data) with the actual opening degree of door-data (present value data) after the filter processing, and supplies a result of the comparison (accordance output) to an operation prohibiting signal-generating portion 71. The operation prohibiting signal-generating portion 71 generates and outputs an operation prohibiting signal when the present opening degree of door coincides with the target value. This operation prohibiting signal is supplied to the operation permitting/prohibiting signals-processing portion 66. The operation permitting/prohibiting signals-processing portion 66 supplies a command for prohibiting operation to the H-bridge driving processing portion 67 to prohibit the driving of the electric motor 30.

An over-current, over-temperature, over-voltage processing portion 72, when one of an over-voltage-detected signal Ec from the over-voltage detecting circuit 57, an over-current-detected signal Ec and an over-temperature-detected signal Et from the over-current/over-temperature detecting circuit 58 is supplied, sets a flag which corresponds to the abnormality among them and supplies information representing generation of the abnormality to the operation permitting/prohibiting signals-processing portion 66. The operation permitting/prohibiting signals-processing portion 66 supplies the command for prohibiting operation to the H-bridge driving processing portion 67 to prohibit the driving of the motor 30, when the information representing the generation of the abnormality is supplied.

In the case where the result of the parity check of the ID field is normal, the received ID code coincides with the own ID code, and the sending-request is designated by the 2 bits of the ID4 and the ID5 in the ID field, the LIN communication processing portion 61 sets the actual opening degree of door-data (present value data) after the filter processing which are in 8 bits shown in FIG. 28A as the data to be sent in the data 1 field, and sets ones shown in FIG. 29 as the data to be sent in the data 2 field.

In concrete terms, the LIN communication processing portion sets the over-current-detected flag in the lowest-order bit d0 of the data 2 field, the motor-currently stopped-flag in the second bit d1, a CW flag which represents that the direction of the motor rotates is the normal direction (CW) in the third bit d2, a CCW flag which represents that the direction of the motor rotates is the reverse direction (CCW) in the fourth bit d3, the received ID parity error-flag in the fifth bit d4, the over-temperature-detected flag in the sixth bit d5, the received sum check error-flag in the seventh bit d6, and the over-voltage-detected flag in the highest-order bit d8, respectively.

Then, inverted data is obtained which is a result of having added the data to be sent in the data 1 field and the data to be sent in the data 2 field and further added to a result of the addition carry-data occurred by that addition, and the obtained data is set to be as checksum data to be sent in the checksum field.

Further, the LIN communication processing portion 61 sequentially sends the data in the data 1 field, the data 2 field and the checksum field promptly after the point of completion of the ID field (for example, during the 2-bit period). Accordingly, the actual opening degree of door-data (present position data), the information on the operational states of the motor such as the rotational direction of the motor or whether the motor is stopped, the information of having detected the abnormality of the over-current, the over-voltage or the over-temperature, and the information to represent that the error has occurred at the time of the data-receiving, are supplied to the controller 100 as the host device (master).

Therefore, the controller 100 becomes capable of making the diagnosis of the operation of the motor controlling circuit 50 in detail. Also, the controller 100 becomes possible to avoid damages in the motor controlling circuit 50 and the electric motor type actuator 30A by estimating overload in the motor controlling circuit 50 and giving a command to stop the operation of the apparatus for controlling motor, for example.

As stated above, the LIN communication processing portion 61 decodes the reception-signal RX supplied from the LIN input/output circuit 53, and temporarily stores the 8-bit data in each of the data 1 field, the data 2 field and the checksum field into a temporary resistor or the like, respectively, when the result of the parity check of the ID field is normal, when the received ID code coincides with the own ID code, and when the receiving-request is designated by the 2 bits in the ID field, which are the ID4 and the ID5.

In addition, the LIN communication processing portion carries out the sum check on each of the temporarily stored-data to check to see if there is no error therein, and thereafter, supplies the opening degree of door-designating data (target value-data) which are in 8-bit in the data 1 field to the new command data-latch circuit 62, and at the same time, outputs the communication-established trigger signal 61a and allows the new command data-latch circuit 62 to latch the opening degree of door-designating data (target value-data). At this time, the prior opening degree of door-designating data (target value-data) which has already been stored in the new command data-latch circuit 62 is shifted to the old command data-latch circuit 63.

Next, the LIN communication processing portion 61 decodes and processes the content of the data 2 field. As already stated, various requests with respect to the motor controlling circuit 50 (slave) are supplied from the controller 100 (master) by using the data 2 field as shown in FIG. 27, when the receiving-request has been set in the ID field.

In the present embodiment, the request for clearing flag of communication error is supplied by the lowest-order bit d0 in the data 2 field. The LIN communication processing portion 61 clears the received ID parity error-flag and the received sum check error-flag, respectively, when the logic in the lowest-order bit d0 is "1", and does not change the state in the respective flags when the logic in the lowest-order bit d0 is "0".

The request for clearing diagnosis flag is supplied by the second bit d1 in the data 2 field. The LIN communication processing portion 61 clears all the over-current-detected flag, the over-temperature- detected flag and the over-voltage-detected flag when the logic in the second bit d1 is "1", and does not change the state in each of the flags when the logic in the second bit d1 is "0".

The request for soft start/soft stop control of the motor is supplied by the third bit d2 and the fourth bit d3 in the data 2 field. Here, the soft start control stands for starting the operation of the motor softly by gradually increasing the duty ratio of the PWM control at the time of the activation of the motor. Also, the time for soft start control is a time of changing the duty ratio from zero percent or a minimum duty value to 100 percent, at the time when carrying out the soft start.

The soft stop control stands for stopping the motor softly by gradually decreasing the duty ratio of the PWM control, when the deviation between the opening degree of door-designating data (target value-data) and the actual opening degree of door-data (present value data) after the filter processing becomes lower than a pre-set value. In the soft stop control, the duty ratio is set based on the deviation between the opening degree of door-designating data (target value-data) and the actual opening degree of door-data (present value data) after the filter processing.

The control mode is designated by the fifth bit d4 in the data 2 field. The actuator position-control mode is set when the logic in the bit d4 is "1", with respect to each of the door actuator units MIX, MODE and F/R. Accordingly, feedback control is carried out such that the actual opening degree of the door becomes as a targeted opening degree thereof, by comparing the actual opening degree of the door detected by the potentiometer 31 with the targeted opening degree.

Also, the LIN communication processing portion 61, when recognizing by the sixth bit d5 in the data 2 field that the duty ratio-designating data is supplied in the data 1 field, supplies the duty ratio-designating data "Duty" to the H-bridge driving processing portion 67. The H-bridge driving processing portion 67 temporality stores the duty ratio-designating data "Duty" supplied from the LIN communication processing portion 61 in a storing portion for the duty ratio-designating data located inside of the H-bridge driving processing portion 67, and at the same time, sets the duty ratio of a PWM signal based on the duty ratio-designating data "Duty" stored in the duty ratio-designating data-storing portion when a state is in "operation-permitted" state by the operation permitting signal.

Accordingly, the PWM signal having the duty ratio designated by the duty ratio-designating data "'Duty" is generated and the H-bridge circuit portion 56 is driven based on that PWM signal. Therefore, since the electric power supplied to the electric motor 30 is controlled by the duty ratio-designating data "Duty", it is possible to adjust the rotational speed of the electric motor 30.

The request for emergency stop of motor is supplied by the seventh bit d6 in the data 2 field. When the logic in the seventh bit d6 is "1", power application to the motor is shut off forcibly. When the logic in the seventh bit d6 is "0", a state that the power application to the motor has been forcibly shut off is cancelled, and it becomes a state that the power application to the motor is possible (normal operating state). The LIN communication processing portion 61 supplies the request for emergency stop of motor Ksp to the operation permitting/prohibiting signals-processing portion 66. In a case of rotating the motor again after having stopped the motor urgently, the subsequent request for forced operation of motor is used. Meanwhile, the opening degree of door-designating data different from the one before may be given in the case of rotating the motor again after the motor is stopped urgently.

The request for forced operation of motor is supplied by the highest-order bit d7 in the data 2 field. When the logic in the highest-order bit is "1", the power application to the motor is started forcibly. A state becomes as a normal operating state when the logic in the highest-order bit is "0". The LIN communication processing portion 61 supplies the request for forced operation of motor Kst to the operation permitting/prohibiting signals-processing portion 66.

Meanwhile, the LIN input/output circuit 53 and the logic-circuit portion 55 structure a serial data communication portion, and the LIN communication processing portion 61 in the logic-circuit portion 55 structures a reception-processing portion. In addition, the H-bridge driving processing portion (PWM controlling portion) 67 structures an H-bridge driving processing portion.

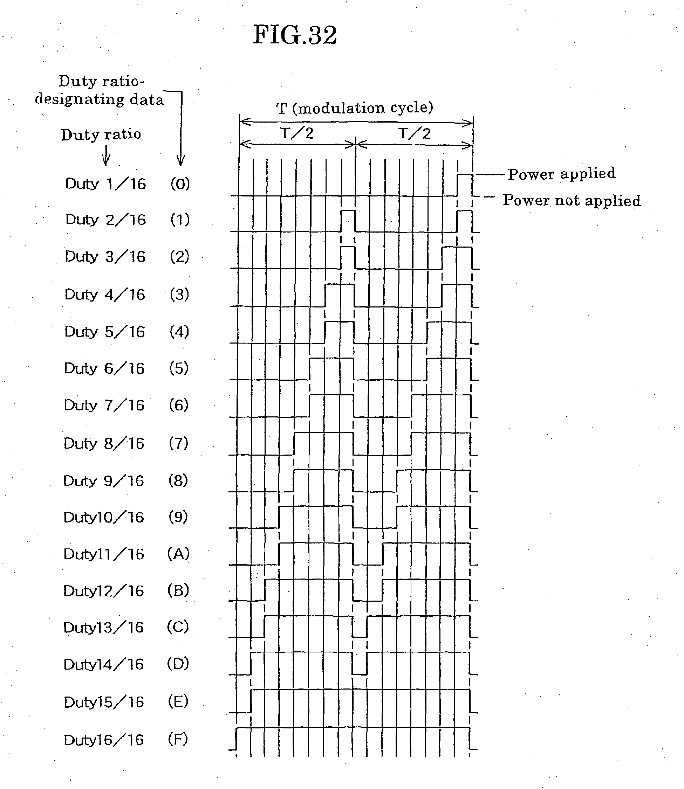

FIG. 32 is a diagram showing an example of switching the electric power supplied to the electric motor in 16 steps by the PWM control according to the third embodiment of the present invention. In the present embodiment, the duty ratio (Duty) is set to be in 16 steps from 1/16 to 16/16, and each of the duty ratios is designated by the duty ratio-designating data represented in a hexadecimal form (more specifically, the 4-bit duty ratio-designating data) shown in a bracket. Also, one modulation cycle T of the PWM control is divided into 2 sections (T/2) of a former half and a latter half, and sections for applying the power to the electric motor 30 are increased alternately in the former half and the latter half. Accordingly, a cycle of energization to the electric motor 30 becomes T/2 from the duty ratio (Duty) 2/16 and above. Therefore, it is possible to reduce torque fluctuations (pulsation) in the output of the motor.

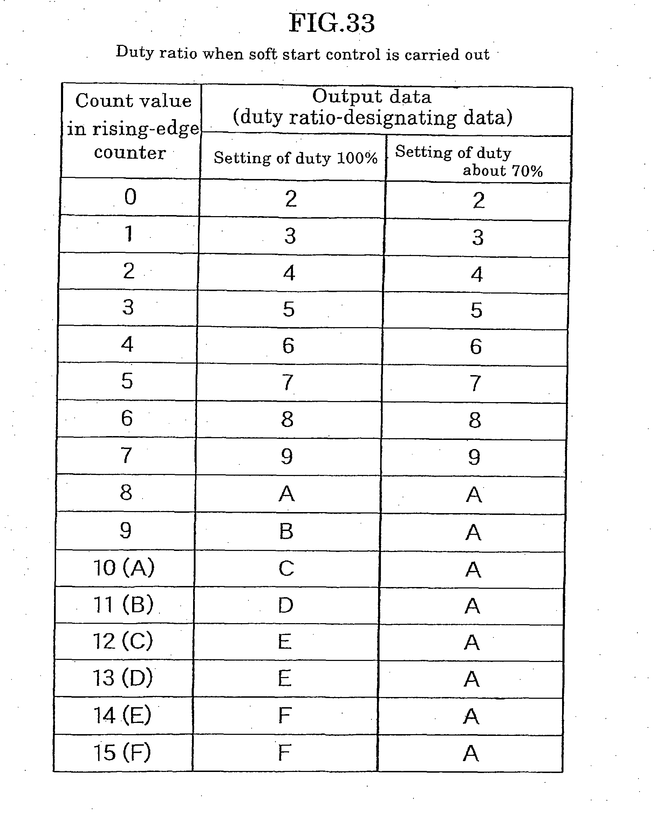

FIG. 33 is a diagram showing one example of a PWM-data map for the soft start at the time of the activation of the motor. The H-bridge driving processing portion (PWM controlling portion) 67 shown in FIG. 81 includes a PWM-data map for soft start 671. As shown in FIG. 33, a map for showing correspondence between a count value in a rising-edge counter and the duty ratio-designating data is previously registered in the PWM-data map for soft start 671. Meanwhile, the rising-edge counter is provided in the H-bridge driving processing portion (PWM controlling portion) 67, but its illustration is omitted.

In the PWM-data map for soft start 671, the duty ratio-designating data in a case where the duty ratio is 100 percent is stored. Here, when the duty ratio is set, for example, at approximately 70 percent (Duty 11/16, "A" shown by hexadecimal form), the duty ratio is increased based on the PWM-data map for soft start 671, and when the duty ratio reaches up to approximately 70 percent (Duty 11/16, "A" shown by hexadecimal form) and from then on, it is configured to maintain the set duty ratio of approximately 70 percent (Duty 11/16, "A" shown by hexadecimal form). Accordingly, it is possible to carry out the soft start control with respect to various duty ratios with one kind of the PWM-data map for soft start 671. Meanwhile, in FIG. 33, references within the brackets in "count value in rising-edge counter" are references shown by the hexadecimal form. Also, output data (duty ratio-designating data) are shown by the hexadecimal form.

When activating the motor, the H-bridge driving processing portion 67 pluses (performs increment) the counter value of the rising-edge counter (not shown) by 1 (one) in every cycle which is decided based on the time for soft start control designated by the bit d2 and the bit d3 in the data 2 field as shown in FIG. 27. Thereafter, the H-bridge driving processing portion reads out a duty value of the duty ratio-designating data corresponding to the plused (incremented) count value from the PWM-data map for soft start 671, generates the driving signals Out1-Out4 which have been modulated with PWM modulation based on the read out duty value and supplies them to the H-bridge circuit portion 56, thereby supplies the electric power to the electric motor 30 through the power-switching elements (for example, MOS-FETs) which are structuring each of the arms within the H-bridge circuit portion 56.

In a case where a difference between the opening degree of door-designating value (target value) (8-bit data) and the actual opening degree of door (present value) (8-bit) is over 16 (target value - present value ≧ 16) at the time when the soft start control is finished, the H-bridge driving processing portion 67 carries out the supplying of the electric power to the electric motor 30 with the duty ratio designated from the controller 100. In other words, the H-bridge driving processing portion carries out the supplying of the electric power to the electric motor 30 continuously when the "duty 100%" has been set, and performs PWM drive of the motor with the duty ratio of approximately 70% when the "duty approximate 70%" has been set. Accordingly, the electric power supplied to the electric motor 30 is limited to approximately 70% of rated electric power (electric power at the time of the continuous power application). Therefore, number of rotations of the electric motor becomes lower than rated number of rotation, and thus the frequency of the noise and the noise level become reduced.

The H-bridge driving processing portion 67 carries out the process of the soft stop when the difference between the opening degree of door-designating value (target value) (8-bit data) and the actual opening degree of door (present value) (8-bit) becomes less than 15 (target value - present value ≦ 15). Meanwhile, the process of the soft stop is executed only when the soft start/soft stop control of the motor is set to be carried out.

When it has been set not to carry out the soft start/soft stop control (when the logic in the bits d2 and d3 are "0, 0", see FIG. 27), the H-bridge driving processing portion 67 carries out normal servocontrol such that the difference between the opening degree of door-designating value (target value) (8-bit data) and the actual opening degree of door (present value) (8-bit) becomes zero.

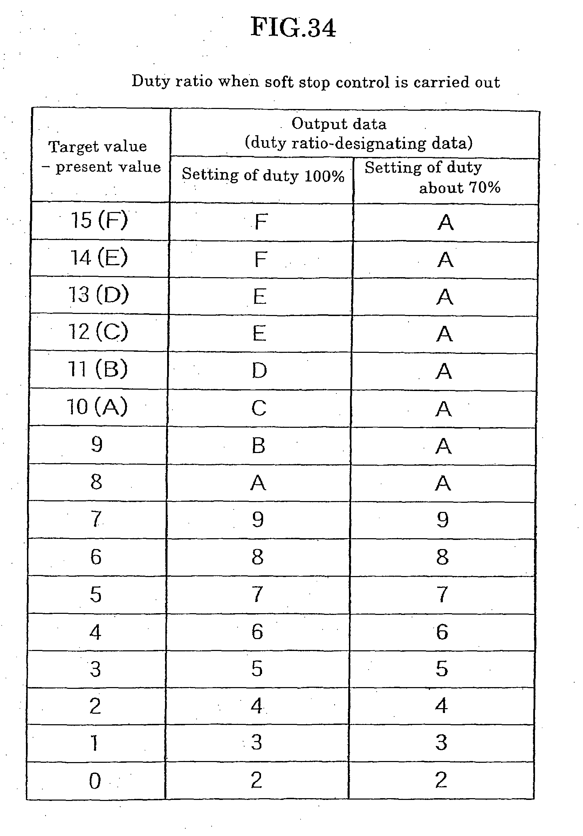

FIG. 34 is a diagram showing one example of a PWM-data map for the soft stop. The H-bridge driving processing portion (PWM controlling portion) 67 shown in FIG. 31 has a PWM-data map for soft stop 672. In the PWM-data map for soft stop 672, duty ratio-setting data is previously registered corresponding to an absolute value of a difference between the target value and the present value ( | target value - present value |). Only the duty ratio-designating data in the case that the duty ratio is 100 percent is stored in the PWM-data map for soft stop (PWM data storing portion) 672.

Accordingly, in a case where the duty ratio is set to be at approximately 70 percent, the duty ratio of approximately 70 percent is used, when the duty ratio-designating data in the case that the duty ratio is 100 percent (more specifically, the duty ratio-designating data read out from the PWM-data map for soft stop 672) is in larger value than the duty ratio of approximately 70 percent. Meanwhile, in FIG. 34, references within brackets in a column of the absolute value of the difference between the target value and the present value ( | target value - present value | ) are references shown by the hexadecimal form. Also, output data (duty ratio-designating data) are shown by the hexadecimal form.

The H-bridge driving processing portion 67 reads out the duty ratio-setting data corresponding to the absolute value of the difference between the target value and the present value ( | target value - present value I ) from the PWM-data map 672, generates the driving signals Out1-Out4 which have been modulated with the PWM modulation based on read out duty value and supplies them to the H-bridge circuit portion 56, thereby supplies the electric power to the electric motor 30 through the power-switching elements (for example, MOS-FETs) which are structuring each of the arms within the H-bridge circuit portion 56. Since the electric power to be supplied to the electric motor 80 is configured to be made less as the difference between the target value and the present value becomes less, it is possible to stop the door at the position corresponding to the target value or at the position near thereto with high precision. Also, it is possible to reduce the noise generated at the time when the motor stops.

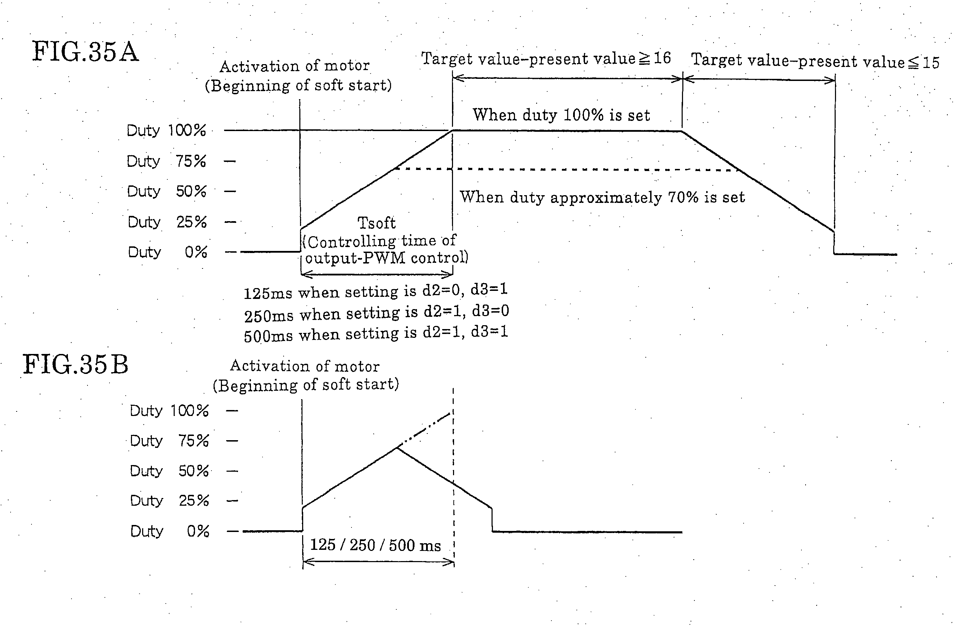

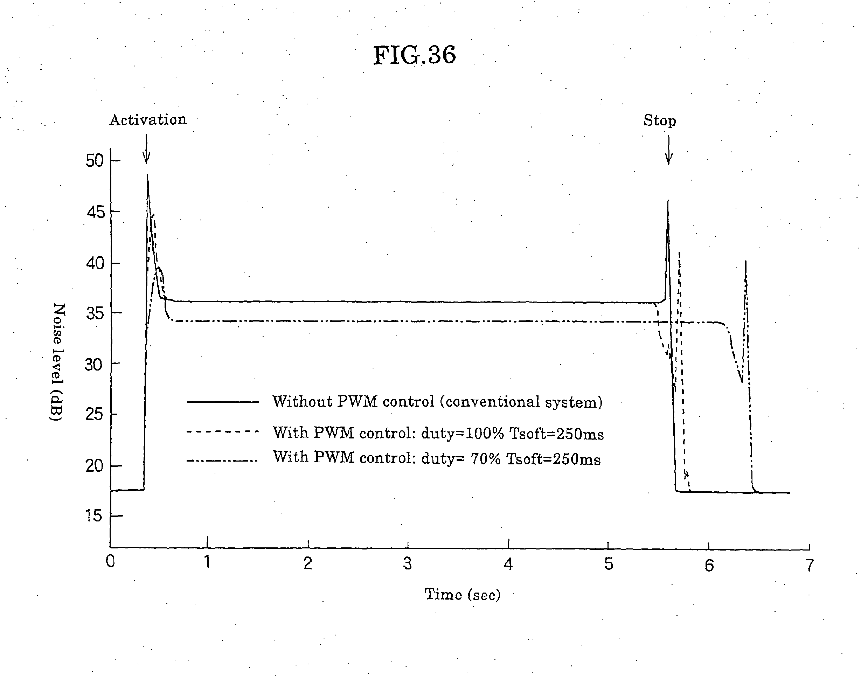

FIGS. 35A and 36B are graphs showing change-characteristic of the duty ratio from the activation of the motor to the stopping of the motor when the soft start/soft stop control is carried out according to the third embodiment of the present invention. Here, since the duty ratio and the electric power supplied to the electric motor are in a proportionality relation, this makes that the graphs shown in FIGS. 35A and 35B represent change-characteristic of the electric power supplied to the electric motor. Meanwhile, FIG. 35A shows the change-characteristic of the duty ratio from the activation of the motor to the stopping of the motor, while FIG. 35B shows the change-characteristic of the duty ratio in a case where the control of the motor is shifted to carry out the soft stop control from the middle of the performance of the soft start control, due to the absolute value of the difference between the opening degree of door-designating value (target value) and the actual opening degree of the door (present value) being lower than a predetermined value at the time while the soft start control in the activation of the motor is carried out.

As shown in FIG. 35A, when the opening degree of door-designating value (target value) is set, the activation of the motor (soft start control) is carried out on the basis of the duty ratio at the time of carrying out the soft start control (PWM-data map for soft start 671) as shown in FIG. 33. The supplying of the electric power to the electric motor 80 is continuously carried out with the set duty ratio during when the difference between the opening degree of door-designating value (target value) (8-bit data) and the actual opening degree of door (present value) (8-bit) is over 16 (target value - present value ≧ 16). For example, when the duty ratio of 100% (Duty 16/16) has been set by the 4-bit duty ratio-designating data (Du0-Du3) shown in FIG. 26B, the electric power is supplied to the electric motor 30 with the duty ratio of 100% as shown by a solid line in FIG. 35A (in other words, the power supplying to the motor is not limited). When the duty ratio of approximately 70% (Duty 11/16) has been set, the power supplying to the electric motor 30 is limited in which the duty ratio of approximately 70% is set as an upper limit, as shown by a dotted line in FIG. 35A.

In addition, the soft stop control of the motor is carried out based on the duty ratio at the time of carrying out the soft stop control (PWM-data map for soft stop 672) as shown in FIG. 34 from the point when the absolute value of the difference between the opening degree of door-designating value (target value) (8-bit data) and the actual opening degree of door (present value) (8-bit) becomes less than 15 ( | target value - present value | ≦ 15), and thereby the motor is stopped.

Meanwhile, as shown in FIG. 35B, when the absolute value as the difference between the opening degree of door-designating value (target value) (8-bit data) and the actual opening degree of door (present value) (8-bit) becomes less than 15 ( | target value - present value | ≦ 15), the control of the motor is shifted to the soft stop control at that point, and the motor is stopped by the soft stop control.

Although the example in which the duty ratio can be set from 16 steps of the duty ratios, arbitrary, by using the 4-bit duty ratio-designating data (Du0-Du3) has been explained in the present embodiment, it may be configured that the duty ratio can be set from 32 steps of duty ratios, arbitrary, by using 5-bit duty ratio-designating data (Du0-Du4).

In this case, a counter for generating the PWM signal may be structured to be in 5-bit structure to generate 32-step PWM signals having duty ratios from 1/32-32/32, or the 32-step PWM signals may be substantially generated by combining the PWM signals having the 16 kinds of duty ratios shown in FIG. 32 in two modulation cycles. For example, a PWM signal which is equivalent to Duty 29/32 may be generated by using a PWM signal having Duty 15/16 and a PWM signal having Duty 14/16 alternately in every respective modulation cycle.

Meanwbile, a range in which the duty ratio can be set may be limited to, for example, over the duty ratio of 50 percent, thereby the duty ratio may be set to be in 16 steps or 32 steps within the range of duty ratio of 50 percent to 100 percent. By doing so, it is possible to make variation-width of the duty ratio small with the limited number of bits.

Also, it may be configured that the H-bridge driving processing portion 67 receives the motor-rotational speed-designating data instead of the duty ratio-designating data by the LIN communication processing portion 61, and obtains a duty ratio which has been previously corresponded to the motor-rotational speed-designating data, thereby to control the electric power supplied to the electric motor 30 with the PWM control.

Furthermore, it may be configured that the H-bridge driving processing portion 67 receives the command for increasing electric power to be supplied to motor or the command for decreasing electric power to be supplied to motor by the LIN communication processing portion 61, and increases or decreases the duty ratio of the PWM signal step-by-step.

Also, as shown in FIG. 27, such a configuration may be employed in which when the actuator position-control mode is set by the bit d4 in the data 2 field, only the opening degree of door-designating data is supplied in the data 1 field, and 1 bit of duty ratio-designating information is supplied in the bit d5 in the data 2 field without using the bit d5 in the data 2 field for supplying the request for designating data-classification of data 1 field, thereby switching over the duty ratio in 2 steps by the bit d5.

Furthermore, such a configuration may be employed in which, by using 2 bits in the bit d4 and the bit d5 in the data 2 field, for example, the motor-rotational speed control mode is set and classification of data in the data 1 field is defined as rotational speed designating information by d4 = 0, d5 = 0, the actuator position-control mode is set and "high" duty ratio is designated by d4 = 0, d5 = 1, the actuator position-control mode is set and "medium" duty ratio is designated by d4 = 1, d5 = 0, and the actuator position-control mode is set and "low" duty ratio is designated by d4 = 1, d6 = 1.

FIG. 36 is a graph showing a measurement result of the noise level when the electric motor type actuator is driven by the apparatus for controlling motor according to the third embodiment of the present invention. In FIG. 36, a solid line represents a noise characteristic of a conventional driving system without the PWM control (without soft start/soft stop control). Since the soft start/soft stop control is not carried out in the conventional driving system, the noise level is large when the motor activates and stops.

A dotted line represents a noise characteristic when the actuator is driven with a condition of the duty-100% (electric power supplied to the motor is not limited) with the PWM control (with soft start/soft stop control, time for soft start control Tsoft = 250ms). The noise level is reduced at the time of the activation and the stopping of the motor by carrying out the soft start/soft stop control (reduced by approximately 4dB as compared with the conventional driving system).

A chain line represents a noise characteristic when the actuator is driven with a condition of the duty-approximately 70% (electric power supplied to the motor is limited) with the PWM control (with soft start/soft stop control, time for soft start control Tsoft = 250ms). The noise level is reduced at the time of the activation and the stopping of the motor by carrying out the soft start/soft stop control (reduced by approximately 4dB-7dB as compared with the conventional driving system). Also, since the electric power supplied to the motor is limited, the noise level (stationary noise) is reduced by approximately 2dB less than the conventional system. Meanwhile, since the electric power supplied to the motor is limited, number of rotation of the motor is reduced and thus a point of time when the motor stops is delayed for approximately one second as compared with the case where the electric power supplied to the motor is not limited (time for operating the motor is increased at approximately 15%).

As described in the foregoing, although the example in which the opening degree of various doors provided in the air conditioning device for the automobile by using the apparatus for controlling motor has been explained in the present embodiment, it is possible to apply the apparatus for controlling motor according to the present invention to various uses including actuators for linearly moving an object to be controlled and so on, not only for the use in the door actuators.

Also, the example in which the logic-circuit portion 55 is in the circuitry which is mainly based on hardware has been explained in the present embodiment. However, one chip microcomputer or the like may be used for the logic-circuit portion 55 to realize the function of the logic-circuit portion by program control.

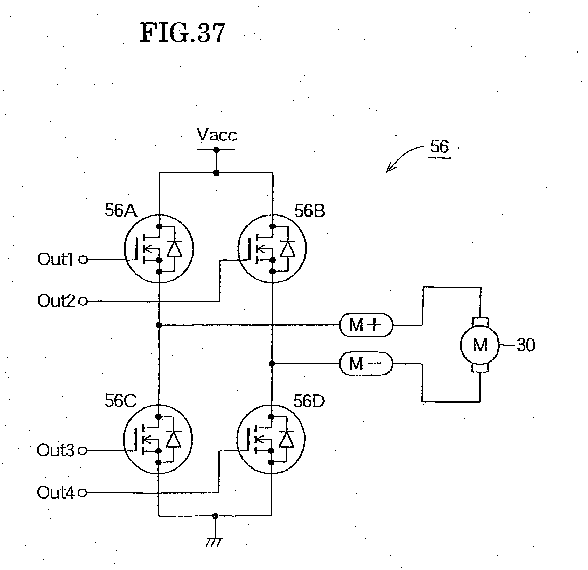

FIG. 37 is a diagram showing a structure of the H-bridge circuit portion. In the present embodiment, the H-bridge circuit portion 56 is structured by four N channel-MOS type transistors (hereinafter, referred to as transistors) 56A-56D. Gates of each of the transistors 56A-56D shown in FIG. 31 are respectively driven on the basis of the four PWM signal outputs (driving signals) Out1-Out4 generated by the H-bridge driving processing portion 67 shown in FIG. 37.

When both the transistor 56A and the transistor 56D. are controlled to be in a conducting state, the battery power supply Vacc is supplied to the terminal M+ which is one of the terminals of a coil of the electric motor 30, while the ground-power supply is supplied to the terminal M- which is the other one of the terminals of the coil of the electric motor 30. Thereby, the electric motor 30 is driven normally. When both the transistor 56B and the transistor 56C are controlled to be in the conducting state, the electric motor 30 is driven reversely.

In the present embodiment, the PWM control for the motor to be rotated normally is carried out by controlling the transistor 56D, which is a lower arm, so as to be in the conducting state and controlling a conducting period of the transistor 56A, which is an upper arm. Also, the PWM control for the motor to be rotated reversely is carried out by controlling the lower arm transistor 56C to be in the conducting state, and controlling the conducting period of the upper arm transistor 56B. Furthermore in the present embodiment, each of the lower arm transistors 56C and 56D are controlled to be in the conducting state and both ends of the coil of the electric motor 30 are shunted through the respective transistors 56C and 56D, thereby a regeneration brake is applied. The regeneration brake may be applied by controlling each of the upper arm transistors 56A and 56B to be both in the conducting state.

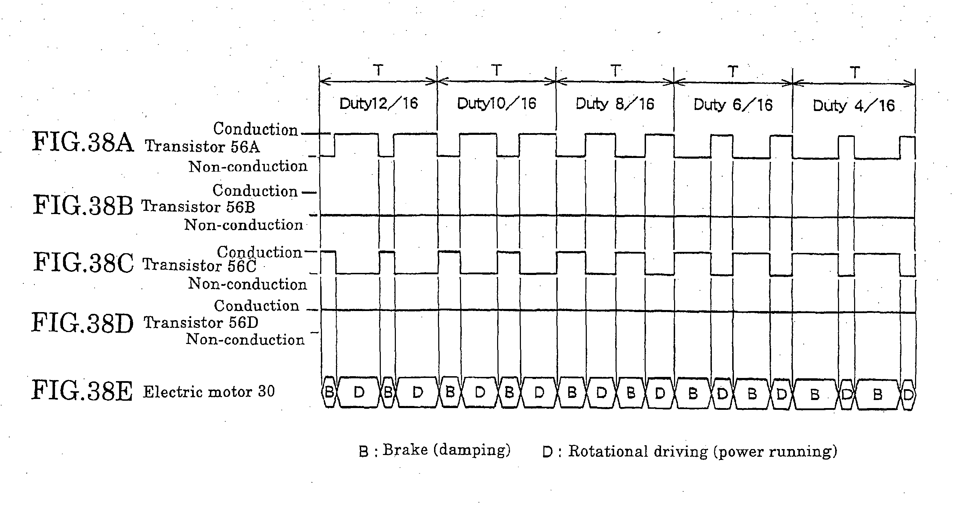

FIGS. 38A-38E are diagrams showing the operation of the apparatus for controlling motor according to the third embodiment of the present invention during deceleration (soft stop). FIGS. 38A-38E show deceleration control (soft stop) in the state where the motor rotates normally. For convenience of explanation, an example of a case is shown here in which the duty ratio is reduced from 12/16 to 4/16 as the present value of the object to be controlled becomes close to the target value. Meanwhile, a reference sign T in the drawing represents a PWM cycle (modulation cycle). In the present embodiment, the PWM cycle T is set about 500 *µ*S (500 microseconds). A reference sign B in the drawing represents a brake-period, and a reference sign D represents a period when the motor is rotated and driven.

As shown in FIG. 38B, the upper arm transistor 56B is caused to be in an OFF state (non-electric conduction), the lower arm transistor 56D is caused to be in the conducting state as shown in FIG. 38D, and the upper arm transistor 56A is caused to be driven with switching so as to be in an ON (electric conduction) state / OFF (non-electric conduction) state corresponding to the duty ratio as shown in FIG. 38A. As shown in FIG. 38C, the lower arm transistor 66C is caused to be in the ON (electric conduction) state at the timing when the upper arm transistor 56A becomes in the OFF (non-electric conduction) state. As shown in FIG. 38E, the time, during when the lower arm transistor 56C is in the ON (electric conduction) state becomes the brake period B, and the time, during when the upper arm transistor 56A is in the ON (electric conduction) state becomes the rotation-driving period D.

The timing when the transistor 56A goes OFF and the timing when the transistor 56C goes ON are represented in FIGS. 38A-38E as if they coincide with each other, however, short-circuiting between power supplies causes when the upper arm transistor 56A and the lower arm transistor 56C become in the ON state simultaneously and thus an excessive current flows. Accordingly, there is provided dead time so that the transistor 56C is turned ON after the transistor 56A is turned OFF, and there is also provided the dead time such that the transistor 56A becomes in the ON state after the transistor 56C has been turned into the OFF state, because of the similar reason mentioned above.

As shown in FIG. 38E, since the rotational driving and the brake of the electric motor 80 are repeated alternately, and at the same time, proportion of the brake period B within the PWM cycle (modulation cycle) T is increased, the deceleration is carried out sufficiently by the time the object to be controlled reaches the target position, thus accuracy in a stopping position of the object to be controlled is improved. In addition, it is possible to reduce the noise generated when the object to be controlled stops. In a case where the high accuracy in the stopping position is not required, or in a case in which the generation of the noise does not raise any issue, it may be configured that the brake control at the deceleration (at the time of the soft stop control) is not to be carried.

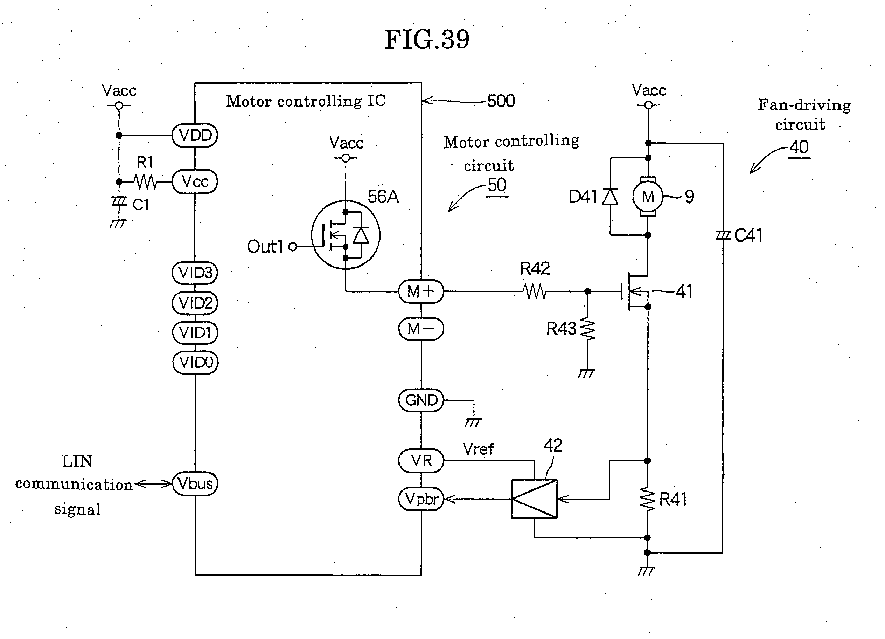

FIG. 39 is a diagram showing one concrete example of circuitry of the fan-driving unit provided with the apparatus for controlling motor according to the third embodiment of the present invention. The fan-driving unit shown in FIG. 39 is structured by the motor controlling circuit 50 which includes the motor controlling IC 500 and the fan-driving circuit 40.

The fan-driving circuit 40 is structured by a n-channel type MOSFET 41 for driving the fan-motor 9, a resistor for detecting motor current R41 which is low in value of resistance (for example, less than 0.5 ohm) interposed and provided between the source and the ground of the MOSFET 41, and a gate resistor R42 interposed and provided between the output terminal M+ of the H-bridge circuit portion 56 in the motor controlling IC 500 and a gate of the MOSFET 41. Moreover, the fan-driving circuit is structured by a pull-down resistor R43 interposed and provided between the gate of the MOSFET 41 and the ground, a diode for circulating current D41 connected to the fan-motor 9 in parallel, a condenser for stabilizing electric power C41 interposed and provided between the battery power supply Vacc and the ground, and a direct current amplifier 42 for amplifying voltage which corresponds to motor current generated at both ends of the resistor for detecting motor current R41 in direct current.

One of terminals of the coil of the fan-motor 9 is connected to the battery power supply Vacc and the other terminal of the coil of the fan-motor is connected to a drain of the MOSFET 41. An anode of the diode for circulating current D41 is connected to the drain of the MOSFET 41, and a cathode of the diode for circulating current D41 is connected to the battery power supply Vacc. An output of the direct current amplifier 42 is supplied to the input terminal Vpbr of the A/D converting portion 59 included in the motor controlling IC 500. The 5-volt stabilized power Vref supplied from the output terminal VR of the stabilized power supply Vref included in the motor controlling IC 500 is utilized as a power supply for the direct current amplifier 42.

The H-bridge driving processing portion (PWM controlling portion) 67 included in the motor controlling IC 500 drives the transistor 56A which constitutes one of the upper arm in the H-bridge circuit portion 56 shown in FIG. 37 based on the PWM output signal Out1 when the motor-rotational speed control mode is set by the request for designating control mode Smode, and drives other transistors 56B, 56C and 56D to be in the OFF state.

The H-bridge driving processing portion (PWM controlling portion) 67 generates the PWM signal having the duty ratio set by the duty ratio-designating data or the motor-rotational speed-designating data or the command for increasing/reducing electric power to be supplied to motor, to drive the transistor 56A in the H-bridge circuit portion 56. Accordingly, by driving the MOSFET 41 by the switching on the basis of the output of the transistor 56A included in the H-bridge circuit portion 56, it is possible to operate the fan-motor (blower fan-motor) 9 by the PWM control with the set duty ratio.

Therefore, the controller 100 as the host device is possible to variably control rotational speed of the fan-motor (blower fan-motor) 9 by supplying the information relating to duty ratio-designation (the duty ratio-designating data or the motor-rotational speed-designating data or the command for increasing/reducing electric power to be supplied to motor) to the fan-driving unit FAN.

The voltage which corresponds to the motor current generated at the both ends of the resistor for detecting motor current R41 is amplified in direct current by the direct current amplifier 42, and is converted into digital data corresponding to the motor current by the A/D converting portion 59 included in the motor controlling IC 500. The over-current, over-temperature, over-voltage processing portion 72 monitors a current flowing to the fan-motor 9 based on the digital data corresponding to the motor current outputted through the filter processing portion 68 when the motor-rotational speed control mode is set by the request for designating control mode Smode, and when the current has exceeded a previously set permissible value, supplies over-current-detected information to the operation permitting/prohibiting signals-processing portion 66, thereby to stop the operation of the H-bridge driving processing portion (PWM controlling portion) 67 through the operation permitting/prohibiting signals-processing portion 66. Accordingly, the operation of the fan-motor 9 is stopped.

The LIN communication processing portion 61 sets the over-current-detected flag and at the same time, sets the motor-currently stopped-flag. Since the LIN communication processing portion 61 sends various information including the over-current-detected flag to the controller 100 when the sending-request is outputted from the controller, the controller 100 can recognize that the operation of the fan-motor 9 is stopped by the detection of the over-current. Therefore, the controller 100 can take necessary procedures with respect to failure or the generation of the abnormality in the fan-driving unit FAN, promptly.

Also, when the motor-rotational speed control mode is set by the request for designating control mode Smode, the LIN communication processing portion 61 supplies data corresponding to the motor current value of the fan motor 9 to the controller 100 by using the data 1 field. Accordingly, the controller 100 can monitor the operation of the fan-driving unit FAN on the basis of the data corresponding to the motor current value, and also, the controller can estimate the rotational speed of the fan-motor 9 based on the data corresponding to the motor current value.

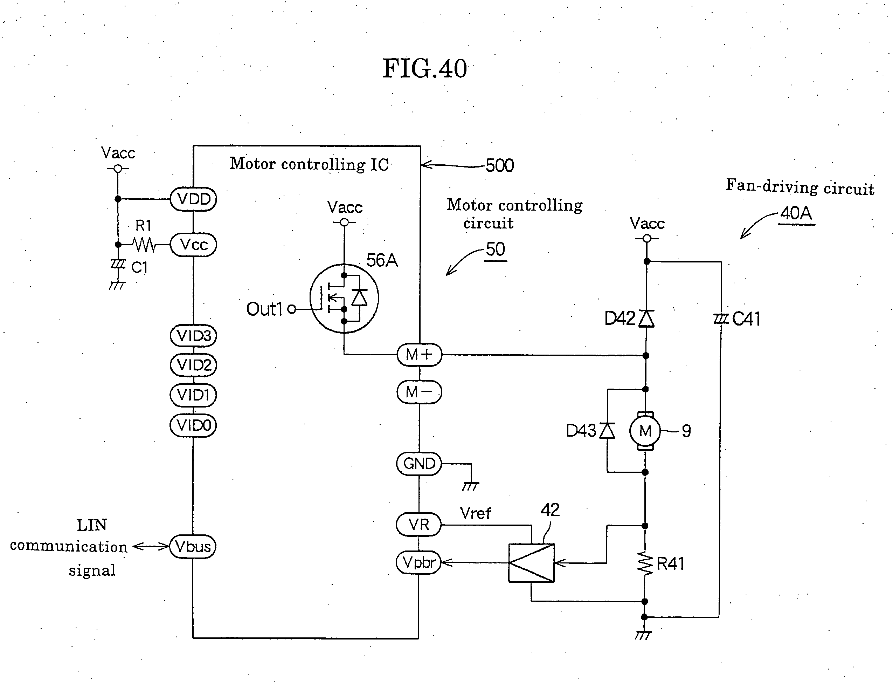

FIG. 40 is a diagram showing another circuitry of the fan-driving unit provided with the apparatus for controlling motor according to the third embodiment of the present invention. A fan-driving circuit 40A shown in FIG. 40 is configured to directly drive the fan-motor 9 by the transistor 56A included in the H-bridge circuit 56 of the motor controlling IC 500. In a case where the transistor 56A included in the H-bridge circuit 56 has performance to directly drive the fan-motor 9, the fan-motor 9 may be configured to be driven directly as shown in FIG. 40. Meanwhile, reference numerals D42 and D43 in FIG. 40 denote the diodes for circulating current. If the fan-motor 9 is configured to be driven directly by the transistor included in the motor controlling IC 500, electric power consumption in the motor controlling IC 500 becomes large. Accordingly, the motor controlling IC 500 may be forcibly air-cooled by airflow generated with the operation of the fan-motor 9.

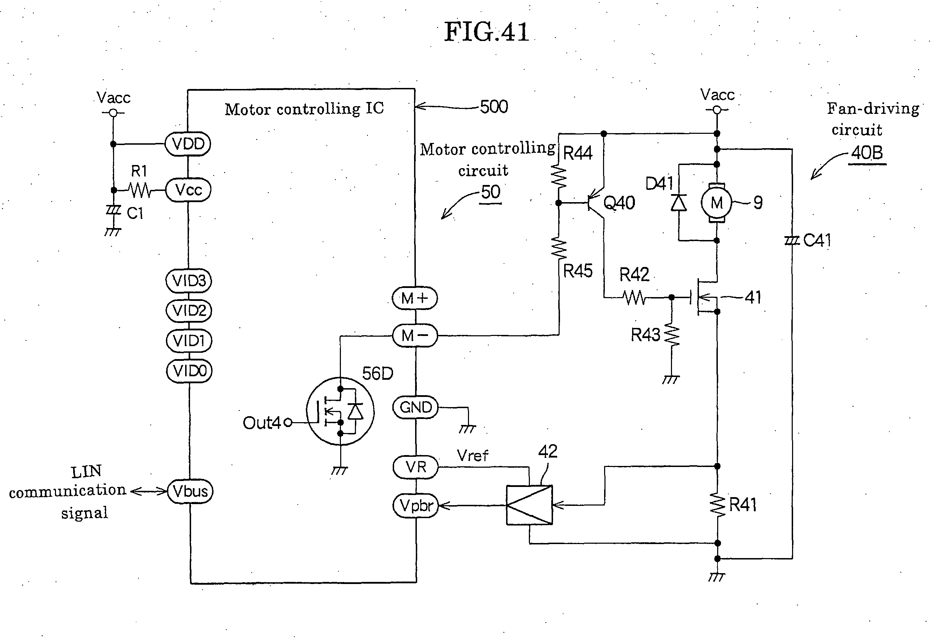

FIG. 41 is a diagram showing yet another circuitry of the fan-driving unit provided with the apparatus for controlling motor according to the third embodiment of the present invention. A fan-driving circuit 40B shown in FIG. 41 is configured to drive the MOSFET 41 through a PNP type transistor Q40. The H-bridge driving processing portion 67 included in the motor controlling IC 500 generates the PWM signal having the duty ratio set by the duty ratio-designating data or the motor-rotational speed-designating data or the command for increasing/reducing electric power to be supplied to motor, to drive the lower arm transistor 56D which is the other lower arm in the H-bridge circuit portion 56.

In this case of the circuitry shown in FIG. 41, the output terminal M- of the H-bridge circuit portion 56 is used to perform the switching of base current of the PNP type transistor Q40 via a base resistor R45, and collector current of the PNP type transistor Q40 is supplied to the gate of the MOSFET 41 through the gate resistor R42 to perform the switching of the MOSFET 41, thereby the fan-motor 9 is driven with the PWM control. Meanwhile, a reference sign R44 designates a resistor between an emitter and the base of the PNP type transistor Q40.

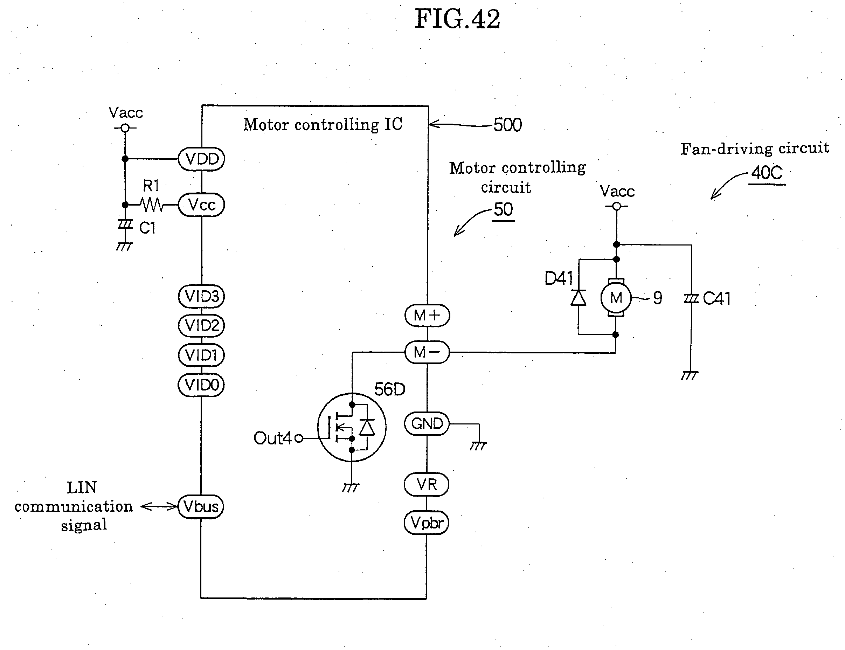

FIG. 42 is a diagram showing still another circuitry of the fan-driving unit provided with the apparatus for controlling motor according to the third embodiment of the present invention. A fan-driving circuit 40C shown in FIG. 42 is configured to drive the fan-motor 9 directly by the motor controlling IC 500. In a case where the transistor 56D included in the H-bridge circuit 56 has the performance to directly drive the fan-motor 9, it may be configured that the fan-motor 9 is directly driven via the output terminal M- of the H-bridge circuit portion 56 as shown in FIG. 42.

Since it is possible to detect the over-current of the fan-motor 9 by the over-current/over-temperature detecting circuit 58 included in the motor controlling IC 500 when the transistor 56D included in the H-bridge circuit 56 has the performance to directly drive the fan-motor 9, a circuit for detecting current does not have to be provided separately. In a case of detecting the over-current of the fan-motor 9 with the over-current/over-temperature detecting circuit 58 included in the motor controlling IC 500, it is desirable to change a threshold value for determination of the over-current or to change proportion of detection of the motor current when the motor-rotational speed control mode is set by the request for designating control mode Smode.

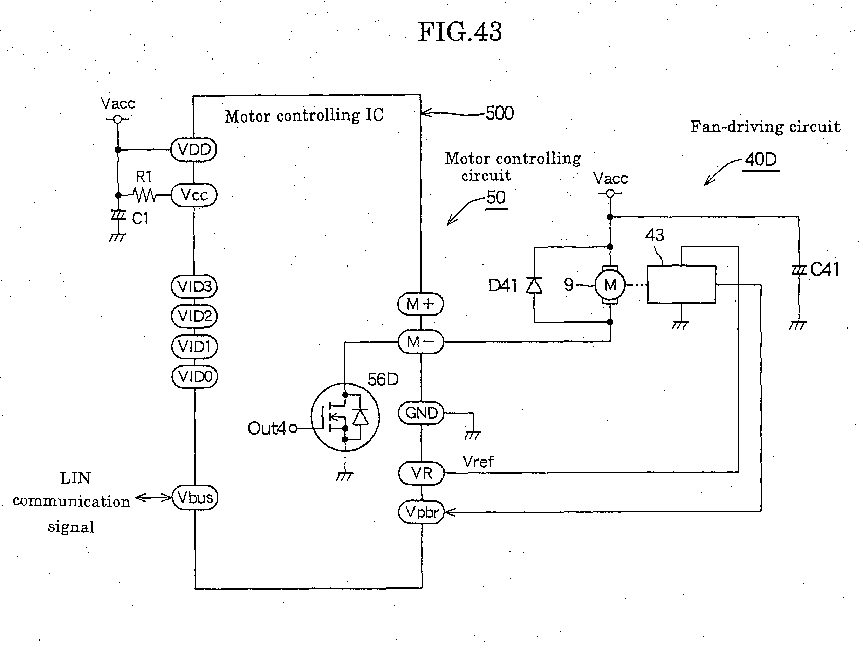

FIG. 43 is a diagram showing still another circuitry of the fan-driving unit provided with the apparatus for controlling motor according to the third embodiment of the present invention. A fan-driving circuit 40D shown in FIG. 43 is structured by providing to the fan-driving circuit 40C shown in FIG. 42 a rotational speed-detecting portion 43 (a motor rotational speed-detecting portion) for detecting rotational speed of the fan-motor 9 and outputting a voltage signal which complies with the detected rotational speed, and is adapted to supply an output of the rotational speed-detecting portion 43 to the input terminal Vpbr of the A/D converting portion 59 included in the motor controlling IC 500. When it is configured to be capable of detecting the rotational speed of the fan-motor 9, such a construction can be employed in which data of targeted-rotational speed (motor rotational speed-designating information) is supplied from the controller 100 to the fan-driving circuit 40D by using the data 1 field, and the fan-driving circuit 40D carries out feedback control such that the rotational speed of the fan-motor 9 which has been detected actually becomes as targeted rotational speed. Meanwhile, in the fan-driving circuit 40D shown in FIG. 43, the 5-volt stabilized power supply Vref supplied from the output terminal VR of the stabilized power supply Vref of the motor controlling IC 500 is utilised as power supply of the rotational speed-detecting portion 43.

As described in the foregoing, the apparatus for controlling motor according to the third embodiment of the present invention is capable of controlling the electric power supplied to the motor through the H-bridge circuit portion with the PWM control based on the duty-designating information supplied from the host device, thereby it is possible to control the rotational speed of the motor on the basis of the duty-designating information. Therefore, by reducing the electric power supplied to the motor to be lower than the rated electric power thereof when driving the small-sized motor, it is possible to reduce the number of rotation of the small-sized motor and to lower the frequency of the noise generated with the operation of the motor. Accordingly, it is possible to allow the frequency of the noise which the electric motor type actuator employing the small sized motor generates to substantially coincide with the frequency of the noise which other electric motor type actuator generates. As a result, it is possible to solve the problem of giving bad influence on auditory feeling or giving unpleasant feeling to a user by the difference in the frequency of the noise. Also, when a load driven by the electric motor type actuator is light, it is possible to attain power saving by reducing the electric power supplied to the motor. Furthermore, by reducing the electric power supplied to the motor, it is possible to lower the level of the noise which the electric motor type actuator generates.

As described in the foregoing, the apparatus for controlling motor according to the third embodiment of the present invention is capable of controlling the rotational direction of the motor and the activation and the stopping of the motor such that the position of the object to be controlled driven by the electric motor type actuator is located at the target position, when the actuator position-control mode is designated by the host device. In addition, the apparatus for controlling motor according to the third embodiment of the present invention is capable of controlling the rotational speed of the motor when the motor-rotational speed control mode is designated by the host device. Therefore, the apparatus for controlling motor according to the third embodiment of the present invention can be used for the use in, for example, the driving of various door actuators provided in the air conditioning device for the automobile as well as for the use in the driving of the fan-motor. Because one apparatus for controlling motor can be used for controlling both the actuator position control mode and the motor-rotational speed control mode, mutually, it is possible to standardize processing of communication control in, for example, the air conditioning device for the automobile.

## Claims

1. An apparatus for controlling motor to drive an electric motor type actuator (30A) having an electric motor (30), comprising:
a serial data communication portion (53 and 55);
a reception-processing portion (61) for receiving information which is addressed to its own address and supplied from a host device (100) via said serial data communication portion (53 and 55); and
means (56, 67 and 73) for changing electric power supplied to said electric motor (30) based on information for designating motor-operating condition included in the received information.

2. The apparatus for controlling motor according to claim 1, **characterized in that** said means for changing electric power supplied to motor (56, 67 and 73) includes an H-bridge driving processing portion (67).

3. The apparatus for controlling motor according to claim 1, **characterized in that** said means for changing electric power supplied to motor (56, 67 and 73) changes the electric power supplied to said electric motor (30) by PWM control.

4. The apparatus for controlling motor according to claim 3, **characterized in that** said means for changing electric power supplied to motor (56, 67 and 73) includes a correspondence table between said information for designating motor-operating condition and a duty ratio, and limits the electric power supplied to said electric motor (30) by setting the duty ratio corresponding to said information for designating motor-operating condition as an upper limit of the electric power supplied to said electric motor (30).

5. An apparatus for controlling motor, comprising:
a serial data communication portion (53 and 55);
a reception-processing portion (61) for receiving information which is addressed to its own address and supplied from a host device (100) via said serial data communication portion (63 and 55);
an A/D converting portion (59) for converting voltage corresponding to a present position of an object to be controlled supplied from a position detecting portion (31) into present position data having n-bit;
an electric motor type actuator (30A); and
an actuator driving controlling portion (55 and 56) for driving said electric motor type actuator (30A) based on a deviation between data on a target value having n-bit included in the received information and said present position data having the n-bit such that the position of said object to be controlled becomes a position of said target value,
**characterized in that**
said actuator driving controlling portion (55 and 56) is provided with means for controlling deceleration (67) which, when the deviation between said target value data having the n-bit and said present position data having the n-bit becomes less than a previously set judgment value of starting of deceleration control, drives said electric motor type actuator (30A) by PWM control with a duty ratio previously set corresponding to said deviation, and rotates and drives the electric motor type actuator (30A) in an ON-duty period within a PWM cycle, and applies a regeneration brake to said electric motor type actuator (30A) in an OFF-duty period within the PWM cycle.

6. The apparatus for controlling motor according to claim 5, **characterized in that** said electric motor type actuator (30A) is driven via a H-type bridge circuit (56), and is braked by shunting a coil of the electric motor type actuator (30A) via a semiconductor switching element structuring said bridge circuit (56).

7. The apparatus for controlling motor according to claim 5, **characterized in that** said duty ratio is set to become smaller as said deviation becomes smaller.

8. The apparatus for controlling motor according to claim 5, **characterized in that** the duty ratio previously set corresponding to said deviation is stored previously in a nonvolatile memory as a deviation to duty ratio-correspondence table.

9. The apparatus for controlling motor according to claim 8, **characterized in that** said nonvolatile memory is an electrically-rewritable memory.

10. The apparatus for controlling motor according to claim 5, **characterized in that** said actuator driving controlling portion (55 and 56) applies the regeneration brake to said electric motor type actuator (30A) in the OFF-duty period within said PWM cycle when information on request for brake-control is supplied via said reception-processing portion (61).

11. An apparatus for controlling motor, comprising:
an H-bridge circuit portion (56) which has a pair of motor-connecting terminals (M+ and M-) and which is structured by connecting four switching elements in a H-type bridge connection;
a serial data communication portion (63 and 55) for carrying out serial data communication with a host device (100);
a reception-processing portion (61) for receiving information which is addressed to its own address and supplied from the host device (100) via said serial data communication portion (53 and 55); and
an H-bridge driving processing portion (67) for generating a PWM signal having a duty ratio designated by duty-designating information included in the information received by said reception-processing portion (61) to drive each of the switching elements structuring said H-bridge circuit portion (56).

12. An apparatus for controlling motor, comprising:
an H-bridge circuit portion (56) which has a pair of motor-connecting terminals (M+ and M-) and which is structured by connecting four switching elements in a H-type bridge connection;
a serial data communication portion (53 and 55) for carrying out serial data communication with a host device (100);
a reception-processing portion (61) for receiving information which is addressed to its own address and supplied from the host device (100) via said serial data communication portion (53 and 55); and
an H-bridge driving processing portion (67) for setting a duty ratio based on motor rotational speed-designating information which is at least one bit included in the information received by said reception-processing portion (61), and generating a PWM signal having the set duty ratio to drive each of the switching elements structuring said H-bridge circuit portion (56).

13. An apparatus for controlling motor, comprising:
an H-bridge circuit portion (56) which has a pair of motor-connecting terminals (M+ and M-) and which is structured by connecting four switching elements in a H-type bridge connection;
a serial data communication portion (53 and 55) for carrying out serial data communication with a host device (100);
a reception-processing portion (61) for receiving information which is addressed to its own address and supplied from the host device (100) via said serial data communication portion (53 and 55); and
an H-bridge driving processing portion (67) for increasing or decreasing a duty ratio by only a value previously set based on a request for increasing electric power to be supplied to motor or a request for decreasing electric power to be supplied to motor included in the information received by said reception-processing portion (61) to set a new duty ratio, and for generating a PWM signal having the set duty ratio to drive each of the switching elements structuring said H-bridge circuit portion (56).

14. An apparatus for controlling motor, comprising:
an H-bridge circuit portion (56) which has a pair of motor-connecting terminals (M+ and M-) and which is structured by connecting four switching elements in a H-type bridge connection;
a serial data communication portion (53 and 55) for carrying out serial data communication with a host device (100);
a reception-processing portion (61) for receiving information which is addressed to its own address and supplied from the host device (100) via said serial data communication portion (53 and 55); and
an H-bridge driving processing portion (67) for comparing motor rotational speed-designating information included in the information received by said reception-processing portion (61) with a motor rotational speed signal supplied from a motor rotational speed-detecting portion (43) to set a duty ratio of a PWM signal, and for generating a PWM signal having the set duty ratio to drive each of the switching elements structuring said H-bridge circuit portion (56).

15. An apparatus for controlling motor, comprising:
an H-bridge circuit portion (56) which has a pair of motor-connecting terminals (M+ and M-) and which is structured by connecting four switching elements in a H-type bridge connection;
a serial data communication portion (53 and 55) for carrying out serial data communication with a host device (100);
a reception-processing portion (61) for receiving information which is addressed to its own address and supplied from the host device (100) via said serial data communication portion (53 and 55); and
an H-bridge driving processing portion (67) for comparing information for designating target position of object to be controlled included in the information received by said reception-processing portion (61) with information on present position of object to be controlled supplied from a position detecting portion of object to be controlled (31), to drive each of the switching elements structuring said H-bridge circuit portion (56) based on a result of the comparison, when an actuator position-control mode is designated on the basis of information on designating control mode included in the information received by said reception-processing portion (61), and for driving each of the switching elements structuring said H-bridge circuit portion (56) based on information on designation relating to rotational speed of motor included in the information received by said reception-processing portion (61), when a motor-rotational speed control mode is designated on the basis of the information on designating control mode included in the information received by said reception-processing portion (61).
